# EUROPEAN PATENT APPLICATION

(11) **EP 4 418 362 A1**
(43) Date of publication of application: **21.08.2024**
(21) Application number: 22882997.4
(22) Date of filing: 21.10.2022
(51) Int. Cl.: H01M 4/58

(54) **POSITIVE ELECTRODE ACTIVE MATERIAL, POSITIVE ELECTRODE SHEET, SECONDARY BATTERY, BATTERY MODULE, BATTERY PACK, AND ELECTRIC DEVICE**

(30) Priority: 22.10.2021 WO PCT/CN2021/125898; 12.11.2021 WO PCT/CN2021/130350; 22.12.2021 WO PCT/CN2021/140462
(71) Applicant: Contemporary Amperex Technology Co., Limited, Ningde, Fujian 352100 (CN)
(72) Inventor: JIANG, Yao, Ningde, Fujian 352100 (CN); OUYANG, Chuying, Ningde, Fujian 352100 (CN); ZHANG, Xinxin, Ningde, Fujian 352100 (CN); DENG, Bin, Ningde, Fujian 352100 (CN); WANG, Zhiqiang, Ningde, Fujian 352100 (CN); YUAN, Tianci, Ningde, Fujian 352100 (CN); XU, Bo, Ningde, Fujian 352100 (CN); CHEN, Shangdong, Ningde, Fujian 352100 (CN)
(74) Representative: Jacob, Reuben Ellis
(86) International application number: PCT/CN2022/126829
(87) International publication number: WO 2023/066393

(57) **Abstract**

Proposed are a positive electrode active material, a positive electrode plate, a secondary battery, a battery module, a battery pack and a power consuming device. The positive electrode active material has LiMPO₄, wherein M includes Mn and a non-Mn element, and the non-Mn element satisfies at least one of the following conditions: the ionic radius of the non-Mn element being denoted as a, and the ionic radius of manganese element being denoted as b, |a-b|/b is not greater than 10%; the valence alternation voltage of the non-Mn element being denoted as U, 2 V < U < 5.5 V; the chemical activity of a chemical bond formed by the non-Mn element and O is not less than that of a P-O bond; and the highest valence of the non-Mn element is not greater than 6.

## Description

### Technical Field

The present application relates to the technical field of lithium batteries, and in particular to a positive electrode active material as well as a positive electrode plate, a secondary battery, a battery module, a battery pack and a power consuming device comprising same.

### Background Art

In recent years, with the development of the lithium ion secondary battery technology, the lithium ion secondary batteries are widely used in energy storage power systems such as hydroelectric, thermal, wind and solar power plants, as well as electric tools, electric bicycles, electric motorcycles, electric vehicles, military equipment, aerospace and other fields. Due to the great development of the lithium ion secondary batteries, higher requirements have also been placed on the lithium ion secondary batteries in terms of energy density, cycling performance, safety performance, etc. As a positive electrode active material for a lithium ion secondary battery, lithium manganese phosphate has the advantages of a high capacity, good safety and low costs.

However, some performance of secondary batteries using lithium manganese phosphate positive electrode active materials in the prior art still needs to be improved, which greatly limits the wider application of lithium manganese phosphate batteries.

### Summary

The present application has been made in view of the above-mentioned problems, and an objective thereof is to provide such a lithium manganese phosphate positive electrode active material that the secondary battery using same has a higher capacity per gram, and good cycling performance and safety performance.

In order to achieve the above objective, the present application provides a lithium manganese phosphate positive electrode active material and a preparation method therefor, as well as related a secondary battery, a battery module, a battery pack and a power consuming device. In order to achieve the above objective, a first aspect of the present application provides a positive electrode active material having a chemical formula of LiₐAₓMn_{1-y}B_{y}P_{1-z}C_{z}O₄₋ₙDₙ, wherein A includes one or more elements selected from Zn, Al, Na, K, Mg, Nb, Mo and W, B includes one or more elements selected from Ti, V, Zr, Fe, Ni, Mg, Co, Ga, Sn, Sb, Nb and Ge, C includes one or more elements selected from B (boron), S, Si and N, D includes one or more elements selected from S, F, Cl and Br, a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1; and the positive electrode active material is electrically neutral.

Therefore, in the present application, by doping a compound LiMnPO₄ at Li, Mn, P and O sites with specific amounts of specific elements, a markedly improved rate performance can be obtained while the dissolution of Mn and Mn-site doping element is significantly reduced, thereby obtaining significantly improved cycling performance and/or high-temperature stability; and the capacity per gram and compacted density of the material can also be enhanced.

A second aspect of the present application provides a positive electrode active material having a core-shell structure, comprising an inner core and a shell coating the inner core, wherein the inner core has a chemical formula of Li₁₊ₓMn_{1-y}A_{y}P_{1-z}R_{z}O₄, where x is any numerical value in a range of -0.100-0.100, y is any numerical value in a range of 0.001-0.500, z is any numerical value in a range of 0.001-0.100, A is selected from one or more elements of Zn, Al, Na, K, Mg, Mo, W, Ti, V, Zr, Fe, Ni, Co, Ga, Sn, Sb, Nb, and Ge, optionally one or more elements of Fe, Ti, V, Ni, Co, and Mg, and R is selected from one or more elements of B, Si, N, and S, and optionally, R is selected from an element of B, Si, N, and S; the values of x, y, and z satisfy the condition of keeping the entire inner core electrically neutral; and the shell comprises a first coating layer coating the inner core, a second coating layer coating the first coating layer, and a third coating layer coating the second coating layer, wherein the first coating layer comprises a crystalline pyrophosphate of LiₐMP₂O₇ and/or M_{b}(P₂O₇)_{c}, where 0 ::::; a ::::; 2, 1 ::::; b ::::; 4, 1 ::::; c ≤ 6, the values of a, b, and c satisfy the condition of keeping the crystalline pyrophosphate of LiₐMP₂O₇ or M_{b}(P₂O₇)_{c} electrically neutral, and M in the crystalline pyrophosphates of LiₐMP₂O₇ and M_{b}(P₂O₇)_{c} is each independently selected from one or more elements of Fe, Ni, Mg, Co, Cu, Zn, Ti, Ag, Zr, Nb, or Al; the second coating layer comprises a crystalline phosphate of XPO4, where X is selected from one or more elements of Li, Fe, Ni, Mg, Co, Cu, Zn, Ti, Ag, Zr, Nb or Al; and the third coating layer is carbon.

Herein, the crystalline state means that the crystallinity is 50% or more, that is, 50% - 100%. A crystalline state with a crystallinity of less than 50% is referred to as a glassy state. The crystallinity of the crystalline pyrophosphate and crystalline phosphate of the present application is 50% to 100%. The pyrophosphate and phosphate with a certain crystallinity enable not only the full achievement of the ability of the pyrophosphate coating layer to prevent the dissolution of manganese and the excellent ability of the phosphate coating layer to conduct lithium ions, as well as the reduction of the interface side reactions, but also the better lattice matching between the phosphate coating layer and the phosphate coating layer, such that a close combination between the coating layers can be achieved. The present application, by doping lithium manganese phosphate with the A element at the manganese site and the R element at the phosphorus site to obtain a doped lithium manganese phosphate inner core and sequentially coating the surface of the inner core with three layers, provides a novel lithium manganese phosphate positive electrode active material having a core-shell structure, and the application of the positive electrode active material to a secondary battery can significantly improve the high-temperature cycling performance, cycling stability and high-temperature storage performance of the secondary battery.

A third aspect of the present application provides a positive electrode active material having a core-shell structure, comprising an inner core and a shell coating the inner core, wherein the inner core comprises Li₁₊ₓMn_{1-y}A_{y}P_{1-z}R_{z}O₄, where x = -0.100-0.100, y = 0.001-0.500, z = 0.001-0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S; and the shell comprises a first coating layer coating the inner core and a second coating layer coating the first coating layer, wherein the first coating layer comprises a pyrophosphate of MP₂O₇ and a phosphate of XPO₄, where M and X are each independently selected from one or more of Li, Fe, Ni, Mg, Co, Cu, Zn, Ti, Ag, Zr, Nb or Al; and the second coating layer comprises carbon.

Thus, the positive electrode active material of the present application can improve the capacity per gram, cycling performance and safety performance of the secondary battery. Although the mechanism remains unclear, it is speculated that the lithium manganese phosphate positive electrode active material of the present application has a core-shell structure, wherein doping the lithium manganese phosphate inner core with A element and R element at the manganese and phosphorus sites can not only effectively reduce the dissolution of manganese to thereby reduce the migration of manganese ions to the negative electrode, reduce the consumption of the electrolyte solution due to the decomposition of the SEI film, and improve the cycling performance and safety performance of the secondary battery, but can also promote the adjustment of Mn-O bonds to reduce the migration barrier of lithium ions, facilitating the migration of lithium ions, and improve the rate performance of the secondary battery. Coating the inner core with a first coating layer including pyrophosphate and phosphate can further increase the migration resistance of manganese, and reduce the dissolution thereof, the content of lithium impurity on the surface, and the contact between the inner core and the electrolyte solution, thereby reducing the interface side reactions, reducing gas production, improving the high-temperature storage performance, cycling performance and safety performance of secondary batteries. By further coating the carbon-containing layer as the second coating layer, the safety performance and dynamic performance of the secondary battery can be further improved.

In a fourth aspect of the present application, provided is a positive electrode active material having LiMPO₄, wherein M includes Mn and a non-Mn element, and the non-Mn element satisfies at least one of the following conditions: the ionic radius of the non-Mn element being denoted as a, and the ionic radius of manganese element being denoted as b, |a-b|/b is not greater than 10%; the valence alternation voltage of the non-Mn element being denoted as U, 2 V < U < 5.5 V; the chemical activity of a chemical bond formed by the non-Mn element and O is not less than that of a P-O bond; and the highest valence of the non-Mn element is not greater than 6. The present application can achieve at least one of the following effects through the scheme of doping a non-Mn element mentioned above:
1) the lattice change rate of the material is reduced, such that the difference of lattice constants between two phases at a grain boundary and the interface stress are decreased, and the Li+ transport ability at the interface is enhanced, thereby improving the rate performance of the positive electrode active material;
2) the capacity performance of the material is promoted, thereby increasing the capacity of a battery;
3) the change rate of the bond length becomes larger, which decreases the small-polaron migration barrier of the material, thereby increasing the electronic conductivity;
4) the activity of the surface oxygen is reduced, which inhibits the dissolution of Mn and reduces the interfacial side reaction between the positive electrode active material and the electrolyte solution;
5) the antisite defect concentration in the material is reduced, which improves the dynamic performance and capacity per gram of the material; and
6) the particle morphology is changed, such that the compacted density is increased.

The present application can achieve at least one of the following beneficial effects by adjusting and controlling the doping site of the non-Mn element, and the type and content of the element: increasing the electrical conductivity and capacity of the material, and addressing or even overcoming the disadvantages of poor stability and cycling performance of the material to a certain extent. Specifically, doping a non-Mn element at least one of the Mn site and the P site, in particular the Mn site, can reduce the lattice change rate of the positive electrode active material, improve the interfacial properties, reduce the interfacial side reaction with the electrolyte solution, and increase the capacity. Doping the Li site and the O site with a non-Mn element can assist in improving the properties of the positive electrode active material. For example, it also can reduce the lattice change rate, the interfacial side reaction between the electrolyte solution and the positive electrode active material and the antisite defect concentration, and increase the resistance to acidic corrosion by the electrolyte solution, which in turn can assist in improving the dynamic performance and capacity per gram of the material; and moreover, adjusting and controlling the above non-Mn element can further change the particle morphology, thereby increasing the compacted density. In general, the positive electrode active material has a significantly improved cycling performance and/or high-temperature stability, and a higher capacity per gram and compacted density, relative to materials such as lithium manganese phosphate that can be applied in a high-voltage system in the related art.

In any embodiment, the non-Mn element comprises one or two of a first doping element and a second doping element, the first doping element is doped at the manganese site, and the second doping element is doped at the phosphorus site. The first and second doping elements can not only effectively reduce the dissolution of manganese, which in turn reduces the migration of manganese ions to the negative electrode and the consumption of electrolyte solution due to the SEI film decomposition, thereby improving the cycling performance and safety performance of secondary batteries, but also can facilitate the adjustment of the Mn-O bond, lower the migration barrier of lithium ions and accelerate the migration of lithium ions, thereby improving the rate performance of secondary batteries.

In any embodiment, the first doping element satisfies at least one of the following conditions: the ionic radius of the first doping element being denoted as a, and the ionic radius of manganese element being denoted as b, |a-b|/b is not greater than 10%; and the valence alternation voltage of the first doping element being denoted as U, 2 V < U < 5.5 V. Thus, the lattice change rate of the positive electrode active material can be further reduced, and the surface activity of the material is lowered, thereby inhibiting the dissolution of Mn and the interfacial side reaction between the positive electrode material and the electrolyte solution.

In any embodiment, the second doping element satisfies at least one of the following conditions: the chemical activity of a chemical bond formed by the second doping element and O is not less than that of a P-O bond; and the highest valence of the second doping element is not greater than 6. Thus, the change rate of the Mn-O bond can be increased and the small-polaron migration barrier of the positive electrode active material can be reduced, thereby improving the electronic conductivity. Therefore, the doping of the second element can also reduce the antisite defect concentration in the material and improve the dynamic performance and capacity per gram of the material, and also can change the particle morphology of the material, thereby increasing the compacted density of the material.

In any embodiment, the positive electrode active material contains at least two first doping elements.

In any embodiment, the first doping element includes one or more elements selected from Zn, Al, Na, K, Mg, Mo, W, Ti, V, Zr, Fe, Ni, Co, Ga, Sn, Sb, Nb and Ge.

In any embodiment, the first doping element includes at least two selected from Fe, Ti, V, Ni, Co, and Mg. Thus, the doping of the manganese site with two or more metals in the above range is beneficial for enhancing the doping effect, such that the surface oxygen activity is further reduced, thereby inhibiting the dissolution of manganese. In addition, doping with multiple elements can increase the synergistic effect between elements, which can, for example, not only increase the capacity of a battery, but also reduce the lattice change rate of the material, thereby enhancing the dynamic performance of the battery. Preferably, the first doping element includes an Fe element and a trivalent element, and the molar ratio of the trivalent element in the positive electrode active material is 0.001-0.05.

In any embodiment, the second doping element includes one or more elements selected from B (boron), S, Si and N.

In any embodiment, the positive electrode active material comprises Li₁₊ₓMn_{1-y}A_{y}P_{1-z}R_{z}O₄, where x is any numerical value in a range of -0.100-0.100, y is any numerical value in a range of 0.001-0.500, z is any numerical value in a range of 0.001-0.100, A includes one or more elements selected from Zn, Al, Na, K, Mg, Mo, W, Ti, V, Zr, Fe, Ni, Co, Ga, Sn, Sb, Nb, and Ge, and R includes one or more elements selected from B (boron), S, Si and N. The selection of the A element doped at the manganese site from the above elements also facilitates reducing the lattice change rate of the lithium manganese phosphate during the process of lithium intercalation and de-intercalation, and improves the structural stability of the lithium manganese phosphate positive electrode material, greatly reducing the dissolution of manganese and reducing the oxygen activity on the particle surface; and The selection of the R element doped at the phosphorus site from the above elements is also beneficial to change the difficulty of the change of the Mn-O bond length, thereby improving the electronic conductivity and reducing the migration barrier of lithium ions, accelerating the migration of lithium ions, and improving the rate performance of a secondary battery. If the value of x is too small, the lithium content of the entire inner core system will decrease, which will affect the capacity per gram of the material. The value of y will limit the total amount of all doping elements. If y is too small, that is, the doping amount is too small, and the doping elements will have no effect. If y exceeds 0.5, the content of Mn in the system will be less, which will affect the voltage plateau of the material. The element R is doped at the position of P, and since the P-O tetrahedron is relatively stable, an excessive z value will affect the stability of the material. Therefore, when x, y, and z are selected from the ranges above, the positive electrode active material can have better performance.

In any embodiment, the positive electrode active material comprises Li₁₊ₓCₘMn_{1-y}A_{y}P_{1-z}R_{z}C₄₋ₙDₙ, wherein C includes one or more elements selected from Zn, Al, Na, K, Mg, Nb, Mo and W, A includes one or more elements selected from Zn, Al, Na, K, Mg, Mo, W, Ti, V, Zr, Fe, Ni, Mg, Co, Ga, Sn, Sb, Nb and Ge, R includes one or more elements selected from B (boron), S, Si and N, D includes one or more elements selected from S, F, Cl and Br, x is any numerical value in a range of -0.100-0.100, y is any numerical value in a range of 0.001-0.500, z is any numerical value in a range of 0.001-0.100, n is any numerical value in a range of 0.001 to 0.1, and m is any numerical value in a range of 0.9 to 1.1. Doping the compound at all the Li, Mn, P and O sites thereof with specific amounts of specific elements can significantly improve the rate performance while significantly reducing the dissolution of Mn and Mn-site doping element, thereby significantly improving the cycling performance and/or high-temperature stability; moreover, the capacity per gram and compacted density of the material can also be increased.

In any embodiment, the ratio of y to 1-y is 1 : 10 to 1 : 1, optionally 1 : 4 to 1 : 1. Thus, the energy density and cycling performance of the positive electrode active material can be further improved.

In any embodiment, (1+x) : m is in a range of 9 to 1100, optionally in a range of 190-998. Thus, the energy density and cycling performance of the positive electrode active material can be further improved.

In any embodiment, the ratio of z to 1-z is 1 : 9 to 1 : 999, optionally 1 : 499 to 1 : 249. Thus, the cycling performance and rate performance of the secondary battery using the positive electrode active material can be further improved.

In any embodiment, C, R and D are each independently any element within the respective ranges above, and A is at least two elements within the range thereof; Optionally, C is selected from any element of Mg and Nb, and/or A is at least two elements selected from Fe, Ti, V, Co and Mg, and optionally is Fe and one or more elements selected from Ti, V, Co and Mg, and/or R is S, and/or D is F. Thus, the rate performance, capacity per gram and/or high-temperature performance of the secondary battery can be further improved.

In any embodiment, x is selected from a range of 0.001 to 0.005; and/or, y is selected from a range of 0.01 to 0.5, and optionally from a range of 0.25 to 0.5; and/or, z is selected from a range of 0.001 to 0.005; and/or, n is selected from a range of 0.001 to 0.005. Thus, the capacity per gram and rate performance and/or dynamic performance of the material can be further improved, and/or the rate performance and/or high-temperature performance of the battery is further improved.

In any embodiment, the lattice change rate of the positive electrode active material is 8% or less, optionally 4% or less, optionally 3.8% or less, more optionally 2.0-3.8%. Thus, the capacity per gram and rate performance of a cell can be improved.

In any embodiment, the Li/Mn antisite defect concentration of the positive electrode active material is 4% or less, optionally 2.2% or less, more optionally 1.5-2.2%, more optionally 2% or less, more optionally 0.5% or less. The Li/Mn antisite defect concentration within the above range can avoid the prevention of transport of Li⁺ by Mn²⁺, while increasing the capacity per gram and rate performance of the positive electrode active material.

In any embodiment, the surface oxygen valency of the positive electrode active material is - 1.89 to -1.98, optionally -1.90 to -1.98, more optionally -1.90 or less, more optionally -1.82 or less. Thus, the surface energy of the highly active surfaces can be increased, which reduces the proportion of the highly active surfaces. Moreover, the interfacial side reactions between the positive electrode material and an electrolyte solution can be alleviated, such that the cycling performance, gas production during high-temperature storage, etc., of a cell are improved, which in turn can improve the cycling performance and high-temperature stability of the cell.

In any embodiment, the positive electrode active material has a compacted density under 3T of 2.0 g/cm³ or more, optionally 2.2 g/cm³ or more, optionally 2.2 g/cm³ or more and 2.8 g/cm³ or less. Thus, the volumetric energy density of the cell can be improved.

In any embodiment, the positive electrode active material has a core-shell structure including an inner core and a shell coating the inner core, wherein the inner core has the LiMPO₄.

In any embodiment, the coating layer comprises carbon. Thus, the electrical conductivity of the positive electrode active material can be improved.

In any embodiment, the carbon in the coating layer is a mixture of SP2-form carbon and SP3-form carbon, and optionally, the molar ratio of the SP2-form carbon to the SP3-form carbon is any numerical value within a range of 0.1-10, optionally any numerical value within a range of 2. 0-3.0. In the present application, the overall performance of the secondary battery is improved by limiting the molar ratio of the SP2-form carbon to the SP3-form carbon within the above ranges. The following situations can be avoided by using a mixed form of SP2-form carbon and SP3-form carbon and limiting the ratio of SP2-form carbon to SP3-form carbon within a certain range: if the carbon in the coating layer is in the form of amorphous SP3 only, the electrical conductivity is poor; and if all the carbon is in a graphitized SP2-form, although the electrical conductivity is good, there are few lithium ion paths, which is not conducive to lithium intercalation and de-intercalation. In addition, limiting the molar ratio of SP2-form carbon to SP3-form carbon within the above ranges can not only achieve good electrical conductivity, but also can ensure the paths of lithium ions, which is beneficial to the realization of the function of the secondary battery and the cycling performance thereof.

In any embodiment, the shell comprises an inorganic coating layer and a carbon coating layer, with the inorganic coating layer being provided to be close to the inner core.

In any embodiment, the inorganic coating layer contains at least one of a phosphate and a pyrophosphate.

In any embodiment, the shell comprises a first coating layer coating the inner core and a second coating layer coating the first coating layer, wherein the first coating layer comprises a pyrophosphate of QP₂O₇ and a phosphate of XPO₄, where Q and X are each independently selected from one or more of Li, Fe, Ni, Mg, Co, Cu, Zn, Ti, Ag, Zr, Nb or Al; and the second coating layer comprises carbon.

In any embodiment, Q includes Li and one or more selected from Fe, Ni, Mg, Co, Cu, Zn, Ti, Ag, Zr, Nb or Al.

In any embodiment, the phosphate of the first coating layer has an interplanar spacing of 0.345-0.358 nm, and an included angle of crystal orientation (111) of 24.25° - 26.45°; and the pyrophosphate of the first coating layer has an interplanar spacing of 0.293-0.326 nm and an included angle of crystal orientation (111) of 26.41° - 32.57°. The crystalline substances having an interplanar spacing and included angle within the ranges above are used in both the first coating layer and the second coating layer, which effectively avoids the impurity phase in the coating layers, thereby improving the capacity per gram, cycling performance and rate performance of the material.

In any embodiment, the coating amount of the first coating layer is greater than 0 wt% and less than or equal to 7 wt%, optionally 4-5.6 wt%, based on the weight of the inner core. When the coating amount of the first coating layer is within the above range, the function of the first coating layer may be effectively achieved without affecting the dynamic performance of the secondary battery due to the excessively thick coating layer.

In any embodiment, the weight ratio of the pyrophosphate to phosphate in the first coating layer is 1 : 3 to 3 : 1, optionally 1 : 3 to 1 : 1. Thus, the weight ratio of the pyrophosphate to phosphate within a suitable range can not only effectively prevent the dissolution of manganese, but also can effectively reduce the content of lithium impurities on the surface and reduce interfacial side reactions, thereby improving the high-temperature storage performance, safety performance and cycling performance of the secondary battery.

In any embodiment, the pyrophosphate and the phosphate each independently have a crystallinity of 10% to 100%, optionally 50% to 100%. Thus, the pyrophosphate and phosphate with a crystallinity being within the above ranges are beneficial to the full function of the pyrophosphate to inhibit the dissolution of manganese and the function of the phosphate to reduce the content of lithium impurities on the surface and reduce interfacial side reactions. The pyrophosphate and phosphate with a certain crystallinity enable not only the full achievement of the ability of the pyrophosphate coating layer to prevent the dissolution of manganese and the excellent ability of the phosphate coating layer to conduct lithium ions, as well as the reduction of the interfacial side reactions, but also a better lattice matching between the phosphate coating layer and the phosphate coating layer, such that a more close combination between the coating layers can be achieved.

In any embodiment, the coating amount of the second coating layer is greater than 0 wt% and less than or equal to 6 wt%, optionally 3-5 wt%, based on the weight of the inner core. Thus, the presence of the second coating layer can effectively reduce the contact between the active material in the coating layer and the electrolyte solution, reduce the corrosion of the active material caused by the electrolyte solution, and improve the electrical conductivity of the positive electrode active material. When the coating amount of the second layer is within the above range, the capacity per gram of the positive electrode active material may be effectively increased.

In any embodiment, the positive electrode active material comprises a first coating layer coating the inner core, a second coating layer coating the first coating layer, and a third coating layer coating the second coating layer, wherein the first coating layer comprises a crystalline pyrophosphate of LiₐQP₂O₇ and/or Q_{b}(P₂O₇)_{c}, where 0 ::::; a ::::; 2, 1 ::::; b ::::; 4, 1 ≤ c ::::; 6, the values of a, b, and c satisfy the condition of keeping the crystalline pyrophosphate of LiₐQP₂O₇ or Q_{b}(P₂O₇)_{c} electrically neutral, and Q in the crystalline pyrophosphates of LiₐQP₂O₇ and Q_{b}(P₂O₇)_{c} is each independently selected from one or more elements of Fe, Ni, Mg, Co, Cu, Zn, Ti, Ag, Zr, Nb, or Al; the second coating layer comprises crystalline phosphate XPO₄ in which X is one or more elements selected from Li, Fe, Ni, Mg, Co, Cu, Zn, Ti, Ag, Zr, Nb, or Al; and the third coating layer is carbon.

In any embodiment, the crystalline pyrophosphate in the first coating layer has an interplanar spacing in a range of 0.293-0.470 nm and an included angle of crystal orientation (111) in a range of 18.00° - 32.00°; and the crystalline phosphate in the second coating layer has an interplanar spacing in a range of 0.244-0.425 nm and an included angle of crystal orientation (111) in a range of 20.00° - 37.00°.

In any embodiment, the coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or the coating amount of the second coating layer is greater than 0 and less than or equal to 6 wt%, optionally greater than 0 and less than or equal to 5.5 wt%, more optionally 2-4 wt%, based on the weight of the inner core; and/or the coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core. In the positive electrode active material having a core-shell structure of the present application, the coating amounts of the three coating layers are preferably within the above ranges, which thus can enable the full coating of the inner core, while further improving the dynamic performance and safety performance of a secondary battery without sacrificing the capacity per gram of the positive electrode active material.

In any embodiment, the first coating layer has a thickness of 1-10 nm; and/or the second coating layer has a thickness of 2-15 nm; and/or the third coating layer has a thickness of 2-25 nm. In the present application, when the thickness of the first coating layer is in a range of 1-10 nm, adverse effects on the dynamic performance of the material that may occur when it is too thick can be avoided, and the problem that the migration of transition metal ions cannot be effectively hindered when it is too thin can be avoided. When the thickness of the second coating layer is in a range of 2-15 nm, the surface structure of the second coating layer is stable, and there will be less side reaction with the electrolyte solution, so that the interfacial side reaction can be effectively reduced, thereby improving the high-temperature performance of the secondary battery. When the thickness of the third coating layer is in a range of 2-20 nm, the electrical conductivity of the material can be improved and the compacted density performance of the battery electrode plate prepared by using the positive electrode active material can be improved.

In any embodiment, based on the weight of the positive electrode active material, the content of manganese element is in a range of 10 wt% - 35 wt%, optionally in a range of 15 wt% - 30 wt%, more optionally in a range of 17 wt% - 20 wt%, the content of phosphorus element is in a range of 12 wt % - 25 wt %, optionally in a range of 15 wt % - 20 wt %, and the weight ratio of manganese element to phosphorus element is in a range of 0.90-1.25, optionally 0.95-1.20.

In the positive electrode active material having a core-shell structure of the present application, the content of manganese element is within the above ranges, which can effectively avoid problems such as poor structural stability and density decrease that may be caused if the content of the manganese element is too large, thereby improving the performance of the secondary battery, such as cycling performance, storage performance and compacted density; moreover, the problems such as low voltage plateau that may be caused if the content of the manganese element is too low can be effectively avoided, thereby improving the energy density of the secondary battery.

In the positive electrode active material having a core-shell structure of the present application, the content of phosphorus element is within the above ranges, which can effectively avoid the following situations: if the content of the phosphorus element is too high, the covalency of P-O may be too strong so as to affect the conduction of small polarons, thereby affecting the electrical conductivity of the material; and if the content of the element phosphorus is too small, the stability of the inner core and the lattice structure of the pyrophosphate in the first coating layer and/or the phosphate in the second coating layer may decrease, thereby affecting the overall stability of the material.

In the positive electrode active material having a core-shell structure of the present application, the weight ratio of the element manganese to the element phosphorus is within the above range, which can effectively avoid the following situations: if the weight ratio is too high, an increase in the dissolution of transition metals may be caused, thereby affecting the stability of the material and the cycling performance and storage performance of the secondary battery; and if the weight ratio is too low, the discharge voltage platform of the material may be decreased, thereby reducing the energy density of the secondary battery. In a fifth aspect of the present application, the present application proposes a method for preparing a positive electrode active material, the method comprising forming a compound of LiMPO₄, wherein M includes Mn and a non-Mn element, and the non-Mn element satisfies at least one of the following conditions: the ionic radius of the non-Mn element being denoted as a, and the ionic radius of manganese element being denoted as b, |a-b|/b is not greater than 10%; the valence alternation voltage of the non-Mn element being denoted as U, 2 V < U < 5.5 V; the chemical activity of a chemical bond formed by the non-Mn element and O is not less than that of a P-O bond; and the highest valence of the non-Mn element is not greater than 6.

The present application further provides a method for preparing the above positive electrode active material having a chemical formula of LiₐAₓMn_{1-y}B_{y}P_{1-z}C_{z}O₄₋ₙDₙ of the present application, the method comprising the following steps:
(1) a manganese source, a source of a B element and an acid are dissolved and stirred in a solvent to generate a suspension of a B element-doped manganese salt, the suspension is filtered, and the resultant filter cake is dried, to obtain the B element-doped manganese salt;
(2) a lithium source, a phosphorus source, a source of an A element, a source of a C element and a source of a D element, a solvent and the B element-doped manganese salt obtained in step (1) are added into a reaction container, and ground and mixed to obtain a slurry;
(3) the slurry obtained in step (2) is transferred into a spray drying apparatus for spray-drying granulation, to obtain particles; and
(4) sintering the particles obtained in step (3) to obtain a positive electrode active material. In any embodiment, a source of the A element is selected from at least one of the elementary substance, oxide, phosphate, oxalate, carbonate and sulfate of the A element, a source of the B element is selected from at least one of the elementary substance, oxide, phosphate, oxalate, carbonate and sulfate of the B element, a source of the C element is selected from at least one of the sulfate, borate, nitrate and silicate of the C element, and a source of D element is selected from at least one of the elementary substance and ammonium salt of the D element.

Thus, the properties of the material can be improved by selecting the source of the doping elements within the above ranges.

The present application further provides a method for preparing a positive electrode active material, the method comprising
a step of providing an inner core material, wherein: the inner core comprises Li₁₊ₓMn_{1-y}A_{y}P_{1-z}R_{z}O₄, where x = -0.100-0.100, y = 0.001-0.500, z = 0.001-0.100, A is selected from one or more of Zn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S;
a coating step, involving: provide an MP₂O₇ powder and an XPO₄ suspension containing a carbon source, adding the inner core material and the MP₂O₇ powder into the XPO₄ suspension containing a carbon source, and mixing and sintering same to obtain the positive electrode active material, wherein M and X are each independently selected from one or more of Li, Fe, Ni, Mg, Co, Cu, Zn, Ti, Ag, Zr, Nb or Al;
wherein the positive electrode active material has a core-shell structure including an inner core and a shell coating the inner core; the shell comprises a first coating layer coating the inner core and a second coating layer coating the first coating layer; and the first coating layer comprises a pyrophosphate of MP₂O₇ and a phosphate of XPO₄, and the second coating comprises carbon.

In any embodiment, the non-Mn element includes one or two of a first doping element and a second doping element, the first doping element is doped at the manganese site, the second doping element is doped at the phosphorus site, and the first doping element satisfies at least one of the following conditions: the ionic radius of the doping M element being denoted as a, and the ionic radius of manganese element being denoted as b, |a-b|/b is not greater than 10%; and the valence conversion voltage of the doping element M being denoted as U, 2 V < U < 5.5 V; and the second doping element satisfies at least one of the following conditions: the chemical activity of a chemical bond formed by the non-Mn element and O is not less than that of a P-O bond; and the highest valence of the doping M element is not greater than 6.

In any embodiment, when the non-Mn element includes a first doping element and a second doping element, the method comprises: mixing a manganese source, a dopant of the manganese-site element and an acid to obtain manganese salt particles having the first doping element; and mixing the manganese salt particles having the first doping element with a lithium source, a phosphorus source, and a dopant of the second doping element in a solvent to obtain a slurry, and sintering same under the protection of an inert gas atmosphere to obtain the LiMPO₄ compound.

In any embodiment, the first doping element includes one or more elements selected from Zn, Al, Na, K, Mg, Mo, W, Ti, V, Zr, Fe, Ni, Co, Ga, Sn, Sb, Nb and Ge, and the second doping element includes one or more elements selected from B (boron), S, Si and N.

In any embodiment, the compound of LiMPO₄ is formed according to a chemical formula of Li₁₊ₓMn_{1-y}A_{y}P_{1-z}R_{z}O₄, where x is any numerical value in a range of -0. 100-0. 100, y is any numerical value in a range of 0.001-0.500, z is any numerical value in a range of 0.001-0.100, A includes one or more elements selected from Zn, Al, Na, K, Mg, Mo, W, Ti, V, Zr, Fe, Ni, Co, Ga, Sn, Sb, Nb, and Ge, and R includes one or more elements selected from B (boron), S, Si and N.

In any embodiment, the compound of LiMPO₄ is formed according to a chemical formula of Li₁₊ₓCₘMn_{1-y}A_{y}P_{1-z}R_{z}O₄₋ₙDₙ, where C includes one or more elements selected from Zn, Al, Na, K, Mg, Nb, Mo and W, A includes one or more elements selected from Zn, Al, Na, K, Mg, Mo, W, Ti, V, Zr, Fe, Ni, Mg, Co, Ga, Sn, Sb, Nb and Ge, R includes one or more elements selected from B (boron), S, Si and N, D includes one or more elements selected from S, F, Cl and Br, x is any numerical value in a range of -0.100-0.100, y is any numerical value in a range of 0.001-0.500, z is any numerical value in a range of 0.001-0.100, n is any numerical value in a range of 0.001 to 0.1, and m is any numerical value in a range of 0.9 to 1.1.

In any embodiment, a source of the C element is selected from at least one of the elementary substance, oxide, phosphate, oxalate, carbonate and sulfate of the C element; a source of the A element is selected from at least one of the elementary substance, oxide, phosphate, oxalate, carbonate, sulfate, chloride, nitrate, organic acid salt, hydroxide and halide of the A element; a source of the R element is selected from at least one of the sulfate, borate, nitrate and silicate, organic acid, halide, organic acid salt, oxide and hydroxide of the R element; and a source of the D element is selected from at least one of the elementary substance and ammonium salt of the D element.

In any embodiment, the manganese salt particles having a first doping element is obtained when at least one of the following conditions is satisfied: the manganese source, the manganese-site element and the acid are mixed at a temperature of 20-120°C, optionally 40-120°C, optionally 60-120°C, more optionally 25-80°C; and/or the mixing is carried out under stirring at 200-800 rpm, optionally 400-700 rpm, more optionally 500-700 rpm for 1-9 h, optionally 3-7 h, more optionally 2-6 h. The prepared inner core and the positive electrode active material prepared therefrom have a higher crystallinity and fewer lattice defects, which is beneficial to inhibiting the dissolution of manganese and reducing the interfacial side reactions between the positive electrode active material and the electrolyte solution, thereby improving the cycling performance and safety performance of the secondary battery.

In any embodiment, the manganese salt particles having a first doping element, and a lithium source, a phosphorus source, and a dopant of the second doping element are mixed in a solvent at a temperature of 20-120°C, optionally 40-120°C, for 1-10 h.

In any embodiment, the compound of LiMPO₄ is formed according to a chemical formula of Li₁₊ₓCₓMn_{1-y}A_{y}P_{1-z}R_{z}O₄₋ₙDₙ, and manganese salt particles having the first doping element, and a lithium source, a phosphorus source, and a dopant of the second doping element are ground and mixed in a solvent for 8-15 hours.

In any embodiment, a manganese source, a source of the A element and an acid are dissolved in a solvent to form a suspension of an element A-doped manganese salt, and the suspension is filtered, followed by drying to obtain the element A-doped manganese salt; a lithium source, a phosphorus source, a source of the C element, a source of R element, a source of D element, a solvent and the A element -doped manganese salt are mixed to obtain a slurry; the slurry is subjected to a spray-drying granulation to obtain particles; and the particles are sintered to obtain the positive electrode active material.

In any embodiment, the particles are sintered at a temperature in a range of 600-900°C for 6-14 hours. Therefore, the high-temperature stability and cycling performance of the secondary battery can be improved.

Thus, with the control of the reaction temperature, the stirring speed and the mixing time during doping, the doping elements can be uniformly distributed, and the sintered material has a higher crystallinity, thereby improving the capacity per gram, rate performance, etc., of the material.

In any embodiment, the method further comprises: forming a coating layer on at least part of the surface of the compound of LiMPO₄.

In any embodiment, when the coating layer contains carbon, the method comprises: grinding and mixing manganese salt particles containing an optional manganese-site doping element, a lithium source, a phosphorus source, a dopant of an optional phosphorus-site doping element, and a carbon source in a solvent, wherein the mixed mixture contains at least one of the manganese-site doping element and the phosphorus-site doping element.

In any embodiment, when the coating layers include a first coating layer coating the compound of LiMPO₄ and a second coating layer coating the first coating layer, wherein the first coating layer contains a pyrophosphate of QP₂O₇ and a phosphate of XPO₄, where Q and X are each independently selected from one or more of Li, Fe, Ni, Mg, Co, Cu, Zn, Ti, Ag, Zr, Nb or Al, and the second coating layer comprises carbon, the method comprises: providing a QP₂O₇ powder and an XPO₄ suspension containing a carbon source, adding the lithium manganese phosphate oxide and the QP₂O₇ powder into the XPO₄ suspension containing a carbon source, and mixing and sintering same to obtain a positive electrode active material.

In any embodiment, the QP₂O₇ powder is provided by adding a source of a Q element and a phosphorus source into a solvent to obtain a mixture, adjusting the pH of the mixture to be 4-6, and stirring same for complete reaction, followed by drying and sintering; and the QP₂O₇ powder is provided when at least one of the following conditions is satisfied: the drying is carried out at 100-300°C, optionally 150-200°C, for 4-8 h; and the sintering is carried out at 500-800°C, optionally 650-800°C, in an inert gas atmosphere for 4-10 h.

In any embodiment, for forming the coating layer, the sintering temperature is 500-800°C, and the sintering time is 4-10 h. Thus, the capacity per gram and rate performance of the material can be further improved by controlling the sintering temperature and time during coating.

In any embodiment, the coating layers include a first coating layer coating the compound of LiMPO₄, a second coating layer coating the first coating layer, and a third coating layer coating the second coating layer, wherein the first coating layer comprises a crystalline pyrophosphate of LiₐQP₂O₇ and/or Q_{b}(P₂O₇)_{c} where 0 ::::; a ::::; 2, 1 ::::; b ::::; 4, 1 ::::; c ::::; 6, the values of a, b, and c satisfy the condition of keeping the crystalline pyrophosphate of LiₐQP₂O₇ or Q_{b}(P₂O₇)_{c} electrically neutral, and Q in the crystalline pyrophosphates of LiₐQP₂O₇ and Q_{b}(P₂O₇)_{c} is each independently selected from one or more elements of Fe, Ni, Mg, Co, Cu, Zn, Ti, Ag, Zr, Nb, or Al; the second coating layer comprises crystalline phosphate XPO₄ in which X is one or more elements selected from Li, Fe, Ni, Mg, Co, Cu, Zn, Ti, Ag, Zr, Nb, or Al; and the third coating layer is carbon.

In any embodiment, the coating layer is formed by: providing LiₐQP₂O₇ and/or Q_{b}(P₂O₇)_{c} and an XPO₄ suspension respectively, adding the lithium manganese phosphate oxide into the suspension, and mixing and sintering same to obtain a positive electrode active material. In any embodiment, the coating layers are formed by: dissolving a source of a Q element, a phosphorus source and an acid, and optionally a lithium source in a solvent to obtain a first coating layer suspension; mixing the compound of LiMPO₄ with the first coating layer suspension, and sintering same to obtain a first coating layer-coated material; dissolving a source of an X element, a phosphorus source and an acid in a solvent to obtain a second coating layer suspension; mixing the first coating layer-coated material with the second coating layer suspension, and sintering same to obtain a material coated with two coating layers; dissolving a carbon source in a solvent to obtain a third coating layer solution; and adding the material coated with two coating layers into the third coating layer solution, and mixing, drying and sintering same to obtain the positive electrode active material.

In any embodiment, when the first coating layer-coated material is formed, the pH of the solution in which a source of the Q element, a phosphorus source, an acid, and optionally a lithium source are dissolved is controlled to be 3.5-6.5, and the solution is stirred for reaction for 1-5 h, and then heated to 50-120°C and held for 2-10 h, and/or, the sintering is carried out at 650-800°C for 2-6 hours.

In any embodiment, when the material coated with two coating layers is formed, a source of an X element, a phosphorus source and an acid are dissolved in a solvent, and the resulting solution is then stirred for reaction for 1-10 h, and then heated to 60-150°C and held for 2-10 h, and/or, the sintering is carried out at 500-700°C for 6-10 hours.

During the preparation of the inner core material with chemical reactions and during the preparation of the first coating layer suspension and the second coating layer suspension, the following situations can be avoided by selecting the reaction temperature and reaction time as described above: if the reaction temperature is too low, the reaction cannot take place or the reaction rate is relatively low; if the temperature is too high, the product decomposes or forms an impurity phase; if the reaction time is too long, the particle size of the product is relatively large, which may prolong the time and increase the difficulty of the subsequent processes; and if the reaction time is too short, the reaction is incomplete and fewer products are obtained.

In any embodiment, the sintering in the step of forming the third coating layer is carried out at 700-800°C for 6-10 hours.

In another aspect of the present application, the present application provides a positive electrode plate comprising a positive electrode current collector and a positive electrode film layer provided on at least one surface of the positive electrode current collector, wherein the positive electrode film layer comprises the positive electrode active material described above, or a positive electrode active material prepared by the method described previously. In any embodiment, the content of the positive electrode active material in the positive electrode film layer is 10 wt% or more, optionally 95-99.5 wt%, based on the total weight of the positive electrode film layer.

In yet another aspect of the present application, the present application provides a secondary battery comprising a positive electrode active material described above, or a positive electrode active material prepared by the method described above, or a positive electrode plate described above.

In yet another aspect of the present invention, the present application provides a battery module comprising the secondary battery described above.

In yet another aspect of the present invention, the present application provides a battery pack comprising the battery module described above.

In yet another aspect of the present invention, the present application provides a power consuming device comprising at least one selected from the secondary battery, the battery module or the battery pack described above.

### Brief Description of the Drawings

Fig. 1 shows X-ray diffraction (XRD) spectrum of undoped LiMnPO4 and a positive electrode active material prepared in example 2.
Fig. 2 shows energy-dispersive X-ray spectroscopy (EDS) images of the positive electrode active material prepared in example 2.
Fig. 3 shows a schematic diagram of a positive electrode active material with a core-shell structure described in the present application.
Fig. 4 shows a schematic diagram of a positive electrode active material with a core-shell structure in an embodiment of the present application.
Fig. 5 shows a schematic diagram of a secondary battery in an embodiment of the present application.
Fig. 6 shows an exploded view of the secondary battery in an embodiment of the present application as shown in Fig. 5.
Fig. 7 shows a schematic diagram of a battery module in an embodiment of the present application.
Fig. 8 shows a schematic diagram of a battery pack in an embodiment of the present application.
Fig. 9 is an exploded view of the battery pack in an embodiment of the present application as shown in Fig. 8.
Fig. 10 shows a schematic diagram of a power consuming device using a secondary battery in an embodiment of the present application as a power source.

### Description of reference signs:

11 inner core; 12 first coating layer; 13 second coating layer; 14 third coating layer; 1 battery pack; 2 upper box body; 3 lower box body; 4 battery module; 5 secondary battery; 51 housing; 52 electrode assembly; 53 top cover assembly

### Detailed Description of Embodiments

The embodiments of the present application are described in detail herebelow, with examples thereof being shown in the accompanying drawings, where identical or similar reference numerals throughout represent identical or similar elements or elements with identical or similar functions. The embodiments with reference to accompanying drawings described below are exemplary and are merely for explaining the present application, and should not be construed as limiting the present application.

It should be noted that the features and effects described in various aspects of the present application can be mutually applicable and will not be repeated here.

Hereinafter, embodiments of the positive electrode active material and the preparation method therefor, the negative electrode plate, the secondary battery, the battery module, the battery pack, and the power consuming device of the present application are described in detail and specifically disclosed with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

In an aspect of the present application, the present application proposes a positive electrode active material having a compound of LiMPO₄, wherein M includes Mn and a non-Mn element, and the non-Mn element satisfies at least one of the following conditions:
the ionic radius of the non-Mn element being denoted as a, and the ionic radius of manganese element being denoted as b, |a-b|/b is not greater than 10%;
the valence alternation voltage of the non-Mn element being denoted as U, 2 V < U < 5.5 V; the chemical activity of a chemical bond formed by the non-Mn element and O is not less than that of a P-O bond; and
the highest valence of the non-Mn element is not greater than 6.

As positive electrode active materials for lithium ion secondary batteries, compounds such as lithium manganese phosphate, lithium iron phosphate, or lithium nickel phosphate that can be applied in a high-voltage system in the future have lower costs and better application prospects. However, taking lithium manganese phosphate as an example, it has a disadvantage of a poor rate performance when compared with other positive electrode active materials, and this problem is now usually solved by means of coating or doping, etc. However, it is still desirable to further improve the rate performance, cycling performance, high-temperature stability and the like of the lithium manganese phosphate positive electrode active material.

The inventors of the present application have repeatedly studied the effects of doping the Li, Mn, P, and O sites of lithium manganese phosphate with various elements and found that the capacity per gram, rate performance, and cycling performance of the positive electrode active material can be improved by controlling the doping sites, and the specific elements and doping amounts.

Specifically, selecting a suitable manganese-site doping element can reduce the lattice change rate of the lithium manganese phosphate material during the process of lithium intercalation and de-intercalation, improve the structural stability of the positive electrode material, greatly reduce the dissolution of manganese, and reduce the oxygen activity on the particle surface, such that the capacity per gram of the material can be increased, and the interfacial side reactions with the electrolyte solution during the use of the material can be reduced, thereby improving the cycling performance of the material. More specifically, selecting an element with an ionic radius similar to Mn element as the Mn-site doping element, or selecting an element with a valence that is variable within the valence conversion range of Mn for doping can control the length change of the bond formed by the doping element and O and the Mn-O bond, which is conducive to stabilizing the lattice structure of the doped positive electrode material. In addition, a vacancy element having a lattice supporting effect can also be introduced at the Mn-site, such as elements with a valence greater than or equal to the sum of the valence of Li and Mn. This is equivalent to introducing a vacancy point that cannot bind with Li at the active and easily soluble Mn site, thereby providing support for the lattice.

For another example, selecting a suitable P-site doping element can help to reduce the difficulty in changing the length of the Mn-O bond, thereby improving the electronic conductivity and reducing the migration barrier of lithium ions, accelerating the migration of lithium ions, and improving the rate performance of a secondary battery. Specifically, the tetrahedral structure of the P-O bonds itself is relatively stable, such that it is difficult to change the length of the Mn-O bond, resulting in a higher overall lithium ion migration barrier of the material. However, appropriate P-site doping elements can improve the firmness of the P-O bond tetrahedron, thereby promoting the improvement of the rate performance of the material. Specifically, elements for which the chemical bond formed with O has a chemical activity not less than that of a P-O bond can be selected for doping at the P site, thereby reducing the difficulty in changing the length of Mn-O bonds. In the present application, unless otherwise stated, "the chemical activity of the chemical bond formed with O that is not less than that of a P-O bond" can be determined by testing methods known to those skilled in the art to determine the chemical bond activity. For example, it can be determined by detecting the bond energy, or by referring to the electrochemical potential of an oxidation or reduction reagent that is used to break the chemical bond. Alternatively, an element with a valency that is not significantly higher than P, for example, 6 or less, can be selected for doping at the P site, which is beneficial for reducing the repulsive effect between Mn and P elements, and can also improve the capacity per gram, rate performance, etc., of the material.

Similarly, appropriate element doping at the Li site can also improve the lattice change rate of the material and maintain the capacity of the battery comprising the material.

Element doping at the O site can help to reduce the interfacial side reactions between the material and the electrolyte solution and reduce the interface activity, thus facilitating the improvement of the cycling performance of the positive electrode active material. In addition, element doping at the O site can also provide the material with an improved resistance to acid corrosion by HF, etc., which is beneficial for improving the cycling performance and service life of the material.

In some embodiments, the non-Mn element for doping at the above sites includes one or two of a first doping element and a second doping element, the first doping element is doped at the manganese site, and the second doping element is doped at the phosphorus site. The first doping element satisfies at least one of the following conditions: the ionic radius of the first doping element being denoted as a, and the ionic radius of manganese element being denoted as b, |a-b|/b is not greater than 10%; and the valence alternation voltage of the first doping element being denoted as U, 2 V < U < 5.5 V. The second doping element satisfies at least one of the following conditions: the chemical activity of a chemical bond formed by the second doping element and O is not less than that of a P-O bond; and the highest valence of the second doping element of the doping element M is not greater than 6. In some embodiments, the positive electrode active material also can contain two of the first doping elements.

In some embodiments, both the Mn site and the P site among the sites described above can be doped. Thus, this doping can not only effectively reduce the dissolution of manganese, which in turn reduces the migration of manganese ions to the negative electrode and the consumption of electrolyte solution due to the SEI film decomposition, thereby improving the cycling performance and safety performance of secondary batteries, but also can facilitate the adjustment of the Mn-O bond, lower the migration barrier of lithium ions and accelerate the migration of lithium ions, thereby improving the rate performance of secondary batteries.

In some other embodiments of the present application, doping at all the four sites with specific amounts of specific elements can achieve a significantly improved rate performance and improved cycling performance and/or high-temperature stability, thereby obtaining an improved lithium manganese phosphate positive electrode active material.

The positive electrode active material of the present application can, for example, be used in a lithium ion secondary battery.

The first doping element includes one or more elements selected from Zn, Al, Na, K, Mg, Mo, W, Ti, V, Zr, Fe, Ni, Co, Ga, Sn, Sb, Nb and Ge. The first doping element includes at least two selected from Fe, Ti, V, Ni, Co, and Mg. The second doping element includes one or more elements selected from B (boron), S, Si and N.

The doping elements mentioned above should keep the system electrically neutral, which can ensure that the defects and impurity phases in the positive electrode active material are as few as possible. If there is an excess of a transition metal (such as manganese) in the positive electrode active material, since the structure of the material system itself is relatively stable, the excess transition metal is likely prone to be precipitated in the form of an elementary substance, or form impurity phases inside the lattice to keep the electrical neutrality, so that such an impurity can be as little as possible. In addition, ensuring the electrical neutrality of the system can also result in lithium vacancies in the material in some cases, so that the dynamic performance of the material is more excellent.

Taking lithium manganese phosphate material as an example, the specific parameters of the positive electrode active material proposed in the present application and the principles of achieving the above-mentioned beneficial effects will be detailed below:
The inventors of the present application have found in practical work that the existing lithium manganese phosphate positive electrode active material at present has relatively serious manganese dissolution during deep charging and discharging. Although there is an attempt in the prior art to coat lithium manganese phosphate with lithium iron phosphate in order to reduce the interfacial side reaction, this coating cannot prevent the dissolved manganese from continued migration to the electrolyte solution. The dissolved manganese is reduced to metal manganese after migrating to the negative electrode. The metal manganese produced in this way is equivalent to a "catalyst", which can catalyze the decomposition of the SEI film (solid electrolyte interphase, solid electrolyte interphase film) on the surface of the negative electrode to produce by-products; a part of the by-products is gas, thus causing the secondary battery to swell and affecting the safety performance of the secondary battery; in addition, another part of the by-products is deposited on the surface of the negative electrode, and hinders the passage of lithium ions into and out of the negative electrode, resulting in an increase in the impedance of the secondary battery, thus affecting the dynamic performance of the secondary battery. In addition, in order to supplement the lost SEI film, the active lithium in the electrolyte solution and the battery are continuously consumed, which will have an irreversible impact on the capacity retention rate of the secondary battery.

From extensive research, the inventors have found that a novel positive electrode active material that can be obtained by modifying lithium manganese phosphate can achieve significantly reduced manganese dissolution and reduced lattice change rate, and when such a positive electrode active material is applied to a secondary battery, the cycling performance, rate performance, safety performance and capacity of the battery can be improved.

In some embodiments, the positive electrode active material above may have a compound with a chemical formula of Li₁₊ₓMn_{1-y}A_{y}P_{1-z}R_{z}O₄, where x is any numerical value in a range of -0.100-0.100, y is any numerical value in a range of 0.001-0.500, z is any numerical value in a range of 0.001-0.100, A includes one or more elements selected from Zn, Al, Na, K, Mg, Mo, W, Ti, V, Zr, Fe, Ni, Co, Ga, Sn, Sb, Nb, and Ge, and R includes one or more elements selected from B (boron), S, Si and N. The values of x, y, and z satisfy the condition of keeping the entire compound electrically neutral.

In some other embodiments, the positive electrode active material above may have a compound with a chemical formula of Li₁₊ₓCₓMn_{1-y}A_{y}P_{1-z}R_{z}O₄₋ₙDₙ, wherein C includes one or more elements selected from Zn, Al, Na, K, Mg, Nb, Mo and W, A includes one or more elements selected from Zn, Al, Na, K, Mg, Mo, W, Ti, V, Zr, Fe, Ni, Mg, Co, Ga, Sn, Sb, Nb and Ge, R includes one or more elements selected from B (boron), S, Si and N, D includes one or more elements selected from S, F, Cl and Br, x is any numerical value in a range of - 0.100- 0.100, y is any numerical value in a range of 0.001-0.500, z is any numerical value in a range of 0.001-0.100, n is any numerical value in a range of 0.001 to 0.1, and m is any numerical value in a range of 0.9 to 1.1. Similarly, the values of x, y, and z satisfy the condition of keeping the entire compound electrically neutral.

Unless otherwise stated, in the chemical formula of the above inner core, when a site is doped with two or more of elements above, the above definition of the numerical range of x, y, z or m not only represents a definition of the stoichiometric number of each element at the site, but also represents a definition of the sum of the stoichiometric numbers of the elements at the site. For example, when a compound having a chemical formula of Li₁₊ₓMn_{1-y}A_{y}P_{1-z}R_{z}O₄ is comprised, where A is two or more of elements A1, A2...An, the stoichiometric numbers y1, y2...yn of Al, A2...An each fall within the numerical range of y defined in the present application, and the sum of y1, y2...yn shall also fall within this numerical range. Similarly, when R is two or more of elements, the definition of the numerical range of the stoichiometric number of R in the present application also has the above meaning.

In an optional embodiment, when A is selected from one, two, three or four elements of Zn, Al, Na, K, Mg, Mo, W, Ti, V, Zr, Fe, Ni, Co, Ga, Sn, Sb, Nb and Ge, A_{y} is Gₙ₁Dₙ₂Eₙ₃Kₙ₄, wherein n1 + n2 + n3 + n4 = y, and n1, n2, n3 and n4 are all positive numbers and not zero, and G, D, E and K are each independently selected from one of Zn, Al, Na, K, Mg, Mo, W, Ti, V, Zr, Fe, Ni, Co, Ga, Sn, Sb, Nb and Ge, and optionally, at least one of G, D, E and K is Fe. Optionally, one of n1, n2, n3 and n4 is zero, and the remaining ones are not zero; more optionally, two of n1, n2, n3 and n4 are zero, and the remaining ones are not zero; and further optionally, three of n1, n2, n3 and n4 are zero, and the remaining one is not zero. In Li₁₊ₓMn_{1-y}A_{y}P_{1-z}R_{z}O₄, it is advantageous to dope one, two, three or four of the above A elements, optionally one, two or three of the above A elements, at the manganese site; and in addition, it is advantageous to dope one or two R elements at the phosphorus site, which is conducive to even distribution of doping elements.

Specifically, for example, the Mn site can be doped with both Fe and V.

In some embodiments, in Li₁₊ₓMn_{1-y}A_{y}P_{1-z}R_{z}O₄, the ratio of y to 1-y is 1 : 10 to 1 : 1, optionally 1 : 4 to 1 : 1. Here, y denotes the sum of the stoichiometric numbers of the Mn-site doping elements A. When the above conditions are satisfied, the energy density and cycling performance of the secondary battery using the positive electrode active material can be further improved. In some embodiments, the ratio of z to 1-z is 1 : 9 to 1 : 999, optionally 1 : 499 to 1 : 249. Here, z denotes the sum of the stoichiometric numbers of the P-site doping R element. When the above conditions are satisfied, the energy density and cycling performance of the secondary battery using the positive electrode active material can be further improved.

In some other embodiments of the present application, the positive electrode active material may comprise Li₁₊ₓCₓMn_{1-y}A_{y}P_{1-z}R_{z}O₄₋ₙDₙ. The value of x is affected by the valency of A and R, and the values of y and z, so as to ensure that the entire system is electrically neutral. If the value of x is too small, the lithium content of the entire inner core system will decrease, which will affect the capacity per gram of the material. The value of y will limit the total amount of all doping elements. If y is too small, that is, the doping amount is too small, and the doping elements will have no effect. If y exceeds 0.5, the content of Mn in the system will be less, which will affect the voltage plateau of the material. The doping with element R is in the position of P, and since the P-O tetrahedron is relatively stable and the excessive z value will affect the stability of the material, the value of z is defined as being 0.001-0.100. More specifically, x is any numerical value in a range of -0.100-0.100, y is any numerical value in a range of 0.001-0.500, z is any numerical value in a range of 0.001-0.100, n is any numerical value in a range of 0.001 to 0.1, and m is any numerical value in a range of 0.9 to 1.1. For example, 1+x is selected from a range of 0.9 to 1.1, for example, 0.97, 0.977, 0.984, 0.988, 0.99, 0.991, 0.992, 0.993, 0.994, 0.995, 0.996, 0.997, 0.998 and 1.01, x is selected from a range of 0.001 to 0.1, for example, 0.001 and 0.005, y is selected from a range of 0.001 to 0.5, for example, 0.001, 0.005, 0.02, 0.05, 0.1, 0.15, 0.2, 0.25, 0.3, 0.34, 0.345, 0.349, 0.35 and 0.4, z is selected from a range of 0.001 to 0.1, for example, 0.001, 0.005, 0.08 and 0.1, n is selected from a range of 0.001 to 0.1, for example, 0.001, 0.005, 0.08 and 0.1, and the positive electrode active material is electrically neutral.

As mentioned previously, the positive electrode active material of the present application is obtained by element doping in compounds such as LiMnPO₄, and without wishing to be bound by theory, it is now believed that the performance improvement of lithium manganese phosphate is related to the decrease of the lattice change rate and surface activity of lithium manganese phosphate during the process of lithium intercalation and de-intercalation. The decrease in the lattice change rate can reduce the difference of lattice constants between two phases at a grain boundary, lower the interface stress and enhance the Li⁺ transport ability at the interface, thereby improving the rate performance of the positive electrode active material. A high surface activity can easily lead to severe interfacial side reactions, and exacerbates gas production, electrolyte solution consumption and interface damage, thereby affecting the cycling performance and the like of the battery. In the present application, the lattice change rate is reduced by doping at the sites of Li and Mn. The Mn-position doping also effectively decreases the surface activity, thereby inhibiting the Mn dissolution and the interfacial side reactions between the positive electrode active material and the electrolyte solution. The P-site doping increases the change rate of the Mn-O bond length and reduces the small-polaron migration barrier of the material, which is beneficial for electronic conductivity. The O-site doping plays a good role in reducing the interfacial side reactions. The P-position and O-position doping also has an effect on the dissolution of Mn of antisite defects and the dynamic performance. Therefore, the doping reduces the antisite effect concentration in the material, improves the dynamic performance and capacity per gram of the material, and can also change the particle morphology, thereby increasing the compacted density. The applicant has unexpectedly found that: Doping the compound of LiMnPO₄ at all the Li, Mn, P and O sites thereof with specific amounts of specific elements can significantly improve the rate performance while significantly reducing the dissolution of Mn and Mn-site doping element, thereby significantly improving the cycling performance and/or high-temperature stability; moreover, the capacity per gram and compacted density of the material can also be increased.

Selecting the Li-site doping element in the above ranges can further reduce the lattice change rate during a lithium de-intercalation process, thereby further improving the rate performance of the battery. Selecting the Mn-site doping element in the above ranges can further increase the electronic conductivity while the lattice change rate is further reduced, thereby improving the rate performance and capacity per gram of the battery. Selecting the P-site doping element in the above ranges can further the rate performance of the battery. Selecting the O-site doping element in the above ranges can further alleviate the interfacial side reactions, thereby improving the high-temperature performance of the battery.

In some embodiments, x is selected from a range of 0.001 to 0.005; and/or, y is selected from a range of 0.01 to 0.5, and optionally from a range of 0.25 to 0.5; and/or, z is selected from a range of 0.001 to 0.005; and/or, n is selected from a range of 0.001 to 0.005. By selecting the y value in the above ranges, the capacity per gram and rate performance of the material can be further improved. By selecting the x value in the above ranges, the dynamic performance of the material can be further improved. By selecting the z value in the above ranges, the rate performance of the secondary battery can be further improved. By selecting the n value in the above ranges, the high-temperature performance of the secondary battery can be further improved.

In some embodiments, the positive electrode active material with all the 4 sites being doped with non-Mn elements satisfies: (1-y) : y is in a range of 1 to 4, optionally in a range of 1.5 to 3, and (1+x) : m is in a range of 9 to 1100, optionally in a range of 190-998. Here, y denotes the sum of the stoichiometric numbers of the Mn-site doping elements. When the above conditions are satisfied, the energy density and cycling performance of the positive electrode active material can be further improved.

In some embodiments, the positive electrode active material may comprise at least one of Li₁₊ₓMn_{1-y}A_{y}P_{1-z}R_{z}O₄, and Li₁₊ₓCₓMn_{1-y}A_{y}P_{1-z}R_{z}O₄₋ₙDₙ. The ratio of y to 1-y is 1 : 10 to 1 : 1, optionally 1 : 4 to 1 : 1. The ratio of z to 1-z is 1 : 9 to 1 : 999, optionally 1 : 499 to 1 : 249. C, R and D are each independently any element within the respective ranges above, and A is at least two elements within the range thereof; Optionally, C is selected from any element of Mg and Nb, and/or A is at least two elements selected from Fe, Ti, V, Co and Mg, and optionally is Fe and one or more elements selected from Ti, V, Co and Mg, and/or R is S, and/or D is F. x is selected from a range of 0.001 to 0.005; and/or, y is selected from a range of 0.01 to 0.5, and optionally from a range of 0.25 to 0.5; and/or, z is selected from a range of 0.001 to 0.005; and/or, n is selected from a range of 0.001 to 0.005. Unless otherwise stated, the above parameters can be freely combined, and the combinations thereof will not be enumerated herein.

In some embodiments, the lattice change rate of the positive electrode active material is 8% or less, optionally 4% or less. By lowering the lattice change rate, the Li ion transport can be made easier, that is, the Li ions have a stronger migration ability in the material, which is beneficial in improving the rate performance of the secondary battery. The lattice change rate may be measured with a method known in the art, e.g., X-ray diffraction (XRD). The process of lithium intercalation and de-intercalation in LiMnPO₄ is a two-phase reaction. The interfacial stress of the two phases is determined by the lattice change rate. The smaller the lattice change rate, the smaller the interfacial stress and the easier the Li⁺ transport. Therefore, reducing the lattice change rate of the doped LiMnPO₄ is beneficial to enhance the Li+ transport capacity, thereby improving the rate performance of the secondary battery. In some embodiments, optionally, the average discharge voltage of a button battery comprising the positive electrode active material is 3.5 V or more and the discharge capacity per gram is 140 mAh/g or more. Optionally, the average discharge voltage is 3.6 V or more and the discharge capacity per gram is 145 mAh/g or more.

Although the average discharge voltage of the undoped LiMnPO₄ is 4.0 V or more, the discharge capacity per gram thereof is low, usually less than 120 mAh/g, and thus the energy density is low. By adjusting the lattice change rate by doping, the discharge capacity per gram can be greatly increased, and the overall energy density can be significantly increased when the average discharge voltage reduces slightly.

In some embodiments, the Li/Mn antisite defect concentration of the positive electrode active material is 2% or less, and optionally, the Li/Mn antisite defect concentration is 0.5% or less. The so-called Li/Mn antisite defect means that the sites of Li⁺ and Mn²⁺ have been exchanged in the LiMnPO4 lattices. The Li/Mn antisite defect concentration refers to the percentage of Li⁺ exchanged with Mn²⁺ relative to the total amount of the Li⁺ in the positive electrode active material. The Mn²⁺ of antisite defects can hinder the transport of Li⁺, and a reduction in the Li/Mn antisite defect concentration is beneficial in improving the capacity per gram and rate performance of the positive electrode active material. The Li/Mn antisite defect concentration may be measured with a method known in the art, e.g., XRD.

In some embodiments, the surface oxygen valency of the positive electrode active material is -1.82 or less, optionally -1.89 to -1.98. By lowering the surface oxygen valency, the interfacial side reactions between the positive electrode active material and an electrolyte solution can be alleviated, thereby improving the cycling performance and high-temperature stability of the secondary battery. The surface oxygen valency may be measured with a method known in the art, e.g., electron energy loss spectroscopy (EELS).

In some embodiments, the positive electrode active material has a compacted density under 3 T (ton) of 2.0 g/cm3 or more, optionally 2.2 g/cm3 or more. A higher compacted density indicates a greater weight of the active material per unit volume, and thus, increasing the compacted density is beneficial for increasing the volumetric energy density of a cell. The compacted density may be measured in accordance with GB/T 24533-2009.

In some embodiments, the positive electrode active material has a core-shell structure including an inner core and a shell coating the inner core, wherein the inner core has the LiMPO₄. The positive electrode active material having a core-shell structure can have further improved performance through the coated shell.

For example, in some embodiments of the present application, the surface of the inner core is coated with carbon. Thus, the electrical conductivity of the positive electrode active material can be improved. The carbon in the coating layer is a mixture of SP2-form carbon and SP3-form carbon, optionally, the molar ratio of the SP2-form carbon to the SP3-form carbon is any numerical value within a range of 0.1-10, optionally any numerical value within a range of 2.0-3.0.

In some embodiments, the molar ratio of the SP2-form carbon to the SP3-form carbon may be about 0.1, about 0.2, about 0.3, about 0.4, about 0.5, about 0.6, about 0.7, about 0.8, about 0.9, about 1, about 2, about 3, about 4, about 5, about 6, about 7, about 8, about 9, or about 10, or within any range of any of the above values.

In the present application, "about" a numerical value means a range, i.e., a range of ±10% of the numerical value.

The comprehensive electrical performance of the secondary battery is improved by selecting the form of carbon in the carbon coating layer. Specifically, by using a mixed form of SP2-form carbon and SP3-form carbon and limiting the ratio of SP2-form carbon to SP3-form carbon within a certain range, the following can be avoided: if the carbon in the coating layer is in the form of amorphous SP3 only, the electrical conductivity is poor; and if all the carbon is in a graphitized SP2-form, although the electrical conductivity is good, there are few lithium ion paths, which is not conducive to lithium intercalation and de-intercalation. In addition, limiting the molar ratio of SP2-form carbon to SP3-form carbon within the above ranges can not only achieve good electrical conductivity, but also can ensure the paths of lithium ions, which is beneficial to the realization of the function of the secondary battery and the cycling performance thereof.

The mixing ratio of the SP2-form carbon to the SP3-form carbon in the carbon coating layer can be controlled by sintering conditions such as the sintering temperature and sintering time. For example, in the case where sucrose is used as the carbon source to prepare the third coating layer, after being subjected to pyrolysis at a high temperature, the sucrose is deposited on the second coating layer, while both the SP3-form and SP2-form carbon coating layers will be produced at a high temperature. The ratio of the SP2-form carbon to the SP3-form carbon may be adjusted by selecting high-temperature pyrolysis conditions and sintering conditions.

The structure and characteristics of the carbon coating layer can be determined by a Raman spectroscopy, and the specific test method is as follows: subjecting the energy spectrum of the Raman test to peaking splitting to obtain Id/Ig (wherein Id is the peak intensity of SP3-form carbon, and Ig is the peak intensity of SP2-form carbon), thus confirming the molar ratio of the two forms.

In some embodiments of the present application, the shell comprises an inorganic coating layer and a carbon coating layer, with the inorganic coating layer being provided to be close to the inner core. Specifically, the inorganic coating layer contains at least one of a phosphate and a pyrophosphate. The positive electrode active material having a core-shell structure can achieve further reduced dissolution of manganese and a lowered lattice change rate, and when such a positive electrode active material is applied to a secondary battery, the cycling performance, rate performance, safety performance can be improved, and the capacity of the battery is increased. Further coating with a crystalline phosphate or pyrophosphate coating layer with an excellent lithium-ion conductivity can effectively reduce the interfacial side reactions on the surface of the positive electrode active material, thereby improving the high-temperature cycling and storage performance of the secondary battery; and then further coating with a carbon layer can further improve the safety performance and dynamic performance of the secondary battery.

In the present application, the pyrophosphate may include QP₂O₇, and specifically may include a crystalline pyrophosphate of LiₐQP₂O₇ and/or Q_{b}(P₂O₇)_{c}, where 0 ::::; a ::::; 2, 1 ::::; b ::::; 4, 1 ::::; c ::::; 6, the values of a, b, and c satisfy the condition of keeping the crystalline pyrophosphate of LiₐQP₂O₇ or Q_{b}(P₂O₇)_{c} electrically neutral, and Q in the crystalline pyrophosphates of LiₐQP₂O₇ and Q_{b}(P₂O₇)_{c} is each independently selected from one or more elements of Fe, Ni, Mg, Co, Cu, Zn, Ti, Ag, Zr, Nb, or Al.

The crystalline phosphate may include XPO₄, wherein X is selected from one or more elements of Li, Fe, Ni, Mg, Co, Cu, Zn, Ti, Ag, Zr, Nb, or Al.

The crystalline state of the crystalline pyrophosphate and the crystalline phosphate is not particularly limited, and in some embodiments of the present application, the crystalline pyrophosphate and/or phosphate may be in a single crystal, polycrystalline, or partially crystalline state. The inventors have found that the crystalline phosphate and pyrophosphate have a better surface selectivity and can better match up with the crystal state of the inner core, which in turn results in better binding force and interface status, making it less prone to peeling off during use; moreover, the crystalline inorganic salt coating layer can better improve the lithium-ion conductivity of the positive electrode active material and can also better reduce the interfacial side reactions on the surface of the active material.

Specifically, the crystalline pyrophosphate has an interplanar spacing in a range of 0.293-0.470 nm and an included angle of crystal orientation (111) in a range of 18.00° - 32.00°. The crystalline phosphate has an interplanar spacing in a range of 0.244-0.425 nm and an included angle of crystal orientation (111) in a range of 20.00° - 37.00°.

In the present application, the crystalline state means that the crystallinity is 50% or more, i.e., 50-100%. A crystalline state with a crystallinity of less than 50% is referred to as a glassy state. The crystallinity of the crystalline pyrophosphate and crystalline phosphate of the present application is 50% to 100%. The pyrophosphate and phosphate with a certain crystallinity enable not only the full achievement of the ability of the pyrophosphate coating layer to prevent the dissolution of manganese and the excellent ability of the phosphate coating layer to conduct lithium ions, as well as the reduction of the interfacial side reactions, but also a better lattice matching between the phosphate coating layer and the phosphate coating layer, such that a more close combination between the coating layers can be achieved.

In the present application, the crystallinity of the crystalline pyrophosphate and crystalline phosphate of the positive electrode active material can be determined by conventional technical means in the art, for example, by a density method, an infrared spectroscopy, a differential scanning calorimetry, and a nuclear magnetic resonance absorption method, and can also be determined by, for example, an X-ray diffraction method. The specific method for determining the crystallinity of the crystalline pyrophosphate and crystalline phosphate of the positive electrode active material by X-ray diffraction method may include the following steps:
taking a certain amount of a positive electrode active material powder, and measuring the total scattering intensity by X-rays, which is the sum of the scattering intensity of the material in the whole space, only related to the intensity of the primary rays, the chemical structure of the positive electrode active material powder, and the total number of electrons participating in the diffraction, that is the mass, but has nothing to do with the ordered state of the sample; and then separating the crystalline scattering from the non-crystalline scattering in the diffraction pattern, with the crystallinity being the ratio of the scattering of the crystalline part to the total scattering intensity.

It should be noted that, in the present application, the crystallinity of pyrophosphate and phosphate in the coating layer can be adjusted, for example, by adjusting the process conditions of the sintering process, such as the sintering temperature, and sintering time.

In the present application, since metal ions are difficult to migrate in pyrophosphate, pyrophosphate as the first coating layer can effectively isolate the doped metal ions from the electrolyte solution. The structure of the crystalline pyrophosphate is stable, and therefore, the coating of the crystalline pyrophosphate can effectively inhibit the dissolution of transition metals and improve cycling performance.

The combination between the coating layer and the inner core is similar to a heterojunction, and the firmness of the combination is limited by the lattice matching degree. When the lattice mismatch is 5% or less, the lattice matching is better, and the two are easy to combine closely. The close combination can ensure that the coating layer will not fall off in the subsequent cycling process, which is beneficial to ensuring the long-term stability of the material. The measurement of the degree of the combination between the coating layer and the core is mainly carried out by calculating the mismatch degree of each lattice constant between the core and the coating layer. In the present application, after element doping in the inner core, in particular element doping at the Mn site and the P site, the matching degree between the inner core and the coating layer is improved compared with that without doping with elements, and the inner core and the crystalline inorganic salt coating layer can be combined more closely.

In the present application, a person skilled in the art can make choices according to the actual situation: whether the phosphate and pyrophosphate are present in the same coating layer, and which one is provided to be closer to the inner core are not particularly limited. For example, the phosphate and pyrophosphate can together form an inorganic salt coating layer, and the outer side of the inorganic salt coating layer can further be provided with a carbon layer. Alternatively, the pyrophosphate and phosphate each independently form separate coating layers, with one being provided to be closer to the inner core, and the other coating the crystalline inorganic salt coating layer that is closer to the inner core, and a carbon layer is provided on the outermost side. Alternatively, the core-shell structure may be composed of only one inorganic salt coating layer formed by a phosphate or pyrophosphate, and a carbon layer provided on the outer side.

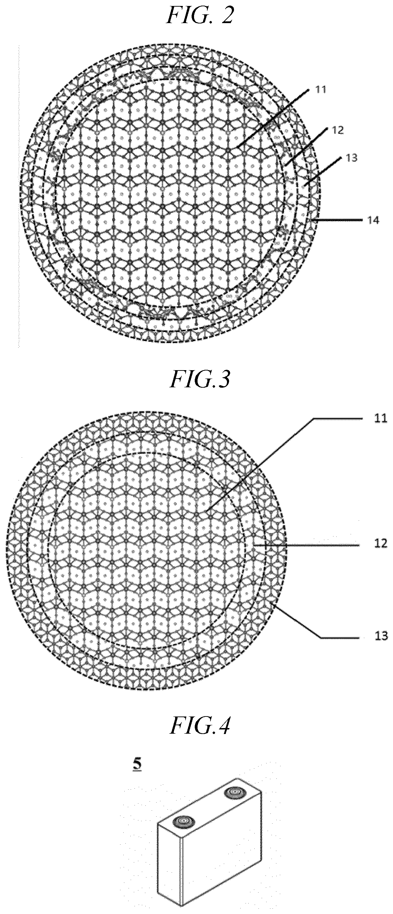

More specifically, the shell comprises a first coating layer coating the inner core and a second coating layer coating the first coating layer, wherein the first coating layer comprises a pyrophosphate of QP₂O₇ and a phosphate of XPO₄, where Q and X are each independently selected from one or more of Li, Fe, Ni, Mg, Co, Cu, Zn, Ti, Ag, Zr, Nb or Al; and the second coating layer comprises carbon. In this case, the positive electrode active material may have a structure as shown in Fig. 4, with an inner core 11, a first coating layer 12 and a second coating layer 13.

In some embodiments, the phosphate of the first coating layer 12 has an interplanar spacing of 0.345-0.358 nm, and an included angle of crystal orientation (111) of 24.25° - 26.45°; and the pyrophosphate of the first coating layer 12 has an interplanar spacing of 0.293-0.326 nm, and an included angle of crystal orientation (111) of 26.41° - 32.57°. When the interplanar spacing and included angle of crystal orientation (111) of the phosphate and pyrophosphate in the first coating layer are in the above ranges, the impurity phase in the coating layer can be effectively avoided, thereby increasing the capacity per gram, cycling performance and rate performance of the material.

In some embodiments, optionally, the coating amount of the first coating layer is greater than 0 wt% and less than or equal to 7 wt%, optionally 4-5.6 wt%, based on the weight of the inner core.

When the coating amount of the first coating layer is within the above range, the dissolution of manganese can be further inhibited, and at the same time, the transport of lithium ions can be further promoted. Besides, the following situations may be effectively avoided: if the coating amount of the first coating layer is too small, it may lead to insufficient inhibition of the dissolution of manganese by pyrophosphate, and non-significant improvement of lithium ion transport performance; and if the coating amount of the first coating layer is too large, it may cause the coating layer to be too thick, increase the impedance of the battery, and affect the dynamic performance of the battery.

In some embodiments, optionally, the weight ratio of the pyrophosphate to the phosphate in the first coating layer is 1 : 3 to 3 : 1, optionally 1 : 3 to 1 : 1.

The proper ratio of pyrophosphate to phosphate is conducive to the full achievement of the synergistic effect of the two. Besides, the following situations may be effectively avoided: if the pyrophosphate is too much and the phosphate is too little, the impedance of the battery may increase; and if there is too much phosphate and too little pyrophosphate, the effect of inhibiting the dissolution of manganese will not be significant.

In some embodiments, optionally, the pyrophosphate and the phosphate each independently have a crystallinity of 10% to 100%, optionally 50% to 100%.

In the first coating layer of the lithium manganese phosphate positive electrode active material, the pyrophosphate and phosphate with certain crystallinities are beneficial to keep the structure of the first coating layer stable and reduce lattice defects. For one thing, this is conducive to the exertion of the pyrophosphate in hindering the dissolution of manganese; for another thing, this is also beneficial to reducing the surface lithium content and the surface oxygen valency of phosphate, thereby reducing the interfacial side reactions between the positive electrode material and the electrolyte solution, reducing the consumption of electrolyte solution, and improving the cycling performance and safety performance of the battery.

In some embodiments, optionally, the coating amount of the second coating layer is greater than 0 wt% and less than or equal to 6 wt%, optionally 3-5 wt%, based on the weight of the inner core.

The carbon-containing layer as the second coating layer can function as a "barrier" to avoid the direct contact between the positive electrode active material and the electrolyte solution, thereby reducing the corrosion of the active material by the electrolyte solution and improving the safety performance of the battery at high temperatures. Moreover, it has strong electrical conductivity, which can reduce the internal resistance of the battery, thereby improving the dynamic performance of the battery. However, since the capacity per gram of the carbon material is relatively low, when the amount of the second coating layer is excessively large, the capacity per gram of the positive electrode active material as a whole may be reduced. Thus, when the coating amount of the second coating layer is in the above range, the dynamic performance and safety performance of the battery can be further improved without compromising the capacity per gram of the positive electrode active material.

In some other embodiments, the positive electrode active material comprises a first coating layer coating the inner core, a second coating layer coating the first coating layer, and a third coating layer coating the second coating layer, wherein the first coating layer comprises a crystalline pyrophosphate of LiₐQP₂O₇ and/or Q_{b}(P₂O₇)_{c}, where 0 ::::; a ::::; 2, 1 ::::; b ::::; 4, 1 ≤ c ::::; 6, the values of a, b, and c satisfy the condition of keeping the crystalline pyrophosphate of LiₐQP₂O₇ or Q_{b}(P₂O₇)_{c} electrically neutral, and Q in the crystalline pyrophosphates of LiₐQP₂O₇ and Q_{b}(P₂O₇)_{c} is each independently selected from one or more elements of Fe, Ni, Mg, Co, Cu, Zn, Ti, Ag, Zr, Nb, or Al; the second coating layer comprises crystalline phosphate XPO₄ in which X is one or more elements selected from Li, Fe, Ni, Mg, Co, Cu, Zn, Ti, Ag, Zr, Nb, or Al; and the third coating layer is carbon. Referring to Fig. 3, the positive electrode active material may have a structure roughly as shown in the figure, which may have an inner core 11, a first coating layer 12, a second coating layer 13, and a third coating layer 14. Fig. 3 shows a schematic diagram of an ideal positive electrode active material with a three-layer coating structure. As shown in the figure, the innermost circle schematically represents the inner core, and the first coating layer, the second coating layer, and the third coating layer are sequentially arranged from the inside to the outside. This figure shows an ideal state where each layer involves complete coating, but in practice, each coating layer can be complete coating or partial coating.

In the above embodiment, a crystalline phosphate is selected as the second coating layer for reasons that first of all, it has a high lattice matching degree with the first coating material, i.e., the crystalline pyrophosphate, with the mismatch degree being only 3%; and secondly, the stability of the phosphate itself is better than that of the pyrophosphate, and coating the pyrophosphate with a phosphate is beneficial to improving the stability of the material. The crystalline phosphate has a stable structure and excellent lithium-ion conductivity. Therefore, coating with the crystalline phosphate can effectively reduce the interfacial side reaction on the surface of the positive electrode active material, thus improving the high-temperature cycling and storage performance of the secondary battery. The mode for the lattice matching between the second coating layer and the first coating layer is similar to the above combination between the first coating layer and the core. When the lattice mismatch is 5% or less, the lattice matching is better, and the two are easy to combine closely. The main reason why carbon is used as the third layer of coating is that the carbon layer has a better electronic conductivity. Since the electrochemical reactions occur during the application in a secondary battery and the participation of electrons is required, carbon with an excellent electrical conductivity can be used to coat the positive electrode active material to increase the electron transfer between particles and at different positions on the particles. Coating with carbon can effectively improve the electrical conductivity and desolvation ability of the positive electrode active material.

In some embodiments, the primary particles of the above positive electrode active material having three coating layers have an average particle size in a range of 50-500 nm and a volume median particle size Dv50 in a range of 200-300 nm. Due to the agglomeration of the particles, the actually measured size of the agglomerated secondary particles may be 500-40000 nm. The particle size of the positive electrode active material affects the processing of the material and the compacted density performance of the electrode plate. By selecting the average particle size of the primary particles within the above range, the following situations can be avoided: if the average particle size of the primary particles of the positive electrode active material is too small, it may cause particle aggregation, difficult dispersion, and need more binder, resulting in poor brittleness of the electrode plate; if the average particle size of the primary particles of the positive electrode active material is too large, the gaps between the particles may be large and the compacted density may be reduced. Through the above solution, the lattice change rate and dissolution of Mn of the lithium manganese phosphate during the process of lithium intercalation and de-intercalation can be effectively inhibited, thereby improving the high-temperature cycling stability and high-temperature storage performance of the secondary battery.

In the above embodiment, the crystalline pyrophosphate in the first coating layer has an interplanar spacing in a range of 0.293-0.470 nm and an included angle of crystal orientation (111) in a range of 18.00° - 32.00°; and the crystalline phosphate in the second coating layer has an interplanar spacing in a range of 0.244-0.425 nm and an included angle of crystal orientation (111) in a range of 20.00° - 37.00°.

Both the first coating layer and the second coating layer in the positive electrode active material of the present application are crystalline substances. The crystalline pyrophosphate and the crystalline phosphate in the coating layers can be characterized by conventional technical means in the art, and can also be characterized, for example, by means of a transmission electron microscope (TEM). Under TEM, the inner core and the coating layers can be distinguished by testing the interplanar spacing.

The specific test method of the interplanar spacing and the included angle of the crystalline pyrophosphate and the crystalline phosphate in the coating layers can comprise the following steps: taking a certain amount of a coated positive electrode active material sample powder in a test tube, injecting a solvent such as alcohol into the test tube, then fully stirring and dispersing the mixture, then using a clean disposable plastic straw to take an appropriate amount of the above solution, and dropping the solution onto a 300-mesh copper mesh when part of the powder remains on the copper mesh; and transferring the copper mesh along with the sample to a TEM sample chamber for testing to obtain an original picture from the TEM test, and saving the original picture. The original picture obtained from the above TEM test is opened in a diffractometer software and subjected to Fourier transform to obtain a diffraction pattern, the distance from the diffraction spot to the center position in the diffraction pattern is measured to obtain the interplanar spacing, and the included angle is calculated according to the Bragg equation.

The difference between the interplanar spacing range of the crystalline pyrophosphate and that of the crystalline phosphate can be directly determined by the value of interplanar spacing. The crystalline pyrophosphate and the crystalline phosphate having an interplanar spacing and included angle in the above ranges can more effectively inhibit the lattice change rate and Mn dissolution of the lithium manganese phosphate during the processes of lithium intercalation and deintercalation, thereby improving the high-temperature cycling performance, cycling stability and high-temperature storage performance of the secondary battery.

In some embodiments, the coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or the coating amount of the second coating layer is greater than 0 and less than or equal to 6 wt%, optionally greater than 0 and less than or equal to 5.5 wt%, more optionally 2-4 wt%, based on the weight of the inner core; and/or the coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core. In the present application, the coating amount of each layer is not zero. In the positive electrode active material having a core-shell structure of the present application, the coating amounts of the three coating layers are preferably within the above ranges, which thus can enable the full coating of the inner core, while further improving the dynamic performance and safety performance of a secondary battery without sacrificing the capacity per gram of the positive electrode active material.

For the first coating layer, by having the coating amount within the above ranges, the following situations can be avoided: too small coating amount means that the coating layer is relatively thin, which may not be able to effectively prevent the migration of transition metals; and too high coating amount means that the coating layer is too thick and may affect the migration of Li+, thereby affecting the rate performance of the material. For the second coating layer, by having a coating amount within the above ranges, the following situations can be avoided: a too high coating amount may affect the overall plateau voltage of the material; and too small coating amount may not be able to achieve a sufficient coating effect. For the third coating layer, the carbon coating mainly functions for enhancing the electron transport between particles. However, since a large amount of amorphous carbon is comprised in the structure, the density of the carbon is low. Therefore, if the coating amount is too large, the compacted density of the electrode plate will be affected.

In the above embodiment, the first coating layer has a thickness of 1-10 nm; and/or the second coating layer has a thickness of 2-15 nm; and/or the third coating layer has a thickness of 2-25 nm.

In some embodiments, the thickness of the first coating layer may be about 2 nm, about 3 nm, about 4 nm, about 5 nm, about 6 nm, about 7 nm, about 8 nm, about 9 nm, or about 10 nm, or within any range of any of the above numerical value. In some embodiments, the thickness of the second coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or within any range of any of the above numerical values. In some embodiments, the thickness of the third coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm or about 25 nm, or within any range of any of the above numerical values.

When the thickness of the first coating layer is in the range of 1-10 nm, adverse effects on the dynamic performance of the material that may occur when it is too thick can be avoided, and the problem that the migration of transition metal ions cannot be effectively hindered when it is too thin can be avoided.

When the thickness of the second coating layer is in a range of 2-15 nm, the surface structure of the second coating layer is stable, and there will be less side reaction with the electrolyte solution, so that the interfacial side reaction can be effectively reduced, thereby improving the high-temperature performance of the secondary battery.

When the thickness of the third coating layer is in the range of 2-25 nm, the electrical conductivity of the material can be improved and the compacted density performance of the battery electrode plate prepared by using the positive electrode active material can be improved.

The thickness determination of the coating layer is mainly carried out by FIB, and the specific method may comprise the following steps: randomly selecting a single particle from the positive electrode active material powder to be tested, cutting out a thin slice with a thickness of about 100 nm from the middle position or near the middle position of the selected particle, then conducting a TEM test on the slice, and measuring the thickness of the coating layer, with 3-5 positions being measured for averaging.

In some embodiments, when the positive electrode active material has three coating layers, based on the weight of the positive electrode active material, the content of manganese element is in a range of 10 wt% - 35 wt%, optionally in a range of 15 wt% - 30 wt%, more optionally in a range of 17 wt% - 20 wt%, the content of phosphorus element is in a range of 12 wt % - 25 wt %, optionally in a range of 15 wt % - 20 wt %, and the weight ratio of manganese element to phosphorus element is in a range of 0.90-1.25, optionally 0.95-1.20. In the present application, in the case where manganese is contained only in the inner core of the positive electrode active material, the content of manganese may correspond to that of the inner core. In the present application, limiting the content of the element manganese within the above range can effectively avoid problems such as the poor structural stability and reduced density of the material which may be caused if the content of the element manganese is too large, thereby improving the performance of the secondary battery, such as cycling, storage and compacted density; moreover, the problems such as low voltage plateau that may be caused if the content of the manganese element is too low can be effectively avoided, thereby improving the energy density of the secondary battery. In the present application, limiting the content of the phosphorus element within the above-mentioned range can effectively avoid the following situations: if the content of the phosphorus element is too high, the covalency of P-O may be too strong so as to affect the conduction of small polarons, thereby affecting the electrical conductivity of the material; and if the content of phosphorus is too small, the stability of the inner core and the lattice structure of the pyrophosphate in the first coating layer and/or the phosphate in the second coating layer may decrease, thereby affecting the overall stability of the material. The weight ratio of manganese to phosphorus content has the following effects on the performance of secondary battery: the weight ratio is too large, meaning that the element manganese is too much and the dissolution of manganese increases, which affects the stability and capacity per gram of the positive electrode active material and in turn the cycling performance and storage performance of the secondary battery; and if the weight ratio is too small, it means that there are too many phosphorus elements, which is prone to form impurity phases and will decrease the discharge voltage platform of the material, thereby reducing the energy density of the secondary battery. The determination of manganese and phosphorus elements can be carried out by conventional technical means in the art. In particular, the following methods are used to determine the content of the manganese and phosphorus elements: dissolving the material in dilute hydrochloric acid (concentration 10-30%), measuring the content of each element in the solution using ICP, and then determining and converting the content of manganese element to obtain the weight percentage thereof.

A second aspect of the present application relates to a method for preparing the positive electrode active material of the first aspect of the present application. Specifically, the method comprises the operation of forming a LiMPO₄ compound, wherein the LiMPO₄ compound may have all the characteristics and advantages of the LiMPO₄ compounds mentioned above and will not be repeated here. In brief, M includes Mn and a non-Mn element, and the non-Mn element satisfies at least one of the following conditions: the ionic radius of the non-Mn element being denoted as a, and the ionic radius of manganese element being denoted as b, |a-b|/b is not greater than 10%; the valence alternation voltage of the non-Mn element being denoted as U, 2 V < U < 5.5 V; the chemical activity of a chemical bond formed by the non-Mn element and O is not less than that of a P-O bond; and the highest valence of the non-Mn element is not greater than 6.

In some embodiments, when the non-Mn element includes a first doping element and a second doping element, the method comprises: mixing a manganese source, a dopant of the manganese-site element and an acid to obtain manganese salt particles having the first doping element; and mixing the manganese salt particles having the first doping element with a lithium source, a phosphorus source, and a dopant of the second doping element in a solvent to obtain a slurry, and sintering same under the protection of an inert gas atmosphere to obtain the LiMPO₄ compound. The types of the first doping element and the second doping element have been described in detail above and will not be repeated here. In some embodiments, the first doping element includes one or more elements selected from Zn, Al, Na, K, Mg, Mo, W, Ti, V, Zr, Fe, Ni, Co, Ga, Sn, Sb, Nb and Ge, and the second doping element includes one or more elements selected from B (boron), S, Si and N.

In some embodiments, the LiMPO₄ compound is formed according to the chemical formula of Li₁₊ₓMn_{1-y}A_{y}P_{1-z}R_{z}O₄, and in some other embodiments, the LiMPO₄ compound is formed according to the chemical formula of Li₁₊ₓCₓMn_{1-y}A_{y}P_{1-z}R_{z}O₄₋ₙDₙ. The elements of each substitution site and the selection principles and beneficial effects thereof, as well as the atomic ratio range have been described in detail above and will not be repeated here. Here, a source of the C element is selected from at least one of the elementary substance, oxide, phosphate, oxalate, carbonate and sulfate of the C element; a source of the A element is selected from at least one of the elementary substance, oxide, phosphate, oxalate, carbonate, sulfate, chloride, nitrate, organic acid salt, hydroxide and halide of the A element; a source of an R element is selected from at least one of the sulfate, borate, nitrate and silicate, organic acid, halide, organic acid salt, oxide and hydroxide of the R element; and a source of an D element is selected from at least one of the elementary substance and ammonium salt of the D element.

In some embodiments, the acid is selected from one or more of hydrochloric acid, sulfuric acid, nitric acid, phosphoric acid, an organic acid like oxalic acid, etc, and may be, for example, oxalic acid. In some embodiments, the acid is a dilute acid with a concentration of 60 wt% or less. In some embodiments, the manganese source may be a manganese-containing substance useful for preparing lithium manganese phosphate that is known in the art. For example, the manganese source may be selected from one or a combination of elemental manganese, manganese dioxide, manganese phosphate, manganese oxalate and manganese carbonate. In some embodiments, the lithium source may be a lithium-containing substance useful for preparing lithium manganese phosphate that is known in the art. For example, the lithium source may be selected from one or a combination of lithium carbonate, lithium hydroxide, lithium phosphate and lithium dihydrogen phosphate. In some embodiments, the phosphorus source may be a phosphorus-containing substance useful for preparing lithium manganese phosphate that is known in the art. For example, the phosphorus source may be selected from one or a combination of diammonium hydrogen phosphate, ammonium dihydrogen phosphate, ammonium phosphate and phosphoric acid. The added amounts of respective sources of the doping elements at each site depend on a target doping amount, and the ratio of the amounts of the lithium source, the manganese source and the phosphorus source conforms to a stoichiometric ratio.

In some embodiments, the manganese salt particles having a first doping element is obtained when at least one of the following conditions is satisfied: the manganese source, the manganese-site element and the acid are mixed at a temperature of 20-120°C, optionally 40-120°C, optionally 60-120°C, more optionally 25-80°C; and/or the mixing is carried out under stirring at 200-800 rpm, optionally 400-700 rpm, more optionally 500-700 rpm for 1-9 h, optionally 3-7 h, more optionally 2-6 h.

In some embodiments, the positive electrode active material may have a first doping element and a second doping element. In this method, the manganese salt particles having the first doping element, and a lithium source, a phosphorus source, and a dopant of the second doping element are ground and mixed in a solvent for 8-15 h. For example, the manganese salt particles having the first doping element, and a lithium source, a phosphorus source, and a dopant of the second doping element are mixed in a solvent at a temperature of 20-120°C, optionally 40-120°C, for 1-10 h.

Specifically, in this method, the LiMPO₄ compound can be formed according to the chemical formula of Li₁₊xCₓMn_{1-y}A_{y}P_{1-z}R_{z}O₄₋ₙDₙ. More specifically, the manganese salt particles having the first doping element, and a lithium source, a phosphorus source, and a dopant of the second doping element can be ground and mixed in a solvent for 8-15 h. For example, a manganese source, a source of the A element and an acid can be dissolved in a solvent to form a suspension of an A element -doped manganese salt, and the suspension is filtered, followed by drying to obtain the A element -doped manganese salt; a lithium source, a phosphorus source, a source of the C element, a source of R element, a source of D element, a solvent and the A element -doped manganese salt are mixed to obtain a slurry; the slurry is subjected to a spray-drying granulation to obtain particles; and the particles are sintered to obtain the positive electrode active material. The sintering may be carried out at a temperature in a range of 600-900°C for 6-14 hours.

By controlling the reaction temperature, the stirring speed and the mixing time during the doping, the doping elements can be uniformly distributed, and the sintered material has a higher degree of crystallinity, thereby improving the capacity per gram, rate performance and the like of the material.

In some specific embodiments, the method may comprise the following steps: (1) a manganese source, a source of a B element and an acid are dissolved and stirred in a solvent to generate a suspension of a B element-doped manganese salt, the suspension is filtered, and the resultant filter cake is dried, to obtain the B element-doped manganese salt; (2) a lithium source, a phosphorus source, a source of an A element, a source of a C element and a source of a D element, a solvent and the B element-doped manganese salt obtained in step (1) are added into a reaction container, and ground and mixed to obtain a slurry; (3) the slurry obtained in step (2) is transferred into a spray drying apparatus for spray-drying granulation, to obtain particles; and (4) sintering the particles obtained in step (3) to obtain a positive electrode active material.

In some embodiments, the solvents in step (1) and step (2) may each independently be a commonly used solvent for preparing a manganese salt and lithium manganese phosphate by those skilled in the art. For example, the solvents may each independently be selected from at least one of ethanol and water (e.g., deionized water), etc.

In some embodiments, the stirring of step (1) is carried out at a temperature in a range of 60°C to 120°C. In some embodiments, the stirring of step (1) is carried out at a stirring speed of 200 to 800 rpm, or 300 to 800 rpm, or 400 to 800 rpm. In some embodiments, the stirring of step (1) is carried out for 6 to 12 h. In some embodiments, the grinding and mixing of step (2) are carried out for 8 to 15 h.

By controlling the reaction temperature, the stirring speed and the mixing time during the doping, the doping elements can be uniformly distributed, and the sintered material has a higher degree of crystallinity, thereby improving the capacity per gram, rate performance and the like of the material.

In some embodiments, in step (1), the filter cake may be washed before drying. In some embodiments, the drying in step (1) may be carried out by means and conditions known to those skilled in the art. For example, the temperature of the drying may be in a range of 120°C to 300°C. Optionally, the dried filter cake may be ground into particles, for example, until the median particle size Dv50 of the particles is in a range of 50-200 nm. Herein, the median particle size Dv50 refers to a particle size corresponding to a cumulative volume distribution percentage of the positive electrode active material reaching 50%. In the present application, the median particle size Dv50 of the positive electrode active material may be determined by using a laser diffraction particle size analysis method. For example, the determination may be performed with reference to the standard GB/T 19077-2016 by using a laser particle size analyzer (e.g., Malvern Master Size 3000).

In some embodiments, in step (2), a carbon source is also added into the reaction vessel for grinding and mixing. Thus, the method can obtain a positive electrode active material having a surface coated with carbon. Optionally, the carbon source includes one or a combination of starch, sucrose, glucose, polyvinyl alcohol, polyethylene glycol and citric acid. A molar ratio of the amount of the carbon source to the amount of the lithium source is usually in a range of 0.1% to 5%. The grinding may be carried out by suitable grinding means known in the art, e.g., sanding.

The temperature and time of the spray drying in step (3) may be conventional temperature and time for spray drying in the art, e.g., at 100°C to 300°C for 1 to 6 h.

In some embodiments, the sintering is carried out in a temperature range of 600°C to 900°C for 6 to 14 h. By controlling the sintering temperature and time, the degree of crystallinity of the material can be controlled, and the dissolution of Mn and Mn-position doping element after cycling of the positive electrode active material is reduced, thereby improving the high-temperature stability and cycling performance of the battery. In some embodiments, the sintering is carried in a protective atmosphere, and the protective atmosphere may be nitrogen, an inert gas, hydrogen or a mixture thereof.

In some other embodiments, the positive electrode active material may only comprise a Mn-site doping element and a P-site doping element. The steps of providing the positive electrode active material may include: step (1): mixing and stirring a manganese source, a dopant of the A element, and an acid in a container to obtain an element-A doped manganese salt particle; step (2): mixing the A element -doped manganese salt particles with a lithium source, a phosphorus source, and a dopant of R element in a solvent to obtain a slurry, and sintering same under the protection of an inert gas atmosphere to obtain an inner core doped with elements A and R. In some optional embodiments, after the manganese source, the A element dopant and the acid react in a solvent to obtain a suspension of an A element -doped manganese salt, the suspension is filtered, dried and sanded to obtain A element -doped manganese salt particles with a particle size of 50-200 nm. In some optional embodiments, the slurry in step (2) is dried to obtain a powder, and the powder is then sintered to obtain a positive electrode active material doped with elements A and R.

In some embodiments, in step (1), the mixing is carried out at a temperature of 20-120°C, optionally 40-120°C; and/or in step (1), the stirring is carried out at 400-700 rpm for 1-9 h, optionally for 3-7 h. Optionally, the reaction temperature in the step (1) can be at about 30°C, about 50°C, about 60°C, about 70°C, about 80°C, about 90°C, about 100°C, about 110°C or about 120°C; the stirring in the step (1) is carried out for about 2 hours, about 3 hours, about 4 hours, about 5 hours, about 6 hours, about 7 hours, about 8 hours or about 9 hours; and optionally, the reaction temperature and stirring time in the step (1) may be within any range of any of the above-mentioned numerical values.

In some embodiments, in step (2), the mixing is carried out at a temperature of 20-120°C, optionally 40-120°C, for 1-12 h. Optionally, the reaction temperature in the step (2) may be about 30°C, about 50°C, about 60°C, about 70°C, about 80°C, about 90°C, about 100°C, about 110°C or about 120°C; the mixing in the step (2) is carried out for about 2 hours, about 3 hours, about 4 hours, about 5 hours, about 6 hours, about 7 hours, about 8 hours, about 9 hours, about 10 hours, about 11 hours or about 12 hours; optionally, the reaction temperature and mixing time in the step (2) may be within any range of any of the above-mentioned numerical values.

When the temperature and time during the preparation of the positive electrode active particles are within the above ranges, the prepared positive electrode active material prepared therefrom has fewer lattice defects, which is beneficial to inhibiting the dissolution of manganese and reducing the interfacial side reactions between the positive electrode active material and the electrolyte solution, thereby improving the cycling performance and safety performance of the secondary battery.

In some embodiments, optionally, during the preparation of dilute acid manganese particles doped with elements A and R, the pH of the solution is controlled to be 3.5-6; optionally, the pH of the solution is controlled to be 4-6; and even more optionally, the pH of the solution is controlled to be 4-5. It should be noted that the pH of the obtained mixture may be adjusted in the present application by a method commonly used in the art, for example by adding an acid or a base. In some embodiments, optionally, in step (2), the molar ratio of the manganese salt particle, the lithium source, and the phosphorus source is 1 : 0.5-2.1 : 0.5-2.1, and more optionally, the molar ratio of the A element -doped manganese salt particle, the lithium source, and the phosphorus source is about 1 : 1: 1.

In some embodiments, optionally, the sintering condition during the preparation of lithium manganese phosphate doped with element A and element R is: sintering is carried out at 600-950°C for 4-10 hours under an atmosphere of inert gas or a mixture of inert gas and hydrogen; optionally, the sintering may be performed at about 650°C, about 700°C, about 750°C, about 800°C, about 850°C or about 900°C for about 2 hours, about 3 hours, about 4 hours, about 5 hours, about 6 hours, about 7 hours, about 8 hours, about 9 hours or about 10 hours; Optionally, the sintering temperature and the sintering time may be in any range of any of the above-mentioned numerical values. During the preparation of the lithium manganese phosphate doped with element A and element R, if the sintering temperature is too low and the sintering time is too short, the crystallinity of the inner core of the material will be relatively low, which will affect the overall performance, and if the sintering temperature is too high, impurity phases are prone to appear in the inner core of the material, thereby affecting the overall performance; if the sintering time is too long, the inner core particles of the material will be grown to be relatively large, which will affect the capacity per gram, compacted density, rate performance, and the like. In some optional embodiments, optionally, the protective atmosphere is a mixed gas of 70-90 vol% nitrogen and 10-30 vol% hydrogen.

In some embodiments, with the particle having the above chemical composition being used as the inner core, the method further includes steps of forming a shell coating the inner core. Specifically, the steps of coating may include a step of forming a carbon coating layer, and specifically, a carbon source may also be added in the step of forming particles having a second doping element, followed by operations such as grinding and mixing. Optionally, the carbon source includes one or a combination of starch, sucrose, glucose, polyvinyl alcohol, polyethylene glycol and citric acid. A molar ratio of the amount of the carbon source to the amount of the lithium source is usually in a range of 0.1% to 5%. The grinding may be carried out by suitable grinding means known in the art, e.g., sanding.

Alternatively, the method further includes a step of forming the inorganic coating layer mentioned above. Parameters of the inorganic coating layer, such as the composition and the number thereof, have been explained in detail above and will not be repeated here.

For example, when the coating layers include a first coating layer and a second coating layer coating the first coating layer, wherein the first coating layer comprises a pyrophosphate of QP₂O₇ and a phosphate of XPO₄, and the second coating comprises carbon, the method comprises: providing a QP₂O₇ powder and an XPO₄ suspension containing a carbon source, adding the lithium manganese phosphate oxide and the QP₂O₇ powder into the XPO₄ suspension containing a carbon source, and mixing and sintering same to obtain a positive electrode active material.

Herein, the QP₂O₇ powder is a commercially available product, or optionally, the QP₂O₇ powder is provided by: adding a source of a Q element and a phosphorus source into a solvent to obtain a mixture, adjusting the pH of the mixture to be 4-6, and stirring same for complete reaction, followed by drying and sintering; and the QP₂O₇ powder is provided when at least one of the following conditions is satisfied: the drying is carried out at 100-300°C, optionally 150-200°C, for 4-8 h; and the sintering is carried out at 500-800°C, optionally 650-800°C, in an inert gas atmosphere for 4-10 h. Specifically, for example, for forming the coating layer, the sintering temperature is 500-800°C, and the sintering time is 4-10 hours.

In some embodiments, optionally, the XPO₄ suspension comprising a carbon source is commercially available, or optionally, prepared by the following method: uniformly mixing a lithium source, an X source, a phosphorus source, and a carbon source in a solvent, then heating the reaction mixture to 60-120°C, and maintaining the temperature for 2-8 hours to obtain an XPO₄ suspension containing a carbon source. Optionally, during the process of preparing the XPO₄ suspension containing a carbon source, the pH of the mixture is adjusted to 4-6.

In some embodiments, optionally, the primary particles of the two-layer coated lithium manganese phosphate positive electrode active material in the present application have a median particle size Dv50 of 50-2000 nm.

In some other embodiments, the coating layers include a first coating layer coating the LiMPO₄ compound, a second coating layer coating the first coating layer, and a third coating layer coating the second coating layer, wherein the first coating layer comprises a crystalline pyrophosphate of LiₐQP₂O₇ and/or Q_{b}(P₂O₇)_{c} where 0 ::::; a ::::; 2, 1 ::::; b ::::; 4, 1 ::::; c ::::; 6, the values of a, b, and c satisfy the condition of keeping the crystalline pyrophosphate of LiₐQP₂O₇ or Q_{b}(P₂O₇)_{c} electrically neutral, and Q in the crystalline pyrophosphates of LiₐQP₂O₇ and Q_{b}(P₂O₇)_{c} is each independently selected from one or more elements of Fe, Ni, Mg, Co, Cu, Zn, Ti, Ag, Zr, Nb, or Al; the second coating layer comprises crystalline phosphate XPO₄ in which X is one or more elements selected from Li, Fe, Ni, Mg, Co, Cu, Zn, Ti, Ag, Zr, Nb, or Al; and the third coating layer is carbon.

Specifically, in the first coating step, the pH of the solution in which the source of element Q, the phosphorus source, the acid, and optionally the lithium source are dissolved is controlled to be 3.5-6.5, the solution is then stirred and reacted for 1-5 h, and the solution is then heated to 50-120°C and maintained at this temperature for 2-10 h and/or sintered at 650-800°C for 2-6 hours. Optionally, in the first coating step, the reaction is performed completely. Optionally, in the first coating step, the reaction is performed for about 1.5 hours, about 2 hours, about 3 hours, about 4 hours, about 4.5 hours or about 5 hours. Optionally, in the first coating step, the reaction time of the reaction may be within any range of any of the above-mentioned numerical values. Optionally, in the first coating step, the pH of the solution is controlled to be 4-6. Optionally, in the first coating step, the solution is heated to about 55°C, about 60°C, about 70°C, about 80°C, about 90°C, about 100°C, about 110°C or about 120°C, and maintained at that temperature for about 2 hours, about 3 hours, about 4 hours, about 5 hours, about 6 hours, about 7 hours, about 8 hours, about 9 hours, or about 10 hours; optionally, in the first coating step, the heating temperature and maintaining time may be within any range of any of the above-mentioned numerical values. Optionally, in the first coating step, the sintering may be performed at about 650°C, about 700°C, about 750°C, or about 800°C for about 2 hours, about 3 hours, about 4 hours, about 5 hours or about 6 hours; Optionally, the sintering temperature and the sintering time may be in any range of any of the above-mentioned numerical values.

In the first coating step, by controlling the sintering temperature and time within the above ranges, the following situations can be avoided: when the sintering temperature is too low and the sintering time is too short in the first coating step, the crystallinity of the first coating layer maybe low, and there may be many amorphous substances, which may lead to a decline in the effect of inhibiting metal dissolution, thereby affecting the cycling performance and the high temperature storage performance of the secondary battery; if the sintering temperature is too high, impurity phases will appear in the first coating layer, which will also affect its effect of inhibiting the dissolution of metals, thereby affecting the performances, such as cycling and high-temperature storage performance, of the secondary battery; and if the sintering time is too long, the thickness of the first coating layer will increase, which will affect the migration of Li+, thereby affecting the performances, such as capacity per gram and rate performance, of the material.

In some embodiments, the second coating step, an X element source, a phosphorus source, and an acid are dissolved in a solvent, the solution is then stirred and reacted for 1-10 h, and the solution is then heated to 60-150°C and maintained at this temperature for 2-10 hours and/or sintered at 500-700°C for 6-10 hours. Optionally, in the second coating step, the reaction is performed completely. Optionally, in the second coating step, the reaction is carried out for about 1.5 hours, about 2 hours, about 3 hours, about 4 hours, about 4.5 hours, about 5 hours, about 6 hours, about 7 hours, about 8 hours, about 9 hours or about 10 hours. Optionally, in the second coating step, the reaction time of the reaction may be within any range of any of the above-mentioned numerical values. Optionally, in the second coating step, the solution is heated to about 65°C, about 70°C, about 80°C, about 90°C, about 100°C, about 110°C, about 120°C, about 130°C, about 140°C or about 150°C and maintained at that temperature for about 2 hours, about 3 hours, about 4 hours, about 5 hours, about 6 hours, about 7 hours, about 8 hours, about 9 hours or about 10 hours; optionally, in the second coating step, the heating temperature and maintaining time may be within any range of any of the above-mentioned numerical values.

In the step of providing the inner core material, the first coating step, and the second coating step, before sintering, i.e., during the preparation of the inner core material with chemical reactions and during the preparation of the first coating layer suspension and the second coating layer suspension, the following situations can be avoided by selecting the selected appropriate reaction temperature and reaction time as described above: if the reaction temperature is too low, the reaction cannot take place or the reaction rate is relatively low; if the temperature is too high, the product decomposes or forms an impurity phase; if the reaction time is too long, the particle size of the product is relatively large, which may prolong the time and increase the difficulty of the subsequent processes; and if the reaction time is too short, the reaction is incomplete and fewer products are obtained.

Optionally, in the second coating step, the sintering may be performed at about 550°C, about 600°C, or about 700°C for about 6 hours, about 7 hours, about 8 hours, about 9 hours or about 10 hours; Optionally, the sintering temperature and the sintering time may be in any range of any of the above-mentioned numerical values. In the second coating step, by controlling the sintering temperature and time within the above ranges, the following situations can be avoided: when the sintering temperature in the second coating step is too low and the sintering time is too short, the crystallinity of the second coating layer is low and there are more amorphous substances, leading to compromised performance in terms of reducing the surface reactivity of the material, thereby affecting the cycling and high-temperature storage performance, etc., of the secondary battery; if the sintering temperature is too high, impurity phases will appear in the second coating layer, which will also affect its effect of reducing the surface reactivity of the material, thereby affecting the performances, such as cycling and high-temperature storage performance, of the secondary battery; and if the sintering time is too long, the thickness of the second coating layer will increase, which will affect the voltage plateau of the material, thereby reducing the energy density of the material.

In some embodiments, in the third coating step, the sintering is carried out at 700-800°C for 6-10 h. Optionally, in the third coating step, the sintering may be performed at about 700°C, about 750°C, or about 800°C for about 6 hours, about 7 hours, about 8 hours, about 9 hours or about 10 hours; Optionally, the sintering temperature and the sintering time may be in any range of any of the above-mentioned numerical values. In the third coating step, by controlling the sintering temperature and time within the above ranges, the following situations can be avoided: when the sintering temperature in the third coating step is too low, the graphitization degree of the third coating layer decreases, which affects the electrical conductivity thereof, thereby affecting the capacity per gram of the material; if the sintering temperature is too high, the degree of graphitization of the third coating layer will be too high, which will affect the transport of Li+, thereby affecting the performances, such as capacity per gram, of the material; if the sintering time is too short, the coating layer will be too thin, which will affect the electrical conductivity of the coating layer, thereby affecting the capacity per gram of the material; and if the sintering time is too long, the coating layer will be too thick, which will affect the performances, such as compacted density, of the material.

In all the above first coating step, the second coating step and the third coating step, the drying is carried out at a drying temperature of 100°C to 200°C, optionally 110°C to 190°C, more optionally 120°C to 180°C, even more optionally 120°C to 170°C, and most optionally 120°C to 160°C, and the drying time is 3-9 h, optionally 4-8 h, more optionally 5-7 h, and most optionally about 6 h.

A third aspect of the present application provides a positive electrode plate, comprising a positive electrode current collector and a positive electrode film layer arranged on at least one surface of the positive electrode current collector, wherein the positive electrode film layer comprises the positive electrode active material of the first aspect of the present application or a positive electrode active material prepared by the method of the second aspect of the present application, and the content of the positive electrode active material in the positive electrode film layer is 10 wt% or more, based on the total weight of the positive electrode film layer.

In some embodiments, the content of the positive electrode active material in the positive electrode film layer is 95-99.5 wt%, based on the total weight of the positive electrode film layer.

A fourth aspect of the present application provides a secondary battery, comprising the positive electrode active material of the first aspect of the present application or the positive electrode active material prepared by the method of the second aspect of the present application or the positive electrode plate of the third aspect of the present application. Typically, a secondary battery comprises a positive electrode plate, a negative electrode plate, an electrolyte and a separator. During the charge/discharge of the battery, active ions are intercalated and de-intercalated back and forth between the positive electrode plate and the negative electrode plate. The electrolyte functions to conduct ions between the positive electrode plate and the negative electrode plate. The separator is arranged between the positive electrode plate and the negative electrode plate and mainly functions to prevent the positive and negative electrodes from short-circuiting while enabling ions to pass through. The secondary battery, battery module, battery pack, and power consuming device of the present application will be described below by appropriately referring to the accompanying drawings.

### [Positive electrode plate]

The positive electrode plate comprises a positive electrode current collector and a positive electrode film layer provided on at least one surface of the positive electrode current collector, the positive electrode film layer comprising the positive electrode active material of the first aspect of the present application.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared by dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

### [Negative electrode plate]

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver, and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. as an example, the negative electrode active material may comprise at least one of the following materials: synthetic graphite, natural graphite, soft carbon, hard carbon, a silicon-based material, a tin-based material and lithium titanate, etc. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally comprise a conductive agent. The conductive agent may be selected from at least one of superconductive carbon, acetylene black, carbon black, Ketjen black, carbon dot, carbon nanotube, graphene, and carbon nanofiber.

In some embodiments, the negative electrode film layer may optionally comprise other auxiliary agents, such as thickeners (e.g., sodium carboxymethyl cellulose (CMC-Na)), etc. In some embodiments, the negative electrode plate can be prepared by dispersing the above-mentioned components for preparing the negative electrode plate, such as a negative electrode active material, a conductive agent, a binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

### [Electrolyte]

The electrolyte functions to conduct ions between the positive electrode plate and the negative electrode plate. The type of the electrolyte is not specifically limited in the present application and can be selected as necessary. For example, the electrolyte may be in a liquid state, a gel state, or an all-solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally comprises an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene, and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

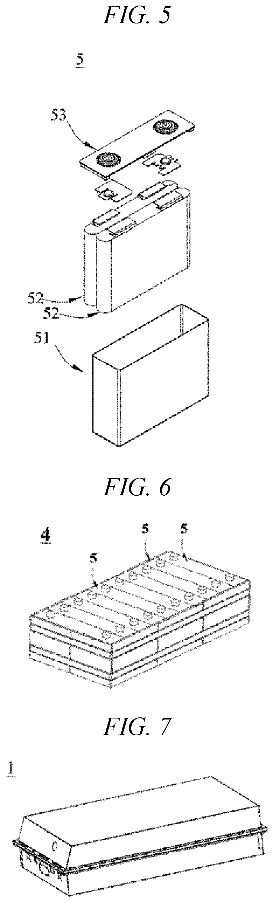

The shape of the secondary battery is not particularly limited in the present application and may be cylindrical, square or of any other shape. For example, Fig. 5 shows a secondary battery 5 with a square structure as an example.

In some embodiments, with reference to Fig. 6, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 7 shows a battery module 4 as an example. Referring to Fig. 7, in the battery module 4, a plurality of secondary batteries 5 may be sequentially arranged in the length direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

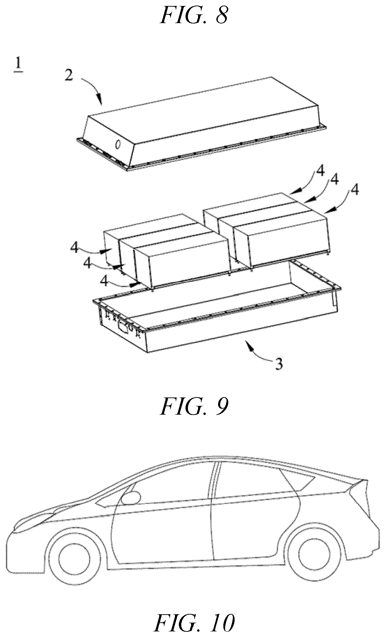

Figs. 8 and 9 show a battery pack 1 as an example. With reference to Fig. 8 and Fig. 9, the battery pack 1 may comprise a battery box and a plurality of battery modules 4 provided in the battery box. The battery box comprises an upper box body 2 and a lower box body 3, where the upper box body 2 may cover the lower box body 3 to form a closed space for accommodating the battery modules 4. The plurality of the battery modules 4 may be arranged in the battery box in any manner.

In addition, the present application further provides a power consuming device. The power consuming device comprises at least one of the secondary battery, the battery module, or the battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 10 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. The reagents or instruments used therein on which no manufacturers are specified are all commercially available conventional products.

### I. Methods for testing properties of positive electrode active material and battery performance

### 1. Method for measuring lattice change rate

In a constant-temperature environment at 25°C, a positive electrode active material sample is placed in an XRD (model: Bruker D8 Discover) and tested at 1°/min, and the test data are organized and analyzed; and with reference to the standard PDF card, lattice constants a0, b0, c0 and v0 at this moment are calculated (a0, b0 and c0 represent the lengths of a unit cell on all sides, and v0 represents the volume of the unit cell, which may be obtained directly from XRD refinement results).

The positive electrode active material sample is made into a button battery by the method for preparing a button battery in the examples above, and the button battery is charged at a small rate of 0.05 C until the current is reduced to 0.01C. The positive electrode plate in the button battery is then taken out and soaked in DMC for 8 h. Then, the positive electrode plate is dried and subjected to powder scraping, and particles with a particle size of less than 500 nm are screened out. Sampling is performed, and the lattice constant v1 of the sample is calculated in the same way as that for a fresh sample as described above, and (v0 - v1)/v0 × 100% is shown in Tables as the lattice change rate of the sample before and after complete lithium intercalation and de-intercalation.

### 2. Method for measuring Li/Mn antisite defect concentration

The XRD test results in the "Method for measuring lattice change rate" are compared with the PDF (Powder Diffraction File) card of a standard crystal, so as to obtain the Li/Mn antisite defect concentration. Specifically, the XRD results determined in the "Method for measuring lattice change rate" are imported into a general structure analysis system (GSAS) software, and refinement results are obtained automatically, including the occupancies of different atoms; and a Li/Mn antisite defect concentration is obtained by reading the refinement results.

### 3. Method for measuring surface oxygen valency

5 g of a positive electrode active material sample is made into a button battery according to the method for preparing a button battery in the examples above. The button battery is charged at a small rate of 0.05 C until the current is reduced to 0.01 C. The positive electrode plate in the button battery is then taken out and soaked in DMC for 8 h. Then, the positive electrode plate is dried and subjected to powder scraping, and particles with a particle size of less than 500 nm are screened out. The obtained particles are measured with an electron energy loss spectroscopy (EELS, instrument model: Talos F200S) to obtain an energy loss near-edge structure (ELNES), which reflected the density of states and the energy level distribution of an element. According to the density of states and the energy level distribution, the number of occupied electrons is calculated by integrating the data of the density of states in the valence band, and the surface oxygen valency after charging is then extrapolated.

### 4. Method for measuring compacted density

5 g of powder is put into a dedicated compaction mold (U.S. CARVER mold, model: 13 mm), and then the mold is placed on a compacted density instrument. A pressure of 3T is exerted, the thickness (after pressure relief) of the powder under the pressure is read from the instrument, and a compacted density is calculated through ρ = m/v. Herein, the area value used is a standard small image area of 1540.25 mm².

### 5. Method for measuring dissolution of Mn (and Fe doped at the Mn site) after cycling

After cycling at 45°C until the capacity is attenuated to 80%, the full battery is discharged to a cut-off voltage of 2.0 V at a rate of 0.1 C. Then, the battery is disassembled, the negative electrode plate is taken out, a round piece with 30 unit area (1540.25 mm²) is randomly taken from the negative electrode plate, and the inductively coupled plasma (ICP) emission spectroscopy is determined with Agilent ICP-OES730. The amount of Fe (if the Mn site of the positive electrode active material is doped with Fe) and Mn therein is calculated according to the ICP results, and thus the dissolution of Mn (and Fe doped at the Mn site) after cycling is calculated. The testing standard is in accordance with EPA-6010D-2014.

### 6. Method for measuring initial capacity per gram of button battery

At 2.5 to 4.3 V, a button battery is charged at 0.1 C to 4.3 V, then charged at a constant voltage of 4.3 V until the current is less than or equal to 0.05 mA, allowed to stand for 5 min, and then discharged at 0.1 C to 2.0 V; and the discharge capacity at this moment is the initial capacity per gram, marked as D0.

### 7. Method for measuring 3C charge constant current rate

In a constant-temperature environment at 25°C, a fresh full battery is allowed to stand for 5 min and discharged at 1/3 C to 2.5 V. The full battery is allowed to stand for 5 min, charged at 1/3 C to 4.3 V, and then charged at a constant voltage of 4.3 V until the current is less than or equal to 0.05 mA. The full battery is allowed to stand for 5 min, and the charge capacity at this moment is recorded as C0. The full battery is discharged at 1/3 C to 2.5 V, allowed to stand for 5 min, then charged at 3 C to 4.3 V, and allowed to stand for 5 min, and the charge capacity at this moment is recorded as C1. The 3C charge constant current rate is C1/C0 × 100%. A higher 3C charge constant current rate indicated a better rate performance of the battery.

### 8. Test of cycling performance of full battery at 45°C

In a constant-temperature environment at 45°C, at 2.5-4.3 V, a full battery is charged at 1 C to 4.3 V and then charged at a constant voltage of 4.3 V until the current is less than or equal to 0.05 mA. The full battery is allowed to stand for 5 min and then discharged at 1 C to 2.5 V, and the discharge capacity at this moment is recorded as D0. The charge/discharge cycle is repeated until the discharge capacity is reduced to 80% of D0. The number of cycles experienced by the battery at this time is recorded.

### 9. Expansion test of full battery at 60°C

At 60°C, a full battery with 100% SOC (State of Charge) is stored. Before, after and during the storage, the open-circuit voltage (OCV) and AC internal impedance (IMP) of a cell are measured for monitoring the SOC, and the volume of the cell is measured. Herein, the full battery is taken out after every 48 h of storage and allowed to stand for 1 h, then the open-circuit voltage (OCV) and the internal impedance (IMP) are measured, and the volume of the cell is measured by means of a displacement method after the full battery is cooled to room temperature. The drainage method specifically included that the gravity F₁ of a cell is measured separately using a balance with automatic unit conversion of on-board data, the cell is then completely placed in deionized water (with a density known to be 1 g/cm³), the gravity F₂ of the cell at this time is measured, the buoyancy force F_{buoyancy} on the cell is equal to F₁ - F₂, and the volume of the cell is calculated as V = (F₁ - F₂)/(ρ × g) according to the Archimedes' principle F_{buoyancy} = ρ × g × V_{displacement}.

From the test results of OCV and IMP, the battery of the example always maintained a SOC of 99% or more in the experimental process till the end of the storage.

After 30 days of storage, the volume of the cell is measured, and the percentage increase in cell volume after the storage relative to the cell volume before the storage is calculated.

In addition, residual capacity of the cell is measured. At 2.5-4.3 V, the full battery is charged at 1C to 4.3 V and then charged at a constant voltage of 4.3 V until the current is less than or equal to 0.05 mA. The full battery is allowed to stand for 5 min, and the charge capacity at this moment is recorded as the residual capacity of the cell.

### 10. Measurement of manganese and phosphorus elements in positive electrode active material

5 g of the positive electrode active material prepared above is dissolved in 100 ml of reverse aqua regia (concentrated hydrochloric acid : concentrated nitric acid = 1 : 3) (with the concentration of the concentrated hydrochloric acid being about 37%, and the concentration of the concentrated nitric acid being about 65%). The content of each element in the solution is tested by ICP, and then the content of the manganese element or phosphorus element is measured and converted (the amount of the manganese element or phosphorus element/the amount of the positive electrode active material * 100%) to obtain the weight percentage thereof.

### 11. Measurement of interplanar spacing and included angle

1 g of each positive electrode active material powder prepared above is placed in a 50 mL test tube, and 10 mL of ethanol with a mass fraction of 75% is injected into the test tube, then the mixture is fully stirred and dispersed for 30 min, then an appropriate amount of the solution is taken by using a clean disposable plastic straw and dripped on a 300-mesh copper mesh, and at this moment, some powder would remain on the copper mesh. The copper mesh and the sample are transferred to TEM (Talos F200s G2) sample chamber for a TEM test to obtain the original image thereof, and the original image is saved in a format (xx.dm3). The original image obtained from the above TEM test is opened in the Digital Micrograph software and subjected to Fourier transform (automatically completed by the software after a clicking operation) to obtain a diffraction pattern, and the distance from a diffraction spot to the center position in the diffraction pattern is measured to obtain the interplanar spacing, and the included angle is calculated according to Bragg's equation. The different materials in the coating layer could be identified by comparing the obtained interplanar spacing and corresponding included angle data with their standard values.

### 12. Measurement of coating layer thickness

The thickness of the coating layer is mainly measured as follows: a thin slice with a thickness of about 100 nm is cut from the middle of a single particle of the positive electrode active material prepared above by FIB, and then subjected to a TEM test to obtain the original image thereof, and the original image is saved in a format (xx.dm3).

The original image obtained from the above TEM test is opened in the Digital Micrograph software, the coating layer is identified with the lattice spacing and included angle information, and the thickness of the coating layer is measured.

The thickness is measured at three locations on the selected particle and the average value is taken.

### 13. Determination of molar ratio of SP2 form to SP3 form of carbon in third coating layer

This test is performed by Raman spectroscopy. The energy spectrum obtained from the Raman test is split to obtain Id/Ig, with Id being the peak intensity of SP3-form carbon, and Ig being the peak intensity of SP2-form carbon, thereby determining the molar ratio thereof. II. Preparation of positive electrode material and secondary battery

The sources of the raw materials involved in the examples of the present application are as follows:

| Name | Chemical formula | Manufacturer | Specification |
|---|---|---|---|
| Manganese carbonate | MnCO₃ | Shandong Xiya Chemical Industry Co., Ltd. | 1 Kg |
| Lithium carbonate | Li₂CO₃ | Shandong Xiya Chemical Industry Co., Ltd. | 1 Kg |
| Magnesium carbonate | MgCO₃ | Shandong Xiya Chemical Industry Co., Ltd. | 1 Kg |
| Zinc carbonate | ZnCO₃ | Wuhan Xinru Chemical Co., Ltd. | 25 Kg |
| Ferrous carbonate | FeCO₃ | Xi'an Lanzhiguang Fine Materials Co., Ltd. | 1 Kg |
| Nickel sulfate | NiCO₃ | Shandong Xiya Chemical Industry Co., Ltd. | 1 Kg |
| Titanium sulfate | Ti(SO₄)₂ | Shandong Xiya Chemical Industry Co., Ltd. | 1 Kg |
| Cobalt sulfate | CoSO₄ | Xiamen Zhixin Chemical Co., Ltd. | 500 g |
| Vanadium dichloride | VCl₂ | Shanghai Jinjinle Industrial Co., Ltd. | 1 Kg |
| Oxalic acid dihydrate | C₂H₂O₄^{•}2H₂O | Shanghai Jinjinle Industrial Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Sulfuric acid | H₂SO₄ | Shenzhen Hisian Biotechnology Co., Ltd. | Mass fraction 60% |
| Nitric acid | HNO₃ | Anhui Lingtian Fine Chemical Co., Ltd. | Mass fraction 60% |
| Metasilicic acid | H₂SiO₃ | Shanghai Yuanye Biotechnology Co., Ltd. | 100 g |
| Boronic acid | H₃BO₃ | Changzhou Qidi Chemical Co., Ltd. | 1 Kg |

### Example 1

### 1) Preparation of a positive electrode active material

**Preparation of doped manganese oxalate:** 1.3 mol of MnSO₄· H₂O and 0.7 mol of FeSO₄· H₂O were mixed thoroughly for 6 hours in a mixer. The mixture was transferred into a reaction kettle, and 10 L of deionized water and 2 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a Fe-doped manganese oxalate suspension. Then, the suspension was filtered, and the resultant filter cake was dried at 120°C and then ground, so as to obtain Fe-doped manganese oxalate particles with a median particle size Dv₅₀ of about 100 nm.

**Preparation of doped lithium manganese phosphate:** 1 mol of the manganese oxalate particles above, 0.497 mol of lithium carbonate, 0.001 mol of Mo(SO₄)₃, a 85% aqueous phosphoric acid solution containing 0.999 mol of phosphoric acid, 0.001 mol of H₄SiO₄, 0.0005 mol of NH₄HF₂, and 0.005 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated Li_{0.994}Mo_{0.001}Mn_{0.65}Fe_{0.35}P_{0.999}Si_{0.001}O_{3.999}F_{0.001}. The positive electrode active material may be tested for element content using inductively coupled plasma (ICP) emission spectroscopy.

### 2) Preparation of button battery

The above positive electrode active material, polyvinylidene fluoride (PVDF) and acetylene black at a weight ratio of 90 : 5 : 5 were added into N-methylpyrrolidone (NMP), and stirred in a drying room to make a slurry. An aluminum foil was coated with the slurry above, followed by drying and cold pressing to obtain a positive electrode plate. The coating amount was 0.2 g/cm², and the compacted density was 2.0 g/cm³.

A lithium plate as a negative electrode, a solution of 1 mol/L LiPF₆ in ethylene carbonate (EC) + diethyl carbonate (DEC) + dimethyl carbonate (DMC) in a volume ratio of 1 : 1 : : 1 as an electrolyte solution, and the positive electrode plate prepared above were assembled into a button battery in a button battery box.

### (3) Preparation of full battery

The above positive electrode active material was uniformly mixed with a conductive agent of acetylene black and a binder of polyvinylidene fluoride (PVDF) in a weight ratio of 92: 2.5 : 5.5 in an N-methylpyrrolidone solvent system, and the mixture was applied to an aluminum foil, followed by drying and cold pressing, so as to obtain a positive electrode plate. The coating amount was 0.4 g/cm², and the compacted density was 2.4 g/cm³.

The negative electrode active materials of synthetic graphite and hard carbon, a conductive agent of acetylene black, a binder of styrene butadiene rubber (SBR) and a thickener of sodium carboxymethylcellulose (CMC) were uniformly mixed in deionized water in a weight ratio of 90: 5 : 2 : 2 : 1, and the mixture was applied to a copper foil, followed by drying and cold pressing, so as to obtain a negative electrode plate. The coating amount was 0.2 g/cm², and the compacted density was 1.7 g/cm³.

With a polyethylene (PE) porous polymer film as a separator, the positive electrode plate, the separator and the negative electrode plate were stacked in sequence, such that the separator was located between the positive electrode and the negative electrode to play a role of isolation, and then the stack was wound to obtain a bare cell. The bare cell was placed in an outer package, the same electrolyte solution as one that was used when preparing the button battery above was injected, and the bare cell was packaged to obtain a full battery.

### Example 2

Except that in "1) Preparation of positive electrode active material", the amount of high-purity Li₂CO₃ was changed into 0.4885 mol, Mo(SO₄)₃ was replaced with MgSO₄, the amount of FeSO₄· H₂O was changed into 0.68 mol, 0.02 mol of Ti(SO₄)₂ was also added in the preparation of doped manganese oxalate, and H₄SiO₄ was replaced with HNOs, the rest were the same as example 1.

### Example 3

Except that in "1) Preparation of positive electrode active material", the amount of high-purity Li₂CO₃ was changed into 0.496 mol, Mo(SO₄)₃ was replaced with W(SO₄)₃, and H₄SiO₄ was replaced with H₂SO₄, the rest were the same as example 1.

### Example 4

Except that in "1) Preparation of positive electrode active material", the amount of high-purity Li₂CO₃ was changed into 0.4985 mol, 0.001 mol of Mo(SO₄)₃ was replaced with 0.0005 mol of Al₂(SO₄)₃, and NH₄HF₂ was replaced with NH₄HCl₂, the rest were the same as example 1.

### Example 5

Except that in "1) Preparation of positive electrode active material", 0.7 mol of FeSO₄ · H₂O was changed into 0.69 mol, 0.01 mol of VCl₂ was also added in the preparation of doped manganese oxalate, the amount of Li₂CO₃ was changed into 0.4965 mol, 0.001 mol of Mo(SO₄)₃ was replaced with 0.0005 mol of Nb₂(SO₄)₅, and H₄SiO₄ was replaced with H₂SO₄, the rest were the same as example 1.

### Example 6

Except that in "1) Preparation of positive electrode active material", the amount of FeSO₄· H₂O was changed into 0.68 mol, 0.01 mol of VCl₂ and 0.01 mol of MgSO₄ were also added in the preparation of doped manganese oxalate, the amount of Li₂CO₃ was changed into 0.4965 mol, 0.001 mol of Mo(SO₄)₃ was replaced with 0.0005 mol of Nb₂(SO₄)₅, and H₄SiO₄ was replaced with H₂SO₄, the rest were the same as example 1.

### Example 7

Except that in "1) Preparation of positive electrode active material", MgSO₄ was replaced with CoSO₄, the rest were the same as example 6.

### Example 8

Except that in "1) Preparation of positive electrode active material", MgSO₄ was replaced with NiSO₄, the rest were the same as example 6.

### Example 9

Except that in "1) Preparation of positive electrode active material", the amount of FeSO₄· H₂O was changed into 0.698 mol, 0.002 mol of Ti(SO₄)₂ was also added in the preparation of doped manganese oxalate, the amount of Li₂CO₃ was changed into 0.4955 mol, 0.001 mol of Mo(SO₄)₃ was replaced with 0.0005 mol of Nb₂(SO₄)₅, H₄SiO₄ was replaced with H₂SO₄, and NH₄HF₂ was changed into NH₄HCl₂, the rest were the same as example 1.

### Example 10

Except that in "1) Preparation of positive electrode active material", the amount of FeSO₄· H₂O was changed into 0.68 mol, 0.01 mol of VCl₂ and 0.01 mol of MgSO₄ were also added in the preparation of doped manganese oxalate, the amount of Li₂CO₃ was changed into 0.4975 mol, 0.001 mol of Mo(SO₄)₃ was replaced with 0.0005 mol of Nb₂(SO₄)₅, and NH₄HF₂ was replaced with NH₄HBr₂, the rest were the same as example 1.

### Example 11

Except that in "1) Preparation of positive electrode active material", the amount of FeSO₄· H₂O was changed into 0.69 mol, 0.01 mol of VCl₂ was also added in the preparation of doped manganese oxalate, the amount of Li₂CO₃ was changed into 0.499 mol, Mo(SO₄)₃ was replaced with MgSO₄, and NH₄HF₂ was replaced with NH₄HBr₂, the rest were the same as example 1.

### Example 12

Except that in "1) Preparation of positive electrode active material", the amount of MnSO₄· H₂O was changed into 1.36 mol, and the amount of FeSO₄· H₂O was changed into 0.6 mol, 0.04 mol of VCl₂ was also added in the preparation of doped manganese oxalate, the amount of Li₂CO₃ was changed into 0.4985 mol, Mo(SO₄)₃ was replaced by MgSO₄, and H₄SiO₄ was replaced by HNOs, the rest were the same as example 1.

### Example 13

Except that in "1) Preparation of positive electrode active material", the amount of MnSO₄· H₂O was changed into 1.16 mol, and the amount of FeSO₄· H₂O was changed into 0.8 mol, the rest were the same as example 12.

### Example 14

Except that in "1) Preparation of positive electrode active material", the amount of MnSO₄· H₂O was changed into 1.3 mol, and the amount of VCl₂ was changed into 0.1 mol, the rest were the same as example 12.

### Example 15

Except that in "1) Preparation of positive electrode active material", the amount of MnSO₄· H₂O was changed into 1.2 mol, 0.1 mol of VCl₂ was also added in the preparation of doped manganese oxalate, the amount of Li₂CO₃ was changed into 0.494 mol, 0.001 mol of Mo(SO₄)₃ was replaced with 0.005 mol of MgSO₄, and H₄SiO₄ was replaced with H₂SO₄, the rest were the same as example 1.

### Example 16

Except that in "1) Preparation of positive electrode active material", the amount of MnSO₄· H₂O was changed into 1.2 mol, 0.1 mol of VCl₂ was also added in the preparation of doped manganese oxalate, the amount of Li₂CO₃ was changed into 0.467 mol, 0.001 mol of Mo(SO₄)₃ was replaced with 0.005 mol of MgSO₄, 0.001 mol of H₄SiO₄ was replaced with 0.005 mol of H₂SO₄, and 1.175 mol of 85% phosphoric acid was replaced with 1.171 mol of 85% phosphoric acid, the rest were the same as example 1.

### Example 17

Except that in "1) Preparation of positive electrode active material", the amount of MnSO₄· H₂O was changed into 1.2 mol, 0.1 mol of VCl₂ was also added in the preparation of doped manganese oxalate, the amount of Li₂CO₃ was changed into 0.492 mol, 0.001 mol of Mo(SO₄)₃ was replaced with 0.005 mol of MgSO₄, H₄SiO₄ was replaced with H₂SO₄, and 0.0005 mol of NH₄HF₂ was changed into 0.0025 mol, the rest were the same as example 1.

### Example 18

Except that in "1) Preparation of positive electrode active material", the amount of FeSO₄· H₂O was changed into 0.5 mol, 0.1 mol of VCl₂ and 0.1 mol of CoSO₄ were also added in the preparation of doped manganese oxalate, the amount of Li₂CO₃ was changed into 0.492 mol, 0.001 mol of Mo(SO₄)₃ was replaced with 0.005 mol of MgSO₄, H₄SiO₄ was replaced with H₂SO₄, and 0.0005 mol of NH₄HF₂ was changed into 0.0025 mol, the rest were the same as example 1.

### Example 19

Except that in "1) Preparation of positive electrode active material", the amount of FeSO₄· H₂O was changed into 0.4 mol, and the amount of CoSO₄ was changed from 0.1 mol to 0.2 mol, the rest were the same as example 18.

### Example 20

Except that in "1) Preparation of positive electrode active material", the amount of MnSO₄· H₂O was changed into 1.5 mol, the amount of FeSO₄· H₂O was changed into 0.1 mol, and the amount of CoSO₄ was changed into 0.3 mol, the rest were the same as example 18.

### Example 21

Except that in "1) Preparation of positive electrode active material", 0.1 mol of CoSO₄ was replaced with 0.1 mol of NiSO₄, the rest were the same as example 18.

### Example 22

Except that in "1) Preparation of positive electrode active material", the amount of MnSO₄· H₂O was changed into 1.5 mol, the amount of FeSO₄· H₂O was changed into 0.2 mol, and 0.1 mol of CoSO₄ was replaced with 0.2 mol of NiSO₄, the rest were the same as example 18.

### Example 23

Except that in "1) Preparation of positive electrode active material", the amount of MnSO₄· H₂O was changed into 1.4 mol, the amount of FeSO₄· H₂O was changed into 0.3 mol, and the amount of CoSO₄ was changed into 0.2 mol, the rest were the same as example 18.

### Example 24

Except that in "1) Preparation of positive electrode active material", 1.3 mol of MnSO₄· H₂O was changed into 1.2 mol, 0.7 mol of FeSO₄· H₂O was changed into 0.5 mol, 0.1 mol of VCl₂ and 0.2 mol of CoSO₄ were also added in the preparation of doped manganese oxalate, the amount of Li₂CO₃ was changed into 0.497 mol, 0.001 mol of Mo(SO₄)₃ was replaced with 0.005 mol of MgSO₄, H₄SiO₄ was replaced with H₂SO₄, and the amount of NH₄HF₂ was changed from 0.0005 mol to 0.0025 mol, the rest were the same as example 1.

### Example 25

Except that in "1) Preparation of positive electrode active material", the amount of MnSO₄· H₂O was changed into 1.0 mol, the amount of FeSO₄· H₂O was changed into 0.7 mol, and the amount of CoSO₄ was changed into 0.2 mol, the rest were the same as example 18.

### Example 26

Except that in "1) Preparation of positive electrode active material", the amount of MnSO₄· H₂O was changed into 1.4 mol, the amount of FeSO₄ · H₂O was changed into 0.3 mol, 0.1 mol of VCl₂ and 0.2 mol of CoSO₄ were also added in the preparation of doped manganese oxalate, the amount of Li₂CO₃ was changed into 0.4825 mol, 0.001 mol of Mo(SO₄)₃ was replaced with 0.005 mol of MgSO₄, the amount of H₄SiO₄ was changed into 0.1 mol, the amount of phosphoric acid was changed into 0.9 mol, and the amount of NH₄HF₂ was changed into 0.04 mol, the rest were the same as example 1.

### Example 27

Except that in "1) Preparation of positive electrode active material", the amount of MnSO₄· H₂O was changed into 1.4 mol, the amount of FeSO₄ · H₂O was changed into 0.3 mol, 0.1 mol of VCl₂ and 0.2 mol of CoSO₄ were also added in the preparation of doped manganese oxalate, the amount of Li₂CO₃ was changed into 0.485 mol, 0.001 mol of Mo(SO₄)₃ was replaced with 0.005 mol of MgSO₄, the amount of H₄SiO₄ was changed into 0.08 mol, the amount of phosphoric acid was changed into 0.92 mol, and the amount of NH₄HF₂ was changed into 0.05 mol, the rest were the same as example 1.

### Comparative example 1

**Preparation of manganese oxalate:** 1 mol of MnSO₄ · H₂O was added into a reaction kettle, and 10 L of deionized water and 1 mol of oxalic acid dihydrate (in oxalic acid) were added. The reaction kettle was heated to 80°C, the mixture was stirred for 6 hours at a rotation speed of 600 rpm until the reaction was completed (no bubble was generated), so as to obtain a manganese oxalate suspension. Then, the suspension was filtered, and the resultant filter cake was dried at 120°C and then ground, so as to obtain manganese oxalate particles with a median particle size Dv₅₀ of 50-200 nm.

**Preparation of lithium manganese phosphate:** 1 mol of the manganese oxalate particles above, 0.5 mol of lithium carbonate, an 85% aqueous phosphoric acid solution containing 1 mol of phosphoric acid, and 0.005 mol of sucrose were added into 20 L of deionized water. The mixture was transferred into a sander and thoroughly ground and stirred for 10 hours to obtain a slurry. The slurry was transferred into a spray drying apparatus for spray-drying granulation, where the drying temperature was set at 250°C and the drying time was 4 h, so as to obtain particles. The above powder was sintered at 700°C for 10 hours in a protective atmosphere of nitrogen (90% by volume) + hydrogen (10% by volume), so as to obtain carbon-coated LiMnPO₄.

### Example 55

Except that in comparative example 1, 1 mol of MnSO₄· H₂O was replaced with 0.85 mol of MnSO₄· H₂O and 0.15 mol of FeSO₄· H₂O, which were added into a mixer and thoroughly mixed for 6 hours before adding into a reaction kettle, the rest were the same as comparative example 1.

### Example 56

Except that in "1) Preparation of positive electrode active material", the amount of MnSO₄· H₂O was changed into 1.9 mol, 0.7 mol of FeSO₄· H₂O was replaced with 0.1 mol of ZnSO₄, the amount of Li₂CO₃ was changed into 0.495 mol, 0.001 mol of Mo(SO₄)₃ was replaced with 0.005 mol of MgSO₄, the amount of phosphoric acid was changed into 1 mol, and no H₄SiO₄ and NH₄HF₂ was added, the rest were the same as example 1.

### Example 57

Except that in "1) Preparation of positive electrode active material", the amount of MnSO_{4·} H₂O was changed into 1.2 mol, the amount of FeSO₄· H₂O was changed into 0.8 mol, the amount of Li₂CO₃ was changed into 0.45 mol, 0.001 mol of Mo(SO₄)₃ was replaced with 0.005 mol of Nb₂(SO₄)₅, the amount of phosphoric acid was changed from 0.999 mol to 1 mol, the amount of NH₄HF₂ was changed from 0.0005 mol to 0.025 mol, and no H₄SiO₄ was added, the rest were the same as example 1.

### Example 58

Except that in "1) Preparation of positive electrode active material", the amount of MnSO₄· H₂O was changed into 1.4 mol, the amount of FeSO₄· H₂O was changed into 0.6 mol, the amount of Li₂CO₃ was changed into 0.38 mol, and 0.001 mol of Mo(SO₄)₃ was replaced with 0.12 mol of MgSO₄, the rest were the same as example 1.

### Example 59

Except that in "1) Preparation of positive electrode active material", the amount of MnSO₄· H₂O was changed into 0.8 mol, 0.7 mol of FeSO₄· H₂O was replaced with 1.2 mol of ZnSO₄, the amount of Li₂CO₃ was changed into 0.499 mol, and 0.001 mol of Mo(SO₄)₃ was replaced with 0.001 mol of MgSO₄, the rest were the same as example 1.

### Example 60

Except that in "1) Preparation of positive electrode active material", the amount of MnSO₄· H₂O was changed into 1.4 mol, the amount of FeSO₄· H₂O was changed into 0.6 mol, the amount of Li₂CO₃ was changed into 0.534 mol, 0.001 mol of Mo(SO₄)₃ was replaced with 0.001 mol of MgSO₄, the amount of phosphoric acid was changed into 0.88 mol, the amount of H₄SiO₄ was changed into 0.12 mol, and the amount of NH₄HF₂ was changed into 0.025 mol, the rest were the same as example 1.

### Example 61

Except that in "1) Preparation of positive electrode active material", the amount of MnSO₄· H₂O was changed into 1.2 mol, the amount of FeSO₄· H₂O was changed into 0.8 mol, the amount of Li₂CO₃ was changed into 0.474 mol, 0.001 mol of Mo(SO₄)₃ was replaced with 0.001 mol of MgSO₄, the amount of phosphoric acid was changed into 0.93 mol, the amount of H₄SiO₄ was changed into 0.07 mol, and the amount of NH₄HF₂ was changed into 0.06 mol, the rest were the same as example 1.

Table 1 shows the composition of the positive electrode active materials of examples 1-11 and 55-61 and comparative example 1.

Table 2 shows the performance data of the positive electrode active materials or button batteries or full batteries of examples 1-11 and 55-61 and comparative example 1 determined according to the above-mentioned performance test methods. Table 3 shows the composition of the positive electrode active materials of examples 12-27. Table 4 shows the performance data of the positive electrode active materials or button batteries or full batteries of examples 12-27 determined according to the above-mentioned performance test methods.

**Table 1 Composition of positive electrode active materials of examples 1-11 and 55-61 and comparative example 1**

| | Positive electrode active material |
|---|---|
| Comparative example 1 | LiMnPO₄ |
| Example 55 | LiMn_{0.85}Fe_{0.15}PO₄ |
| Example 56 | Li_{0.990}Mg_{0.005}Mn_{0.95}Zn_{0.05}PO₄ |
| Example 57 | Li_{0.90}Nb_{0.01}Mn_{0.6}Fe_{0.4}PO_{3.95}F_{0.05} |
| Example 58 | Li_{0.76}Mg_{0.12}Mn_{0.7}Fe_{0.3}P_{0.999}Si_{0.001}O_{3.999}F_{0.001} |
| Example 59 | Li_{0.998}Mg_{0.001}Mn_{0.4}Zn_{0.6}P_{0.999}Si_{0.001}O_{3.999}F_{0.001} |
| Example 60 | Li_{1.068}Mg_{0.001}Mn_{0.7}Fe_{0.3}P_{0.88}Si_{0.12}O_{3.95}F_{0.05} |
| Example 61 | Li_{0.948}Mg_{0.001}Mn_{0.6}Fe_{0.4}P_{0.93}Si_{0.07}O_{3.88}F_{0.12} |
| Example 1 | Li_{0.994}Mo_{0.001}Mn_{0.65}Fe_{0.35}P_{0.999}Si_{0.001}O_{3.999}F_{0.001} |
| Example 2 | Li_{0.977}Mg_{0.001}Mn_{0.65}Fe_{0.34}Ti_{0.01}P_{0.999}N_{0.001}O_{3.999}F_{0.001} |
| Example 3 | Li_{0.992}W_{0.001}Mn_{0.65}Fe_{0.35}P_{0.999}S_{0.001}O_{3.999}F_{0.001} |
| Example 4 | Li_{0.997}Al_{0.001}Mn_{0.65}Fe_{0.35}P_{0.999}Si_{0.001}O_{3.999}Cl_{0.001} |
| Example 5 | Li_{0.993}Nb_{0.001}Mn_{0.65}Fe_{0.345}V_{0.005}P_{0.999}S_{0.001}O_{3.999}F_{0.001} |
| Example 6 | Li_{0.993}Nb_{0.001}Mn_{0.65}Fe_{0.34}V_{0.005}Mg_{0.005}P_{0.999}S_{0.001}O_{3.999}F_{0.001} |
| Example 7 | Li_{0.993}Nb_{0.001}Mn_{0.65}Fe_{0.34}V_{0.005}Co_{0.005}P_{0.999}S_{0.001}O_{3.999}F_{0.001} |
| Example 8 | Li_{0.993}Nb_{0.001}Mn_{0.65}Fe_{0.34}V_{0.005}Ni_{0.005}P_{0.999}S_{0.001}O_{3.999}F_{0.001} |
| Example 9 | Li_{0.991}Nb_{0.001}Mn_{0.65}Fe_{0.349}Ti_{0.001}P_{0.999}S_{0.001}O_{3.999}Cl_{0.001} |
| Example 10 | Li_{0.995}Nb_{0.001}Mn_{0.65}Fe_{0.34}V_{0.005}Mg_{0.005}P_{0.999}Si_{0.001}O_{3.999}Br_{0.001} |
| Example 11 | Li_{0.998}Mg_{0.001}Mn_{0.65}Fe_{0.345}V_{0.005}P_{0.999}Si_{0.001}O_{3.999}Br_{0.001} |

**Table 2 Performance data of positive electrode active materials or button batteries or full batteries of examples 1-11 and 55-61 and comparative example 1 determined according to performance test methods above**

| | Latti ce chan ge rate (%) | Li/Mn antisit e defect concen tration (%) | Surfa ce oxyg en valen cy | Com pacte d densi ty (g/c m³) | Dissolut ion of Mn and Fe after cycling (ppm) | Initial capacity per gram of button battery (mAh/g) | 3C char ge const ant curre nt rate (%) | Number of cycles for capacity retention rate of 80% at 45°C | Expa nsion rate of cell when store d at 60°C (%) |
|---|---|---|---|---|---|---|---|---|---|
| Comparative example 1 | 11.4 | 5.2 | -1.55 | 1.7 | 2060 | 125.6 | 50.1 | 121 | 48.6 |
| Example 55 | 10.6 | 4.3 | -1.51 | 1.87 | 1510 | 126.4 | 50.4 | 129 | 37.3 |
| Example 56 | 10.8 | 3.6 | -1.64 | 1.88 | 1028 | 134.7 | 51.7 | 134 | 31.9 |
| Example 57 | 9.7 | 2.4 | -1.71 | 1.93 | 980 | 141.3 | 62.3 | 148 | 30.8 |
| Example 58 | 5.6 | 1.8 | -1.81 | 1.98 | 873 | 110.8 | 50.2 | 387 | 21.4 |
| Example 59 | 3.7 | 1.5 | -1.80 | 2.01 | 574 | 74.3 | 65.8 | 469 | 15.8 |
| Example 60 | 7.8 | 1.5 | -1.75 | 2.05 | 447 | 139.4 | 64.3 | 396 | 18.3 |
| Example 61 | 8.4 | 1.4 | -1.79 | 2.16 | 263 | 141.7 | 63.9 | 407 | 22.7 |
| Example 1 | 6.3 | 1.2 | -1.82 | 2.21 | 192 | 156.2 | 68.1 | 552 | 8.4 |
| Example 2 | 6.8 | 1.1 | -1.85 | 2.25 | 161 | 153.4 | 75.1 | 583 | 7.5 |
| Example 3 | 6.4 | 0.9 | -1.86 | 2.31 | 144 | 154.6 | 76.7 | 646 | 8.6 |
| Example 4 | 5.5 | 0.9 | -1.89 | 2.38 | 125 | 153.6 | 78.4 | 638 | 8.3 |
| Example 5 | 5.3 | 0.7 | -1.98 | 2.45 | 102 | 153.8 | 84.5 | 769 | 7.8 |
| Example 6 | 2.4 | 0.7 | -1.95 | 2.47 | 88 | 157.5 | 92.5 | 747 | 6.4 |
| Example 7 | 2.2 | 0.6 | -1.96 | 2.49 | 85 | 158.5 | 94.8 | 858 | 6.3 |
| Example 8 | 3.4 | 0.5 | -1.98 | 2.51 | 79 | 157.6 | 93.8 | 726 | 6.2 |
| Example 9 | 3.8 | 0.5 | -1.96 | 2.45 | 86 | 146.8 | 90.3 | 686 | 6.8 |
| Example 10 | 4.0 | 0.6 | -1.97 | 2.46 | 103 | 155.7 | 91.2 | 638 | 6.5 |
| Example 11 | 3.6 | 0.7 | -1.95 | 2.46 | 112 | 155.8 | 92.6 | 587 | 6.4 |

**Table 3 Composition of positive electrode active materials of examples 12-27**

| | Positive electrode active material | (1-y) : y | a : x |
|---|---|---|---|
| Example 12 | Li_{0.997}Mg_{0.001}Mn_{0.68}Fe_{0.3}V_{0.02}P_{0.999}N_{0.001}O_{3.999}F_{0.001} | 2.26 | 997 |
| Example 13 | Li_{0.997}Mg_{0.001}Mn_{0.58}Fe_{0.4}V_{0.02}P_{0.999}N_{0.001}O_{3.999}F_{0.001} | 1.45 | 997 |
| Example 14 | Li_{0.997}Mg_{0.001}Mn_{0.65}Fe_{0.3}V_{0.05}P_{0.999}N_{0.001}O_{3.999}F_{0.001} | 2.17 | 997 |
| Example 15 | Li_{0.988}Mg_{0.005}Mn_{0.6}Fe_{0.35}V_{0.05}P_{0.999}S_{0.001}O_{3.999}F_{0.001} | 1.71 | 197.6 |
| Example 16 | Li_{0.984}Mg_{0.005}Mn_{0.6}Fe_{0.35}V_{0.05}P_{0.995}S_{0.005}O_{3.999}F_{0.001} | 1.71 | 196.8 |
| Example 17 | Li_{0.984}Mg_{0.005}Mn_{0.6}Fe_{0.35}V_{0.05}P_{0.999}S_{0.001}O_{3.995}F_{0.005} | 1.71 | 196.8 |
| Example 18 | Li_{0.984}Mg_{0.005}Mn_{0.65}Fe₀.₂₅V₀.₀₅Co₀.₀₅P_{0.999}S₀.₀₀₁O₃.₉₉₅F_{0.005} | 2.60 | 196.8 |
| Example 19 | Li_{0.984}Mg_{0.005}Mn_{0.65}Fe_{0.20}V_{0.05}Co_{0.10}P_{0.999}S_{0.001}O_{3.995}F_{0.005} | 3.25 | 196.8 |
| Example 20 | Li_{0.984}Mg_{0.005}Mn_{0.75}Fe_{0.05}V_{0.05}Co_{0.15}P_{0.999}S_{0.001}O_{3.995}F_{0.005} | 15.0 | 196.8 |
| Example 21 | Li_{0.984}Mg_{0.005}Mn_{0.65}Fe_{0.25}V_{0.05}Ni_{0.05}P_{0.999}S_{0.001}O_{3.995}F_{0.005} | 2.60 | 196.8 |
| Example 22 | Li_{0.984}Mg_{0.005}Mn_{0.75}Fe_{0.10}V_{0.05}Ni_{0.10}P_{0.999}S_{0.001}O_{3.995}F_{0.005} | 7.50 | 196.8 |
| Example 23 | Li_{0.984}Mg_{0.005}Mn_{0.7}Fe_{0.15}V_{0.05}Co_{0.10}P_{0.999}S_{0.001}O_{3.995}F_{0.005} | 4.67 | 196.8 |
| Example 24 | Li_{0.984}Mg_{0.005}Mn_{0.6}Fe_{0.25}V_{0.05}Co_{0.10}P_{0.999}S_{0.001}O_{3.995}F_{0.005} | 2.40 | 196.8 |
| Example 25 | Li_{0.984}Mg_{0.005}Mn_{0.5}Fe_{0.35}V_{0.05}Co_{0.10}P_{0.999}S_{0.001}O_{3.995}F_{0.005} | 1.43 | 196.8 |
| Example 26 | Li_{1.01}Mg_{0.005}Mn_{0.7}Fe_{0.15}V_{0.05}Co_{0.10}P_{0.9}Si_{0.1}O_{3.92}F_{0.08} | 4.67 | 202 |
| Example 27 | Li_{0.97}Mg_{0.005}Mn_{0.7}Fe_{0.15}V_{0.05}CO_{0.10}P_{0.92}Si_{0.08}0_{3.9}F_{0.1} | 4.67 | 194 |

**Table 4 Performance data of positive electrode active materials or button batteries or full batteries of examples 12-27 determined according to performance test methods above**

| | Latti ce chan ge rate (%) | Li/Mn antisite defect concentr ation (%) | Surfa ce oxyg en valen cy | Compa cted density (g/cm³) | Dissolutio n of Mn and Fe after cycling (ppm) | Initial capacit y per gram of button battery (mAh/ g) | 3C charg e const ant curre nt rate (%) | Number of cycles for capacity retention rate of 80% at 45 °C | Expansi on rate of cell when stored at 60°C (%) |
|---|---|---|---|---|---|---|---|---|---|
| Examp le 12 | 7.4 | 0.5 | -1.96 | 2.45 | 92 | 153.3 | 97.2 | 948 | 6.7 |
| Examp le 13 | 7.6 | 0.4 | -1.98 | 2.48 | 83 | 157.1 | 85.1 | 953 | 7.8 |
| Examp le 14 | 7.8 | 0.6 | -1.95 | 2.47 | 87 | 155.4 | 85.2 | 1067 | 6.9 |
| Examp le 15 | 6.4 | 0.5 | -1.97 | 2.49 | 86 | 156.4 | 82.1 | 938 | 7.5 |
| Examp le 16 | 5.4 | 0.7 | -1.94 | 2.44 | 86 | 156.1 | 87.3 | 927 | 8.4 |
| Example 17 | 4.2 | 0.6 | -1.98 | 2.42 | 88 | 156.5 | 92.1 | 919 | 7.5 |
| Examp le 18 | 2.5 | 0.4 | -1.96 | 2.46 | 84 | 157.4 | 94.0 | 1057 | 6.4 |
| Examp le 19 | 2.4 | 0.4 | -1.97 | 2.47 | 84 | 156.8 | 94.4 | 1064 | 6.7 |
| Examp le 20 | 2.6 | 0.4 | -1.95 | 2.45 | 86 | 154.8 | 93.7 | 975 | 7.3 |
| Examp le 21 | 3.3 | 0.5 | -1.93 | 2.46 | 82 | 155.7 | 91.5 | 989 | 6.3 |
| Examp le 22 | 3.1 | 0.5 | -1.95 | 2.46 | 75 | 157.3 | 91.6 | 964 | 6.3 |
| Examp le 23 | 2.8 | 0.6 | -1.96 | 2.44 | 67 | 151.8 | 84.4 | 864 | 5.9 |
| Examp le 24 | 2.5 | 0.5 | -1.97 | 2.45 | 65 | 152.3 | 90.2 | 976 | 5.6 |
| Examp le 25 | 2.2 | 0.4 | -1.98 | 2.46 | 58 | 153.3 | 92.2 | 986 | 5.2 |
| Examp le 26 | 3.4 | 0.6 | -1.95 | 2.25 | 45 | 147.3 | 92.5 | 978 | 9.3 |
| Examp le 27 | 2.7 | 0.5 | -1.98 | 2.28 | 42 | 145.8 | 91.8 | 937 | 10.5 |

### Example 28-41

The positive electrode active materials, button batteries and full batteries were prepared in the same way as in example 1, except that the stirring rotation speed and temperature in the preparation of doped manganese oxalate, the time for grinding and stirring in a sander, and the sintering temperature and sintering time were changed, specifically as shown in Table 5 below.

Moreover, the performance data of the positive electrode active materials or button batteries or full batteries of examples 28-41 determined according to the above-mentioned performance test methods were shown in Table 6.

**Table 5 Stirring rotation speed and temperature in the preparation of doped manganese oxalate, time for grinding and stirring in a sander, and sintering temperature and sintering time in examples 28-41**

| | Stirring rotation speed (rpm) | Stirring temperature (°C) | Grinding time (h) | Sintering temperature (°C) | Sintering time (h) |
|---|---|---|---|---|---|
| Example 28 | 200 | 50 | 12 | 700 | 10 |
| Example 29 | 300 | 50 | 12 | 700 | 10 |
| Example 30 | 400 | 50 | 12 | 700 | 10 |
| Example 31 | 500 | 50 | 12 | 700 | 10 |
| Example 32 | 600 | 50 | 10 | 700 | 10 |
| Example 33 | 700 | 50 | 11 | 700 | 10 |
| Example 34 | 800 | 50 | 12 | 700 | 10 |
| Example 35 | 600 | 60 | 12 | 700 | 10 |
| Example 36 | 600 | 70 | 12 | 700 | 10 |
| Example 37 | 600 | 80 | 12 | 700 | 10 |
| Example 38 | 600 | 90 | 12 | 600 | 10 |
| Example 39 | 600 | 100 | 12 | 800 | 10 |
| Example 40 | 600 | 110 | 12 | 700 | 8 |
| Example 41 | 600 | 120 | 12 | 700 | 12 |

**Table 6 Performance data of positive electrode active materials or button batteries or full batteries of examples 28-41 determined according to performance test methods above**

| | Latti ce chan ge rate (%) | Li/Mn antisite defect concentrat ion | Surface oxygen valenc y | Compa cted density (g/cm³) | Dissoluti on of Mn and Fe after cycling (ppm) | Initial capaci ty per gram of button battery (mAh/ g) | 3C charge consta nt curren t rate (%) | Number of cycles for capacity retentio n rate of 80% at 45°C | Expans ion rate of cell when stored at 60°C (%) |
|---|---|---|---|---|---|---|---|---|---|
| Examp le 28 | 7.8 | 5.6 | -1.59 | 1.89 | 341 | 138.1 | 53.1 | 594 | 24.1 |
| Examp le 29 | 7.4 | 4.8 | -1.62 | 1.94 | 279 | 140.3 | 55.6 | 628 | 22.4 |
| Examp le 30 | 7.2 | 4.5 | -1.66 | 1.98 | 248 | 141.5 | 56.8 | 689 | 21.6 |
| Examp le 31 | 7.1 | 4.1 | -1.68 | 2.01 | 216 | 142.3 | 57.5 | 721 | 18.7 |
| Examp le 32 | 6.8 | 3.8 | -1.71 | 2.04 | 184 | 143.8 | 59.3 | 749 | 15.6 |
| Examp le 33 | 6.7 | 3.4 | -1.75 | 2.06 | 176 | 144.2 | 61.4 | 756 | 11.3 |
| Examp le 34 | 6.6 | 3.1 | -1.76 | 2.08 | 139 | 148.2 | 62.6 | 787 | 10.8 |
| Examp le 35 | 6.4 | 2.7 | -1.76 | 2.13 | 126 | 149.8 | 63.8 | 816 | 9.6 |
| Examp le 36 | 6.4 | 1.9 | -1.77 | 2.15 | 103 | 152.3 | 65.4 | 937 | 8.9 |
| Examp le 37 | 6.4 | 1.4 | -1.84 | 2.27 | 89 | 157.2 | 69.1 | 982 | 8.2 |
| Examp le 38 | 6.5 | 1.8 | -1.78 | 2.16 | 113 | 153.9 | 66.3 | 921 | 9.1 |
| Examp le 39 | 6.8 | 2.7 | -1.76 | 2.12 | 134 | 152.1 | 64.5 | 998 | 9.8 |
| Examp le 40 | 7.1 | 3.4 | -1.74 | 2.08 | 161 | 150.2 | 63.4 | 926 | 10.5 |
| Examp le 41 | 7.8 | 4.5 | -1.70 | 2.03 | 189 | 148.1 | 61.3 | 837 | 11.8 |

### Example 42-54

The positive electrode active materials, button batteries and full batteries were prepared in the same way as example 1, except that the lithium source, the manganese source, the phosphorus source, and the sources of doping elements at the Li, Mn, P and O sites were changed. See Table 7 below for details. The prepared positive electrode active materials all had the same composition as in example 1, namely, Li_{0.994}Mo_{0.001}Mn_{0.65}Fe_{0.35}P_{0.999}Si_{0.001}O_{3.999}F_{0.001}.

Moreover, the performance data of the positive electrode active materials or button batteries or full batteries of examples 42-54 that are determined according to the above-mentioned performance test methods were shown in Table 8.

**Table 7 Lithium source, manganese source, phosphorus source and sources of doping elements C, A, Rand D in examples 42-54**

| | Lithium source | Manganese source | Phosphorus source | Source of C | Source of A | Source of R | Source of D |
|---|---|---|---|---|---|---|---|
| Example 42 | LiOH | MnCO₃ | NH₄H₂PO₄ | Mo(NO₃)₆ | FeO | H₄SiO₄ | NH₄F |
| Example 43 | LiOH | MnO | NH₄H₂PO₄ | Mo(NO₃)₆ | FeO | H₄SiO₄ | NH₄F |
| Example 44 | LiOH | Mn₃O₄ | NH₄H₂PO₄ | Mo(NO₃)₆ | FeO | H₄SiO₄ | NH₄F |
| Example 45 | LiOH | Mn(NO₃)₂ | NH₄H₂PO₄ | Mo(NO₃)₆ | FeO | H₄SiO₄ | NH₄F |
| Example 46 | LiOH | MnO | NH₄H₂PO₄ | Mo(NO₃)₆ | FeCO₃ | H₄SiO₄ | NH₄F |
| Example 47 | LiOH | MnO | NH₄H₂PO₄ | Mo(NO₃)₆ | Fe(NO₃)₂ | H₄SiO₄ | NH₄F |
| Example 48 | LiOH | MnO | NH₄H₂PO₄ | Mo(NO₃)₆ | Fe₃O₄ | H₄SiO₄ | NH₄F |
| Example 49 | LiOH | MnO | NH₄H₂PO₄ | Mo(NO₃)₆ | FeC₂O₄ | H₄SiO₄ | NH₄F |
| Example 50 | LiOH | MnO | NH₄H₂PO₄ | Mo(NO₃)₆ | Fe | H₄SiO₄ | NH₄F |
| Example 51 | LiOH | MnO | NH₄H₂PO₄ | Mo(PO₄)₂ | FeO | H₄SiO₄ | NH₄F |
| Example 52 | LiOH | MnO | NH₄H₂PO₄ | Mo(C₂O₄)₃ | FeO | H₄SiO₄ | NH₄F |
| Example 53 | LiOH | MnO | NH₄H₂PO₄ | MoO₃ | FeO | H₄SiO₄ | NH₄F |
| Example 54 | LiOH | MnO | NH₄H₂PO₄ | Mo | FeO | H₄SiO₄ | NH₄F |

**Table 8 Performance data of positive electrode active materials or button batteries or full batteries of examples 42-54 determined according to performance test methods above**

| | Lattice change rate (%) | Li/Mn antisite defect concen tration | Surface oxygen valency | Compa cted density (g/cm³) | Dissoluti on of Mn and Fe after cycling (ppm) | Initial capacit y per gram of button battery (mAh/ g) | 3C charge consta nt curren t rate (%) | Number of cycles for capacity retentio n rate of 80% at 45°C | Expans ion rate of cell when stored at 60°C (%) |
|---|---|---|---|---|---|---|---|---|---|
| Examp le 42 | 6.5 | 2.8 | -1.80 | 2.19 | 95 | 155.7 | 67.3 | 519 | 10.3 |
| Examp le 43 | 6.7 | 2.6 | -1.81 | 2.18 | 88 | 156.1 | 67.6 | 525 | 9.8 |
| Examp le 44 | 6.8 | 2.7 | -1.83 | 2.20 | 91 | 155.5 | 67.5 | 522 | 10.1 |
| Examp le 45 | 6.7 | 2.6 | -1.82 | 2.17 | 85 | 155.9 | 67.4 | 517 | 9.5 |
| Examp le 46 | 6.4 | 2.5 | -1.83 | 2.18 | 134 | 150.9 | 61.4 | 501 | 11.6 |
| Examp le 47 | 6.1 | 2.1 | -1.81 | 2.21 | 114 | 152.8 | 63.7 | 518 | 10.8 |
| Examp le 48 | 6.6 | 1.8 | -1.79 | 2.23 | 105 | 154.3 | 65.4 | 538 | 9.2 |
| Examp le 49 | 6.4 | 1.4 | -1.85 | 2.22 | 95 | 156.6 | 68.4 | 572 | 8.7 |
| Examp le 50 | 7.5 | 3.4 | -1.75 | 2.08 | 115 | 149.5 | 58.3 | 426 | 9.6 |
| Examp le 51 | 6.5 | 1.5 | -1.83 | 2.21 | 95 | 155.8 | 67.5 | 531 | 8.8 |
| Examp le 52 | 6.8 | 1.7 | -1.81 | 2.23 | 101 | 154.6 | 66.9 | 518 | 7.4 |
| Examp le 53 | 6.6 | 1.6 | -1.82 | 2.24 | 118 | 155.3 | 67.2 | 508 | 7.9 |
| Examp le 54 | 8.7 | 2.4 | -1.79 | 2.17 | 129 | 152.3 | 65.4 | 483 | 11.2 |

It can be seen from Tables 2, 4, 6 and 8 above that, the positive electrode active materials of the examples of the present application all achieve a better effect than the comparative examples in one or even all terms of cycling performance, high-temperature stability, capacity per gram and compacted density.

Through comparison among examples 18-20 and 23-25, it can be seen that in the case of other elements being the same, when (1-y) : y is in a range of 1 to 4, the energy density and cycling performance of the secondary battery can be further improved.

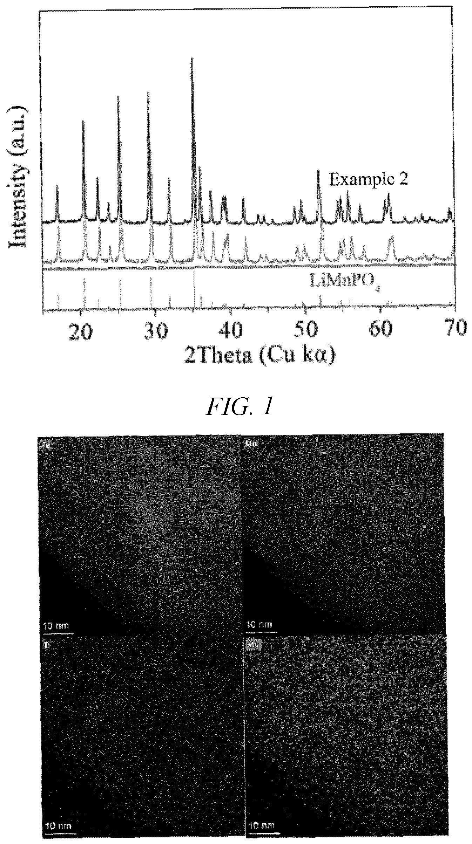

Fig. 1 shows XRD spectrum of undoped LiMnPO₄ and a positive electrode active material prepared in example 2. It can be seen from the figure that, the position of main characteristic peaks in the XRD spectra of the positive electrode active material of example 2 is consistent with that of the undoped LiMnPO₄, indicating that no impurity phase is introduced in the doping process, and the improvement in performance is mainly attributed to the doping with elements, rather than an impurity phase.

Fig. 2 shows an EDS image of a positive electrode active material prepared in example 2. Those in spotted distribution in the images are the doping elements. It can be seen from the figure that in the positive electrode active material of example 2, the elements are uniformly doped.

The examples, comparative examples and performance test analysis of a positive electrode active material having an inner core of Li₁₊ₓMn_{1-y}A_{y}P_{1-z}R_{z}O₄ and a three-layer coating structure with the coating layers including a pyrophosphate layer, a phosphate layer and a carbon layer were provided below:

### Example 62

### Step 1: Preparation of positive electrode active material

### Step S1: Preparation of Fe, Co, V and S co-doped manganese oxalate

689.6 g of manganese carbonate, 455.27 g of ferrous carbonate, 4.65 g of cobalt sulfate and 4.87 g of vanadium dichloride were mixed thoroughly for 6 h in a mixer. The resulting mixture was then transferred into a reaction kettle, 5 L of deionized water and 1260.6 g of oxalic acid dihydrate were added, heated to 80°C, then stirred thoroughly for 6 h at a rotation speed of 500 rpm and mixed uniformly until the reaction was completed (no bubble was generated), so as to obtain a Fe, Co, and V co-doped manganese oxalate suspension. Then, the suspension was filtered, dried at 120°C and then sanded, so as to obtain manganese oxalate particles with a particle size of 100 nm.

### Step S2: Preparation of inner core of Li_{0.997}Mn_{0.60}Fe_{0.393}V_{0.004}Co_{0.003}P_{0.997}S_{0.003}O₄

1793.1 g of manganese oxalate prepared in (1), 368.3 g of lithium carbonate, 1146.6 g of ammonium dihydrogen phosphate and 4.9 g of dilute sulfuric acid were added into 20 L of deionized water, fully stirred, and mixed uniformly and reacted at 80°C for 10 h to obtain a slurry. The slurry was transferred into a spray drying apparatus for spray-drying granulation, and dried at a temperature of 250°C to obtain a powder. In a protective atmosphere (90% of nitrogen and 10% of hydrogen), the powder was sintered in a roller kiln at 700°C for 4 h to obtain the above inner core material.

### Step S3: Preparation of first coating layer suspension

Preparation of a Li₂FeP₂O₇ solution: 7.4 g of lithium carbonate, 11.6 g of ferrous carbonate, 23.0 g of ammonium dihydrogen phosphate, and 12.6 g of oxalic acid dihydrate were dissolved in 500 mL of deionized water, with the pH being controlled to be 5, the mixture was then stirred and reacted at room temperature for 2 h to obtain a solution, and the solution was then heated to 80°C and held at the temperature for 4 h to obtain a first coating layer suspension.

### Step S4: Coating of first coating layer

1571.9 g of the doped lithium manganese phosphate inner core material obtained in step S2 was added into the first coating layer suspension (with the content of the coating material being 15.7 g) obtained in step S3, fully stirred and mixed for 6 h; and after uniformly mixing, the mixture was transferred in an oven at 120°C and dried for 6 h, and then sintered at 650°C for 6 h to obtain a pyrophosphate coated material.

### Step S5: Preparation of second coating layer suspension

3.7 g of lithium carbonate, 11.6 g of ferrous carbonate, 11.5 g of ammonium dihydrogen phosphate and 12.6 g of oxalic acid dihydrate were dissolved in 1500 mL of deionized water, then the mixture was stirred for reaction for 6 h to obtain a solution, and the solution was then heated to 120°C and held at the temperature for 6 h to obtain a second coating layer suspension.

### Step S6: Coating of second coating layer

1586.8 g of the pyrophosphate coated material obtained in step S4 was added into the second coating layer suspension (with the content of the coating material being 47.1 g) obtained in step S5, fully stirred and mixed for 6 h; and after uniformly mixing, the mixture was transferred in an oven at 120°C and dried for 6 h, and then sintered at 700°C for 8 h to obtain a two-layer coated material.

### Step S7: Preparation of aqueous solution of third coating layer

37.3 g of sucrose was dissolved in 500 g of deionized water, then stirred and fully dissolved to obtain an aqueous solution of sucrose.

### Step S8: Coating of third coating layer

1633.9 g of the two-layer coated material obtained in step S6 was added into the sucrose solution obtained in step S7, stirred and mixed for 6 h; and after uniformly mixing, the mixture was transferred into an oven at 150°C and dried for 6 h, and then sintered at 700°C for 10 h to obtain a three-layer coated material.

### Step 2: Preparation of positive electrode plate

The three-layer coated positive electrode active material prepared above, a conductive agent of acetylene black and a binder of polyvinylidene fluoride (PVDF) were added into N-methylpyrrolidone (NMP) in a weight ratio of 97.0 : 1.2 : 1.8, followed by stirring until uniform to obtain a positive electrode slurry. The positive electrode slurry was then uniformly applied to an aluminum foil at 0.280 g/1540.25 mm², followed by drying, cold pressing and slitting to obtain a positive electrode plate.

### Step 3: Preparation of negative electrode plate

Negative electrode active material of synthetic graphite and hard carbon, a conductive agent of acetylene black, a binder of styrene butadiene rubber (SBR) and a thickener of sodium carboxymethylcellulose (CMC) were dissolved in deionized water as a solvent in a weight ratio of 90 : 5 : 2 : 2 : 1, followed by stirring and mixing until uniform to prepare a negative electrode slurry. The negative electrode slurry was uniformly coated onto a negative electrode current collector of a copper foil at 0.117 g/1540.25 mm², followed by drying, cold pressing, and slitting to obtain a negative electrode plate.

### Step 4: Preparation of electrolyte solution

In an argon atmosphere glove box (H₂O < 0.1 ppm, and O₂ < 0.1 ppm), the organic solvent ethylene carbonate (EC)/ethyl methyl carbonate (EMC) was mixed uniformly by a volume ratio of 3/7, and 12.5% (on the basis of the weight of the ethylene carbonate/ethyl methyl carbonate solvent) by weight of LiPF₆ was dissolved in the above organic solvent and stirred uniformly to obtain the electrolyte solution.

### Step 5: Preparation of separator

A commercially available PP-PE copolymer microporous film having a thickness of 20 µm and an average pore size of 80 nm (Model 20, from Zhuogao Electronic Technology Co. Ltd.) was used.

### Step 6: Preparation of full battery

The positive electrode plate, separator, and negative electrode plate obtained above were stacked in sequence, such that the separator was located between the positive electrode and the negative electrode and played a role of isolation, and the stack was wound to obtain a bare cell. The bare cell was placed in an outer package, the above electrolyte solution was injected, and the bare cell was packaged to obtain a full battery.

### [Preparation of button battery]

The parameters were the same as example 1 and will not be repeated here.

### Examples 63-90 and 91-105 and comparative examples 2 and 3

The positive electrode active materials and batteries in examples 63 to 90 and 91-105 and comparative examples 2 and 3 were prepared in a manner similar to example 62, except for the preparation of the positive electrode active material as shown in Tables 9-14, where in comparative example 2 and examples 91, 93-99 and 101, no first layer was applied, so there were no steps S3 and S4; and in comparative examples 2 and examples 91-100, no second layer was coated, so there were no steps S5-S6. In all the examples and comparative examples of the present application, if not indicated, the first coating layer material and/or the second coating layer material used were crystalline by default.

**Table 9: raw materials for preparation of inner core**

| No. | Inner core | Raw materials used in step S1 | Raw materials used in step S2 |
|---|---|---|---|
| Comparative examples 2 and 3 | LiMnPO₄ | Manganese carbonate, 1149.3 g; water, 5 L; and oxalic acid dihydrate, 1260.6 g; | Manganese oxalate dihydrate obtained in step S1 (in C₂O₄Mn•2H₂O), 1789.6 g; lithium carbonate, 369.4 g; ammonium dihydrogen phosphate, 1150.1 g; and water, 20 L |
| Example 91 | LiMn_{0.60}Fe_{0.40}PO₄ | Manganese carbonate, 689.6 g; ferrous carbonate, 463.4 g; water, 5 L; and oxalic acid dihydrate, 1260.6 g; | Iron manganese oxalate dihydrate obtained in step S1 (in C₂O₄Mn_{0.60}Fe_{0.40}•2H₂O), 1793.2 g; lithium carbonate, 369.4 g; ammonium dihydrogen phosphate, 1150.1 g; and water, 20 L |
| Example 92 | LiMn_{0.80}Fe_{0.20}PO₄ | Manganese carbonate, 919.4 g; ferrous carbonate, 231.7 g; water, 5 L; and oxalic acid dihydrate, 1260.6 g; | Iron manganese oxalate dihydrate obtained in step S1 (in C₂O₄Mn_{0.80}Fe_{0.20}•2H₂O), 1791.4 g; lithium carbonate, 369.4 g; ammonium dihydrogen phosphate, 1150.1 g; and water, 20 L |
| Example 93 | LiMn_{0.70}Fe_{0.295}V_{0.0 05}PO₄ | Manganese carbonate, 804.5 g; ferrous carbonate, 341.8 g; vanadium dichloride, 6.1 g; water, 5 L; and oxalic acid dihydrate, 1260.6 g; | Vanadium iron manganese oxalate dihydrate obtained in step S1 (in C₂O₄Mn_{0.70}Fe_{0.295}V_{0.005}•2H₂O), 1792.0 g; lithium carbonate, 369.4 g; ammonium dihydrogen phosphate, 1150.1 g; and water, 20 L |
| Examples 94 and 103 | LiMn_{0.60}Fe_{0.395}Mg _{0.005}PO₄ | Manganese carbonate, 689.6 g; ferrous carbonate, 457.6 g; magnesium carbonate, 4.2 g; water, 5 L; and oxalic acid dihydrate, 1260.6 g; | Magnesium iron manganese oxalate dihydrate obtained in step S1 (in C₂O₄Mn_{0.60}Fe_{0.395}Mg_{0.005}•2H₂O ), 1791.6 g; lithium carbonate, 369.4 g; ammonium dihydrogen phosphate, 1150.1 g; and water, 20 L |
| Example 95 | LiMn_{0.60}Fe_{0.35}Ni_{0.0 5}PO₄ | Manganese carbonate, 689.6 g; ferrous carbonate, 405.4 g; nickel carbonate, 59.3 g; water, 5 L; and oxalic acid dihydrate, 1260.6 g; | Nickel manganese oxalate dihydrate obtained in step S1 (in C₂O₄Mn_{0.60}Fe_{0.35}Ni_{0.05}•2H₂O), 1794.6 g; lithium carbonate, 369.4 g; ammonium dihydrogen phosphate, 1150.1 g; and water, 20 L |
| Examples 96 and 98 | LiMn_{0.60}Fe_{0.395}V_{0.0 02}Ni_{0.003}PO₄ | Manganese carbonate, 689.6 g; ferrous carbonate, 457.6 g; vanadium dichloride, 2.4 g; nickel carbonate, 3.6 g; water, 5 L; and oxalic acid dihydrate, 1260.6 g; | Nickel vanadium iron manganese oxalate dihydrate obtained in step S1 (in C₂O₄Mn_{0.60}Fe_{0.395}V_{0.003}Ni_{0.003}•2 H₂O), 1793.2 g; lithium carbonate, 369.4 g; ammonium dihydrogen phosphate, 1150.1 g; and water, 20 L |
| Example 97 | LiMn_{0.60}Fe_{0.395}V_{0.0 02}Mg_{0.003}PO₄ | Manganese carbonate, 689.6 g; ferrous carbonate, 457.6 g; vanadium dichloride, 2.4 g; magnesium carbonate, 2.53 g; water, 5 L; and oxalic acid dihydrate, 1260.6 g; | Magnesium vanadium iron manganese oxalate dihydrate obtained in step S1 (in C₂O₄Mn_{0.60}Fe_{0.395}V_{0.002}Mg_{0.003}• 2H₂O), 1792.1 g; lithium carbonate, 369.4 g; ammonium dihydrogen phosphate, 1150.1 g; and water, 20 L |
| Examples 99-101, 104-105 and 62-71 | Li_{0.997}Mn_{0.60}Fe_{0.393} V_{0.004}Co_{0.003}P_{0.997}S _{0.003}O₄ | Manganese carbonate, 689.6 g; ferrous carbonate, 455.3 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.060}Fe_{0.393}V_{0.004}Co_{0.003}• 2H₂O), 1793.1 g; lithium carbonate, 368.3 g; ammonium dihydrogen phosphate, 1146.6 g; dilute sulfuric acid, 4.9 g; and water, 20 L |
| Example 102 | Li_{1.2}MnP_{0.8}Si_{0.2}O₄ | Manganese carbonate, 1149.3 g; water, 5 L; and oxalic acid dihydrate, 1260.6 g; | Manganese oxalate dihydrate obtained in step S1 (in C₂O₄Mn•2H₂O), 1789.6 g; lithium carbonate, 443.3 g; ammonium dihydrogen phosphate, 920.1 g; metasilicic acid, 156.2 g; and water, 20 L |
| Example 72 | Li_{1.001}Mn_{0.60}Fe_{0.393} V_{0.004}Co_{0.003}P_{0.999}S i_{0.001}O₄ | Manganese carbonate, 689.6 g; ferrous carbonate, 455.3 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.060}Fe_{0.393}V_{0.004}Co_{0.003}• 2H₂O), 1793.1 g; lithium carbonate, 369.8 g; ammonium dihydrogen phosphate, 1148.9 g; metasilicic acid, 0.8 g; and water, 20 L |
| Example 73 | LiMn_{0.60}Fe_{0.393}V_{0.0 04}Co_{0.003}P_{0.998}N_{0.002} O₄ | Manganese carbonate, 689.6 g; ferrous carbonate, 455.3 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.060}Fe_{0.393}V_{0.004}Co_{0.003}• 2H₂O), 1793.1 g; lithium carbonate, 369.4 g; ammonium dihydrogen phosphate, 1147.8 g; dilute nitric acid, 2.7 g; and water, 20 L |
| Example 74 | Li_{0.995}Mn_{0.65}Fe_{0.341} V_{0.004}Co_{0.005}P_{0.995}S _{0.005}O₄ | Manganese carbonate, 747.1 g; ferrous carbonate, 395.1 g; cobalt sulfate, 7.8 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.65}Fe_{0.341}V_{0.004}Co_{0.005}• 2H₂O), 1792.7 g; lithium carbonate, 367.6 g; ammonium dihydrogen phosphate, 1144.3 g; dilute sulfuric acid, 8.2 g; and water, 20 L |
| Example 75 | Li_{1.002}Mn_{0.70}Fe_{0.293} V_{0.004}Co_{0.003}P_{0.998}S i_{0.002}O₄ | Manganese carbonate, 804.6 g; ferrous carbonate, 339.5 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.70}Fe_{0.293}V_{0.004}Co_{0.003}• 2H₂O), 1792.2 g; lithium carbonate, 370.2 g; 1147.8; metasilicic acid, 1.6 g; and water, 20 L |
| Examples 76 and 78 | LiMn_{0.60}Fe_{0.393} V_{0.0 04}Co_{0.003}P_{0.999}N_{0.001} O₄ | Manganese carbonate, 689.6 g; ferrous carbonate, 455.3 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.60}Fe_{0.393} V_{0.004}Co_{0.003} • 2H₂O), 1793.1 g; lithium carbonate, 369.4 g; ammonium dihydrogen phosphate, 1148.9 g; dilute nitric acid, 1.4 g; and water, 20 L |
| Example 77 | Li_{0.997}Mn_{0.60}Fe_{0.393} V_{0.004}Co_{0.003}P_{0.997}S _{0.003}O₄ | Manganese carbonate, 689.6 g; ferrous carbonate, 455.3 g; cobalt sulfate, 4.7 g; vanadium dichloride, 4.9 g; water, 5 L; and oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}• 2H₂O), 1793.1 g; lithium carbonate, 368.7 g; ammonium dihydrogen phosphate, 1146.6 g; dilute sulfuric acid, 4.9 g; and water, 20 L |
| Example 79 | LiMn_{0.60}Fe_{0.393} V_{0.0 04}Mg_{0.003}P_{0.995}N_{0.00} 504 | Manganese carbonate, 689.6 g; ferrous carbonate, 455.3 g; magnesium carbonate, 2.5 g; vanadium dichloride, 4.9 g; water, 5 L; and oxalic acid dihydrate, 1260.6 g; | Magnesium vanadium iron manganese oxalate dihydrate obtained in step S1 (in C₂O₄Mn_{0.60}Fe_{0.393} V_{0.004}Mg_{0.003}• 2H₂O), 1791.1 g; lithium carbonate, 369.4 g; ammonium dihydrogen phosphate, 1144.3 g; dilute nitric acid, 7.0 g; and water, 20 L |
| Example 80 | Li_{0.999}Mn_{0.60}Fe_{0.393} V_{0.004}Mg_{0.003}P_{0.999} S_{0.001}O₄ | Manganese carbonate, 689.6 g; ferrous carbonate, 455.3 g; magnesium carbonate, 2.5 g; vanadium dichloride, 4.9 g; water, 5 L; and oxalic acid dihydrate, 1260.6 g; | Magnesium vanadium iron manganese oxalate dihydrate obtained in step S1 (in C₂O₄Mn_{0.60}Fe_{0.393} V_{0.004}Mg_{0.003} • 2H₂O), 1791.1 g; lithium carbonate, 369.0 g; ammonium dihydrogen phosphate, 1148.9 g; dilute sulfuric acid, 1.6 g; and water, 20 L |
| Example 81 | Li_{0.998}Mn_{0.60}Fe_{0.393} V_{0.004}Ni_{0.003}P_{0.998}S _{0.002}O₄ | Manganese carbonate, 689.6 g; ferrous carbonate, 455.3 g; nickel carbonate, 3.6 g; vanadium dichloride, 4.9 g; water, 5 L; and oxalic acid dihydrate, 1260.6 g; | Nickel vanadium iron manganese oxalate dihydrate obtained in step S1 (in C₂O₄Mn_{0.60}Fe_{0.393} V_{0.004}Ni_{0.003} •2 H₂O), 1792.2 g; lithium carbonate, 368.7 g; ammonium dihydrogen phosphate, 1147.8 g; dilute sulfuric acid, 3.2 g; and water, 20 L |
| Example 82-85 | Li_{1.001}Mn_{0.60}Fe_{0.393} V_{0.004}Ni_{0.003}P_{0.999}S i_{0.001}O₄ | Manganese carbonate, 689.6 g; ferrous carbonate, 455.3 g; nickel carbonate, 3.6 g; vanadium dichloride, 4.9 g; water, 5 L; and oxalic acid dihydrate, 1260.6 g; | Nickel vanadium iron manganese oxalate dihydrate obtained in step S1 (in C₂O₄Mn_{0.60}Fe_{0.393} V_{0.004}Ni_{0.003}•2 H₂O), 1793.1 g; lithium carbonate, 369.8 g; ammonium dihydrogen phosphate, 1148.9 g; metasilicic acid, 0.8 g; and water, 20 L |
| Example 86 | Li_{1.001}Mn_{0.50}Fe_{0.493} V_{0.004}Ni_{0.003}P_{0.999}S i_{0.001}O₄ | Manganese carbonate, 574.7 g; ferrous carbonate, 571.2 g; nickel carbonate, 3.6 g; vanadium dichloride, 4.9 g; water, 5 L; and oxalic acid dihydrate, 1260.6 g; | Nickel vanadium iron manganese oxalate dihydrate obtained in step S1 (in C₂O₄Mn_{0.50}Fe_{0.493} V_{0.004}Ni_{0.003}•2 H₂O), 1794.0 g; lithium carbonate, 369.8 g; ammonium dihydrogen phosphate, 1148.9 g; metasilicic acid, 0.8 g; and water, 20 L |
| Example 87 | Li_{1.001}Mn_{0.999}Fe_{0.00 1}P_{0.999}Si_{0.001}O₄ | Manganese carbonate, 1148.2 g; ferrous carbonate, 1.2 g; water, 5 L; and oxalic acid dihydrate, 1260.6 g; | Iron manganese oxalate dihydrate obtained in step S1 (in C₂O₄Mn_{0.999}Fe_{0.001}•2H₂O), 1789.6 g; lithium carbonate, 369.8 g; ammonium dihydrogen phosphate, 1148.9 g; metasilicic acid, 0.8 g; and water, 20 L |
| Example 88 | LiMn_{0.60}Fe_{0.393} V_{0.0 04}Ni_{0.003}P_{0.9}N_{0.100}O ₄ | Manganese carbonate, 689.6 g; ferrous carbonate, 455.3 g; nickel carbonate, 3.6 g; vanadium dichloride, 4.9 g; water, 5 L; and oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2 H₂O), 1793.1 g; lithium carbonate, 369.4 g; ammonium dihydrogen phosphate, 1035.1 g; dilute nitric acid, 140.0 g; and water, 20 L |
| Example 89 | Li_{1.001}Mn_{0.40}Fe_{0.593} V_{0.004}Ni_{0.003}P_{0.999}S i_{0.001}O₄ | Manganese carbonate, 459.7 g; ferrous carbonate, 686.9 g; vanadium dichloride, 4.8 g; nickel carbonate, 3.6 g; water, 5 L; and oxalic acid dihydrate, 1260.6 g; | Nickel vanadium iron manganese oxalate dihydrate obtained in step S1 (in C₂O₄Mn_{0.40}Fe_{0.593} V_{0.004}Ni_{0.003}•2 H₂O), 1794.9 g; lithium carbonate, 369.8 g; ammonium dihydrogen phosphate, 1148.9 g; metasilicic acid, 0.8 g; and water, 20 L |
| Example 90 | Li_{1.001}Mn_{0.40}Fe_{0.393} V_{0.204}Ni_{0.003}P_{0.999}S i_{0.001}O₄ | Manganese carbonate, 459.7 g; ferrous carbonate, 455.2 g; vanadium dichloride, 248.6 g; nickel carbonate, 3.6 g; water, 5 L; and oxalic acid dihydrate, 1260.6 g; | Nickel vanadium iron manganese oxalate dihydrate obtained in step S1 (in C₂O₄Mn_{0.40}Fe_{0.393} V_{0.204}Ni_{0.003}•2 H₂O), 1785.1 g; lithium carbonate, 369.8 g; ammonium dihydrogen phosphate, 1148.9 g; metasilicic acid, 0.8 g; and water, 20 L |

**Table 10: Preparation of first coating layer suspension (step S3)**

| Example No. | Coating material of first coating layer | Preparation of first coating layer suspension |
|---|---|---|
| Examples 92 and 77 | Amorphous Li₂FeP₂O₇ | 7.4 g of lithium carbonate; 11.6 g of ferrous carbonate; 23.0 g of ammonium dihydrogen phosphate; and 12.6 g of oxalic acid dihydrate; controlling the pH to be 5 |
| Example 100, comparative example 3, examples 103 and 105, and examples 62-75, 80 and 82-90 | Crystalline Li₂FeP₂O₇ | 7.4 g of lithium carbonate; 11.6 g of ferrous carbonate; 23.0 g of ammonium dihydrogen phosphate; and 12.6 g of oxalic acid dihydrate; controlling the pH to be 5 |
| Examples 76 and 77 | Crystalline Al₄(P₂O₇)₃ | 53.3 g of aluminum chloride; 34.5 g of ammonium dihydrogen phosphate; and 18.9 g of oxalic acid dihydrate; controlling the pH to be 4 |
| Examples 78 and 79 | Crystalline Li₂NiP₂O₇ | 7.4 g of lithium carbonate; 11.9 g of nickel carbonate; 23.0 g of ammonium dihydrogen phosphate; and 12.6 g of oxalic acid dihydrate; controlling the pH to be 5 |

**Table 11: Coating of first coating layer (step S4)**

| No. | Coating material of first coating layer and amount thereof (based on weight of inner core) | Amount of inner core added in step S4 | Step S4: Coating of first coating layer | | | | |
|---|---|---|---|---|---|---|---|
| | | | Amount of correspondi ng coating material in first coating layer suspension | Mixin g time (h) | Drying temperat ure (°C) | Sinte ring temp eratu re (°C) | Sinte ring time (h) |
| Example 92 | 2% of amorphous Li₂FeP₂O₇ | 1570.4 g | 31.4 g | 6 | 120 | 500 | 4 |
| Example 100 | 1% of crystalline Li₂FeP₂O₇ | 1571.1 g | 15.7 g | 6 | 120 | 650 | 6 |
| Comparative example 3 | 2% of crystalline Li₂FeP₂O₇ | 1568.5 g | 31.4 g | 6 | 120 | 650 | 6 |
| Example 102 | 2% of crystalline Li₂FeP₂O₇ | 1562.8 g | 31.2 g | 6 | 120 | 650 | 6 |
| Example 103 | 2% of crystalline Li₂FeP₂O₇ | 1570.6 g | 31.4 g | 6 | 120 | 650 | 6 |
| Example 104 | 2% of amorphous Li₂FeP₂O₇ | 1571.1 g | 31.4 g | 6 | 120 | 500 | 4 |
| Example 105 | 2% of crystalline Li₂FeP₂O₇ | 1571.1 g | 31.4 g | 6 | 120 | 650 | 6 |
| Examples 62-65 and 69-71 | 1% Li₂FeP₂O₇ | 1571.9g | 15.7 g | 6 | 120 | 650 | 6 |
| Example 66 | 2% Li₂FeP₂O₇ | 1571.9g | 31.4 g | 6 | 120 | 650 | 6 |
| Example 67 | 3% Li₂FeP₂O₇ | 1571.1 g | 47.1 g | 6 | 120 | 650 | 6 |
| Example 68 | 5% Li₂FeP₂O₇ | 1571.9 g | 78.6 g | 6 | 120 | 650 | 6 |
| Example 72 | 1% Li₂FeP₂O₇ | 1572.1g | 15.7 g | 6 | 120 | 650 | 6 |
| Example 73 | 1% Li₂FeP₂O₇ | 1571.7 g | 15.7 g | 6 | 120 | 650 | 6 |
| Example 74 | 2% Li₂FeP₂O₇ | 1571.4 g | 31.4 g | 6 | 120 | 650 | 6 |
| Example 75 | 2.5% Li₂FeP₂O₇ | 1571.9 g | 39.3 g | 6 | 120 | 650 | 6 |
| Example 76 | 2% Al₄(P₂O₇)₃ | 1571.9g | 31.4 g | 6 | 120 | 680 | 8 |
| Example 77 | 3% Al₄(P₂O₇)₃ | 1571.9 g | 47.2 g | 6 | 120 | 680 | 8 |
| Example 78 | 1.5% Li₂NiP₂O₇ | 1571.9 g | 23.6 g | 6 | 120 | 630 | 6 |
| Example 79 | 1% Li₂NiP₂O₇ | 1570.1 g | 15.7 g | 6 | 120 | 630 | 6 |
| Example 80 | 2% Li₂FeP₂O₇ | 1571.0 g | 31.4 g | 6 | 120 | 650 | 6 |
| Example 81 | 1% Li₂NiP₂O₇ | 1571.9g | 15.7 g | 6 | 120 | 630 | 6 |
| Examples 82, 84 and 85 | 2% Li₂FeP₂O₇ | 1572.1g | 31.4 g | 6 | 120 | 650 | 6 |
| Example 83 | 5.50% Li₂FeP₂O₇ | 1572.1g | 86.5 g | 6 | 120 | 650 | 6 |
| Example 86 | 1% Li₂FeP₂O₇ | 1573.0 g | 15.7 g | 6 | 120 | 650 | 6 |
| Example 87 | 1% Li₂FeP₂O₇ | 1568.6 g | 15.7 g | 6 | 120 | 650 | 6 |
| Example 88 | 1% Li₂FeP₂O₇ | 1569.2 g | 15.7 g | 6 | 120 | 650 | 6 |
| Example 89 | 2% of crystalline Li₂FeP₂O₇ | 1573.9 g | 31.4 g | 6 | 120 | 650 | 6 |
| Example 90 | 2% of crystalline Li₂FeP₂O₇ | 1564.1 g | 31.2 g | 6 | 120 | 650 | 6 |

**Table 12: Preparation of second coating layer suspension (step S5)**

| Example No. | Second coating layer material | Step S5: Preparation of second coating layer suspension |
|---|---|---|
| Example 101 and examples 62-65, 79-80 and 86-88 | Crystalline LiFePO₄ | 3.7g of lithium carbonate; 11.6 g of ferrous carbonate; 11.5g of ammonium dihydrogen phosphate; and 12.6 g of oxalic acid dihydrate |
| Comparative example 3, examples 102-104, and examples 76, 78-81,89 and 90 | Crystalline LiCoPO₄ | 3.7g of lithium carbonate; 15.5 g of cobalt sulfate; 11.5g of ammonium dihydrogen phosphate; and 12.6 g of oxalic acid dihydrate |
| Example 105 | Amorphous LiCoPO₄ | 3.7g of lithium carbonate; 15.5 g of cobalt sulfate; 11.5g of ammonium dihydrogen phosphate; and 12.6 g of oxalic acid dihydrate |
| Example 104 | Crystalline LiNiPO₄ | 3.7g of lithium carbonate; 11.9 g of nickel carbonate; 11.5g of ammonium dihydrogen phosphate; and 12.6 g of oxalic acid dihydrate |

**Table 13: Coating of second coating layer (step S6)**

| No. | Second coating layer material and amount thereof (based on weight of inner core) | Amount of pyrophosphate-coated material added in step S6 (amount of inner core added for example 101) (g) | Step S6: Coating of second coating layer | | | | |
|---|---|---|---|---|---|---|---|
| | | | Amount of correspondi ng coating material in second coating layer suspension (g) | Mixing time (h) | Dryi ng temp eratu re (°C) | Sinte ring temp eratu re (°C) | Sinte ring time (h) |
| Example 101 | 3% LiFePO₄ | 1571.1 | 47.1 | 6 | 120 | 700 | 8 |
| Comparative example 3 | 4% LiCoPO₄ | 1599.9 | 62.7 | 6 | 120 | 750 | 8 |
| Example 102 | 4% LiCoPO₄ | 1594.0 | 62.5 | 6 | 120 | 750 | 8 |
| Example 103 | 4% LiCoPO₄ | 1602.0 | 62.8 | 6 | 120 | 750 | 8 |
| Example 104 | 4% LiCoPO₄ | 1602.5 | 62.8 | 6 | 120 | 750 | 8 |
| Example 105 | 4% of amorphous LiCoPO₄ | 1602.5 | 62.8 | 6 | 120 | 650 | 8 |
| Example 62-65 | 3% LiFePO₄ | 1586.8 | 47.1 | 6 | 120 | 700 | 8 |
| Example 66 | 3% LiFePO₄ | 1602.5 | 47.1 | 6 | 120 | 700 | 8 |
| Example 67 | 3% LiFePO₄ | 1618.2 | 47.1 | 6 | 120 | 700 | 8 |
| Example 68 | 3% LiFePO₄ | 1649.6 | 47.1 | 6 | 120 | 700 | 8 |
| Example 69 | 1% LiFePO4 | 1586.8 | 15.7 | 6 | 120 | 700 | 8 |
| Example 70 | 4% LiFePO₄ | 1586.8 | 62.8 | 6 | 120 | 700 | 8 |
| Example 71 | 5% LiFePO₄ | 1586.8 | 78.6 | 6 | 120 | 700 | 8 |
| Example 72 | 2.50% LiFePO₄ | 1587.8 | 39.3 | 6 | 120 | 700 | 8 |
| Example 73 | 3% LiFePO₄ | 1587.4 | 47.2 | 6 | 120 | 700 | 8 |
| Example 74 | 2% LiFePO₄ | 1602.8 | 31.4 | 6 | 120 | 700 | 8 |
| Example 75 | 3.50% LiFePO₄ | 1610.5 | 55.0 | 6 | 120 | 700 | 8 |
| Example 76 | 2.5% LiCoPO₄ | 1603.3 | 39.3 | 6 | 120 | 750 | 8 |
| Example 77 | 3% LiNiPO₄ | 1619.0 | 47.2 | 6 | 120 | 680 | 8 |
| Example 78 | 2.5% LiCoPO₄ | 1595.5 | 39.3 | 6 | 120 | 750 | 8 |
| Example 79 | 3% LiFePO₄ | 1585.9 | 47.1 | 6 | 120 | 700 | 8 |
| Example 80 | 4% LiFePO₄ | 1602.4 | 62.8 | 6 | 120 | 700 | 8 |
| Example 81 | 3% LiCoPO₄ | 1587.7 | 47.2 | 6 | 120 | 750 | 8 |
| Example 82 | 4% LiCoPO₄ | 1603.5 | 62.9 | 6 | 120 | 750 | 8 |
| Example 83 | 4% LiCoPO₄ | 1658.6 | 62.9 | 6 | 120 | 750 | 8 |
| Example 84 | 5.50% LiCoPO₄ | 1603.5 | 86.5 | 6 | 120 | 750 | 8 |
| Example 85 | 4% LiCoPO₄ | 1603.5 | 62.9 | 6 | 120 | 750 | 8 |
| Example 86 | 3% LiFePO₄ | 1588.7 | 47.2 | 6 | 120 | 700 | 8 |
| Example 87 | 3% LiFePO₄ | 1584.3 | 47.1 | 6 | 120 | 700 | 8 |
| Example 88 | 3% LiFePO₄ | 1584.9 | 47.1 | 6 | 120 | 700 | 8 |
| Example 89 | 4% LiCoPO₄ | 1605.4 | 63.0 | 6 | 120 | 750 | 8 |
| Example 90 | 4% LiCoPO₄ | 1605.4 | 63.0 | 6 | 120 | 750 | 8 |

**Table 14: Coating of third coating layer (step S8)**

| | Third coating layer | Molar ratio of SP2 to SP3 | Amount of two-layer coated material added in step S8 (amount of added first coating layer-containing material or inner core for those without two coating layers) (g) | Step S8: Coating of third coating layer | | | | |
|---|---|---|---|---|---|---|---|---|
| | | | | Amo unt of sucro se (g) | Mix ing tim e (h) | Drying temper ature (°C) | Sinteri ng temper ature (°C) | Sinte ring time (h) |
| Comparativ e example 2 | 1% of carbon | 2.5 | 1568.5 | 37.3 | 6 | 150 | 650 | 8 |
| Example 91 | 2% of carbon | 2.8 | 1572.2 | 74.7 | 6 | 150 | 680 | 8 |
| Example 92 | 2% of carbon | 2.7 | 1601.8 | 74.6 | 6 | 150 | 680 | 7 |
| Example 93 | 1% of carbon | 2.4 | 1571.0 | 37.3 | 6 | 150 | 630 | 8 |
| Example 94 | 1.5% of carbon | 2.6 | 1570.6 | 56.0 | 6 | 150 | 650 | 7 |
| Example 95 | 2.5% of carbon | 2.8 | 1573.6 | 93.4 | 6 | 150 | 680 | 8 |
| Example 96 | 1% of carbon | 2.7 | 1572.2 | 37.3 | 6 | 150 | 680 | 7 |
| Example 97 | 1.5% of carbon | 2.9 | 1571.1 | 56.0 | 6 | 150 | 680 | 10 |
| Example 98 | 1% of carbon | 2.2 | 1572.2 | 37.3 | 6 | 150 | 600 | 8 |
| Example 99 | 1% of carbon | 2.4 | 1571.1 | 37.3 | 6 | 150 | 630 | 8 |
| Example 100 | 1% of carbon | 2.3 | 1586.8 | 37.3 | 6 | 150 | 620 | 8 |
| Example 101 | 1% of carbon | 2.1 | 1618.2 | 37.3 | 6 | 150 | 600 | 6 |
| Comparativ e example 3 | 1% of carbon | 2 | 1662.6 | 37.3 | 6 | 120 | 600 | 6 |
| Example 102 | 1% of carbon | 1.8 | 1656.5 | 37.1 | 6 | 120 | 600 | 6 |
| Example 103 | 1% of carbon | 1.7 | 1664.8 | 37.3 | 6 | 100 | 600 | 6 |
| Example 104 | 1% of carbon | 3.1 | 1665.4 | 37.3 | 6 | 150 | 700 | 10 |
| Example 105 | 1% of carbon | 3.5 | 1665.4 | 37.3 | 6 | 150 | 750 | 10 |
| Example 62 | 1% of carbon | 2.2 | 1633.9 | 37.3 | 6 | 150 | 700 | 10 |
| Example 63 | 3% of carbon | 2.3 | 1633.9 | 111.9 | 6 | 150 | 600 | 9 |
| Example 64 | 4% of carbon | 2.1 | 1633.9 | 149.2 | 6 | 150 | 600 | 6 |
| Example 65 | 5% of carbon | 2.4 | 1633.9 | 186.5 | 6 | 150 | 630 | 8 |
| Example 66 | 1% of carbon | 2.5 | 1649.6 | 37.3 | 6 | 150 | 650 | 8 |
| Example 67 | 1% of carbon | 2.5 | 1665.3 | 37.3 | 6 | 150 | 650 | 8 |
| Example 68 | 1% of carbon | 2.4 | 1696.7 | 37.3 | 6 | 150 | 630 | 8 |
| Example 69 | 1% of carbon | 2.3 | 1602.5 | 37.3 | 6 | 150 | 600 | 9 |
| Example 70 | 1% of carbon | 2.2 | 1649.6 | 37.3 | 6 | 150 | 600 | 8 |
| Example 71 | 1% of carbon | 2.2 | 1665.3 | 37.3 | 6 | 150 | 600 | 9 |
| Example 72 | 1.5% of carbon | 2.3 | 1629.0 | 56.1 | 6 | 150 | 600 | 9 |
| Example 73 | 2% of carbon | 2.4 | 1634.6 | 74.7 | 6 | 150 | 630 | 8 |
| Example 74 | 2% of carbon | 2.5 | 1634.2 | 74.6 | 6 | 150 | 650 | 8 |
| Example 75 | 2.5% of carbon | 2.7 | 1665.5 | 93.3 | 6 | 150 | 680 | 7 |
| Example 76 | 2% of carbon | 2.8 | 1642.6 | 74.7 | 6 | 150 | 680 | 8 |
| Example 77 | 1% of carbon | 2.7 | 1666.2 | 37.3 | 6 | 150 | 680 | 7 |
| Example 78 | 1.5% of carbon | 2.3 | 1634.8 | 56.0 | 6 | 150 | 600 | 9 |
| Example 79 | 1% of carbon | 2.6 | 1633.0 | 37.3 | 6 | 150 | 650 | 7 |
| Example 80 | 1.5% of carbon | 2.4 | 1665.2 | 56.0 | 6 | 150 | 630 | 8 |
| Example 81 | 1.5% of carbon | 2.2 | 1634.8 | 56.0 | 6 | 150 | 600 | 9 |
| Example 82 | 1% of carbon | 2.2 | 1666.4 | 37.3 | 6 | 150 | 600 | 9 |
| Example 83 | 1% of carbon | 2.3 | 1721.4 | 37.3 | 6 | 150 | 600 | 9 |
| Example 84 | 1% of carbon | 2.4 | 1690.0 | 37.3 | 6 | 150 | 630 | 8 |
| Example 85 | 5.5% of carbon | 2.6 | 1666.4 | 205.4 | 6 | 150 | 650 | 7 |
| Example 86 | 1% of carbon | 2.4 | 1635.9 | 37.4 | 6 | 150 | 630 | 8 |
| Example 87 | 1% of carbon | 2.3 | 1631.3 | 37.3 | 6 | 150 | 600 | 9 |
| Example 88 | 1.5% of carbon | 2.1 | 1631.9 | 55.9 | 6 | 150 | 600 | 6 |
| Example 89 | 1% of carbon | 0.07 | 1668.3 | 37.4 | 6 | 80 | 600 | 6 |
| Example 90 | 1% of carbon | 13 | 1668.3 | 37.4 | 6 | 150 | 850 | 10 |

### Examples 89-116: Investigation of other coating layer materials

Examples **89-116** were carried out in a manner similar to that in example 62, except for the differences shown in Tables 15 and 16 below.

**Table 15: Investigation of the first coating layer material**

| No. | Coating material of first coating layer | Preparation of first coating layer suspension |
|---|---|---|
| Example 89 | Li₂MgP₂O₇ | 7.4 g of lithium carbonate; 8.4 g of magnesium carbonate; 23.0 g of ammonium dihydrogen phosphate; and 12.6 g of oxalic acid dihydrate |
| Example 90 | Li₂CoP₂O₇ | 7.4 g of lithium carbonate, 15.5 g of cobalt sulfate; 23.0 g of ammonium dihydrogen phosphate; and 12.6 g of oxalic acid dihydrate |
| Example 106 | Li₂CuP₂O₇ | 7.4 g of lithium carbonate, 16.0 g of copper sulfate; 23.0 g of ammonium dihydrogen phosphate; and 12.6 g of oxalic acid dihydrate |
| Example 107 | Li₂ZnP₂O₇ | 7.4 g of lithium carbonate, 12.5 g of zinc carbonate; 23.0 g of ammonium dihydrogen phosphate; and 12.6 g of oxalic acid dihydrate |
| Example 108 | TiP₂O₇ | 24.0 g of titanium sulfate, 23.0 g of ammonium dihydrogen phosphate; and 12.6 g of oxalic acid dihydrate |
| Example 109 | Ag₄P₂O₇ | 67.9 g of silver nitrate, 23.0 g of ammonium dihydrogen phosphate, and 25.2 g of oxalic acid dihydrate |
| Example 110 | ZrP₂O₇ | 56.6 g of zirconium sulfate, 23.0 g of ammonium dihydrogen phosphate, and 25.2 g of oxalic acid dihydrate |

**Table 16: Investigation of the second coating layer material**

| No. | Second coating layer material | Preparation of second coating layer suspension |
|---|---|---|
| Example 111 | Cu₃(PO₄)₂ | 48.0g of copper sulfate; 23.0 g of ammonium dihydrogen phosphate; and 37.8g of oxalic acid dihydrate |
| Example 112 | Zn₃(PO₄)₂ | 37.6g of zinc carbonate; 23.0 g of ammonium dihydrogen phosphate; and 37.8g of oxalic acid dihydrate |
| Example 113 | Ti₃(PO₄)₄ | 72.0g of titanium sulfate; 46.0g of ammonium dihydrogen phosphate; and 75.6g of oxalic acid dihydrate |
| Example 114 | Ag₃PO₄ | 50.9g of silver nitrate; 11.5g of ammonium dihydrogen phosphate; and 18.9g of oxalic acid dihydrate |
| Example 115 | Zr₃(PO₄)₄ | 85.0g of Zirconium sulfate; 46.0g of ammonium dihydrogen phosphate; and 37.8g of oxalic acid dihydrate |
| Example 116 | AlPO₄ | 13.3g of aluminum chloride; 11.5g of ammonium dihydrogen phosphate; and 18.9g of oxalic acid dihydrate |

The performance test results of the examples and comparative examples of the above positive electrode active material having an inner core of Li₁₊ₓMn_{1-y}A_{y}P_{1-z}R_{z}O₄ and a three-layer coating structure with the coating layers including a pyrophosphate layer, a phosphate layer and a carbon layer were shown in the Table below.

**Table 17: Properties of positive electrode active material powders and performance of prepared batteries in example 62-105 and comparative examples 2 and 3**

| Example No. | Properties of positive electrode active material powder | | | | | | Performance of battery | | |
|---|---|---|---|---|---|---|---|---|---|
| | Lattice change rate (%) | Li/Mn antisite defect concentration (%) | Compacted density (g/cm³) | Surface oxygen valency | 3C charge constant current rate (%) | Dissolution of Mn and Fe after cycling (ppm) | Capacity of button battery at 0.1C (mAh/g) | Expansion of cell upon 30 d of storage at 60°C (%) | Number of cycles for capacity retention rate of 80% at 45°C |
| Comparative example 2 | 11.4 | 5.2 | 1.5 | -1.55 | 50.1 | 2060 | 125.6 | 48.6 | 185 |
| Example 91 | 10.6 | 3.3 | 1.67 | -1.51 | 54.9 | 1810 | 126.4 | 47.3 | 243 |
| Example 92 | 10.8 | 3.4 | 1.64 | -1.64 | 52.1 | 1728 | 144.7 | 41.9 | 378 |
| Example 93 | 4.3 | 2.8 | 1.69 | -1.82 | 56.3 | 1096 | 151.2 | 8.4 | 551 |
| Example 94 | 2.8 | 2.5 | 1.65 | -1.85 | 58.2 | 31 | 148.4 | 7.5 | 668 |
| Example 95 | 3.4 | 2.4 | 1.61 | -1.86 | 58.4 | 64 | 149.6 | 8.6 | 673 |
| Example 96 | 4.5 | 2.4 | 1.73 | -1.83 | 59.2 | 85 | 148.6 | 8.3 | 669 |
| Example 97 | 2.3 | 2.4 | 1.68 | -1.89 | 59.3 | 30 | 152.3 | 7.3 | 653 |
| Example 98 | 2.3 | 2.4 | 1.75 | -1.89 | 59.8 | 30 | 152.3 | 7.3 | 672 |
| Example 99 | 2.3 | 2.2 | 1.81 | -1.9 | 64.1 | 28 | 154.2 | 7.2 | 685 |
| Example 100 | 2.3 | 2.2 | 1.92 | -1.92 | 65.4 | 12 | 154.3 | 5.4 | 985 |
| Example 101 | 2.3 | 2.1 | 1.95 | -1.95 | 65.5 | 18 | 154.6 | 4.2 | 795 |
| Comparative example 3 | 11.4 | 5.2 | 1.63 | -1.96 | 52.4 | 56 | 130.2 | 5.4 | 562 |
| Example 102 | 8.1 | 3.8 | 1.76 | -1.96 | 58.3 | 41 | 135.1 | 5.1 | 631 |
| Example 103 | 2 | 1.8 | 2.13 | -1.96 | 61.3 | 8 | 154.3 | 3.7 | 1126 |
| Example 104 | 2 | 1.9 | 1.95 | -1.96 | 60.5 | 18 | 152.7 | 4.5 | 1019 |
| Example 105 | 2 | 1.9 | 1.9 | -1.89 | 60.4 | 24 | 152.4 | 5.1 | 897 |
| Example 62 | 2.5 | 1.8 | 2.35 | -1.93 | 70.3 | 7 | 157.2 | 4.2 | 1128 |
| Example 63 | 2.5 | 1.8 | 2.24 | -1.94 | 70.2 | 6 | 156.3 | 3.7 | 1253 |
| Example 64 | 2.5 | 1.8 | 2.22 | -1.94 | 70.1 | 5 | 155.4 | 3.4 | 1374 |
| Example 65 | 2.5 | 1.8 | 2.21 | -1.95 | 70.2 | 3 | 153.7 | 2.9 | 1406 |
| Example 66 | 2.5 | 1.8 | 2.33 | -1.93 | 70.1 | 5 | 156.7 | 3.1 | 1501 |
| Example 67 | 2.5 | 1.8 | 2.31 | -1.93 | 69.7 | 4 | 156.2 | 2.8 | 1576 |
| Example 68 | 2.5 | 1.8 | 2.28 | -1.93 | 68.4 | 3 | 155.8 | 2.5 | 1647 |
| Example 69 | 2.5 | 1.8 | 2.29 | -1.93 | 69.1 | 9 | 156.4 | 3.4 | 1058 |
| Example 70 | 2.5 | 1.8 | 2.46 | -1.98 | 73.4 | 6 | 157.6 | 2.9 | 1286 |
| Example 71 | 2.5 | 1.8 | 2.49 | -1.98 | 75.4 | 5 | 157.8 | 2.5 | 1486 |
| Example 72 | 2.6 | 1.9 | 2.38 | -1.97 | 72.4 | 6 | 157.3 | 3.5 | 1026 |
| Example 73 | 2.4 | 1.8 | 2.41 | -1.97 | 74.5 | 4 | 156.3 | 2.5 | 1136 |
| Example 74 | 2.7 | 1.9 | 2.42 | -1.97 | 75.3 | 5 | 156.6 | 3.5 | 1207 |
| Example 75 | 2.8 | 1.9 | 2.45 | -1.97 | 76.5 | 3 | 153.8 | 3.7 | 1308 |
| Example 76 | 2.2 | 1.9 | 2.46 | -1.97 | 74.3 | 3 | 153.8 | 3.7 | 1109 |
| Example 77 | 2.1 | 1.9 | 2.47 | -1.98 | 73.1 | 5 | 154.2 | 3.8 | 1132 |
| Example 78 | 2.5 | 1.7 | 2.41 | -1.98 | 75.3 | 4 | 155.4 | 4.5 | 1258 |
| Example 79 | 2.3 | 1.6 | 2.42 | -1.97 | 76.1 | 4 | 154.3 | 4.7 | 1378 |
| Example 80 | 2.2 | 1.7 | 2.43 | -1.97 | 76.8 | 4 | 154.3 | 4.7 | 1328 |
| Example 81 | 2.6 | 1.8 | 2.42 | -1.94 | 75.4 | 4 | 153.9 | 3.3 | 1458 |
| Example 82 | 2.4 | 1.7 | 2.41 | -1.97 | 76.1 | 4 | 154.5 | 3.5 | 1327 |
| Example 83 | 2.4 | 1.8 | 2.32 | -1.95 | 72.1 | 2 | 152.1 | 2.7 | 1556 |
| Example 84 | 2.3 | 1.7 | 2.46 | -1.96 | 76.4 | 3 | 151.4 | 2.4 | 1645 |
| Example 85 | 2.2 | 1.8 | 2.47 | -1.95 | 76.3 | 3 | 152.1 | 2.5 | 1548 |
| Example 86 | 2.1 | 1.7 | 2.49 | -1.98 | 78.4 | 3 | 158.6 | 2.9 | 1538 |
| Example 87 | 3.6 | 2.5 | 2.21 | -1.97 | 56.4 | 8 | 152.3 | 4.8 | 1017 |
| Example 88 | 2.8 | 2.1 | 2.24 | -1.98 | 74.3 | 6 | 155.4 | 3.8 | 1126 |
| Example 89 | 2.5 | 1.9 | 1.95 | -1.94 | 54.7 | 9 | 154.9 | 6.4 | 986 |
| Example 90 | 2.4 | 1.8 | 1.98 | -1.95 | 68.4 | 7 | 155.6 | 4.5 | 1047 |

It can be seen from Table 17 that, compared with comparative examples, the examples achieve a smaller lattice change rate, a smaller Li/Mn antisite defect concentration, a larger compacted density, and a surface oxygen valency more closer to -2 valence, less Mn and Fe dissolution after cycling, and better battery performance, such as better high-temperature storage performance and high-temperature cycling performance.

**Table 18: Thickness of each layer of positive electrode active material and weight ratio of manganese element to phosphorus element**

| No. | Inner core | First coating layer | Second coating layer | Third coating layer | Thicknes s of first coating layer (nm) | Thickness of second coating layer (nm) | Thickness of third coating layer (nm) | Content of Mn element (wt%) | Weight ratio of Mn element to P element |
|---|---|---|---|---|---|---|---|---|---|
| Example 92 | LiMn_{0.80}Fe_{0.20}PO₄ | 2% of amorphous Li₂FeP₂O₇ | - | 2% of carbon | 4 | - | 10 | 26.1 | 1.383 |
| Example 93 | LiMn_{0.70}Fe_{0.295}V_{0.005}PO₄ | - | - | 1% of carbon | - | - | 5 | 24.3 | 1.241 |
| Example 101 | Li_{0.999}Mn_{0.60}Fe_{0.393}V_{0.004}Co_{0.003}P_{0.999}S_{0.001}O₄ | - | 3% of crystalline LiFePO₄ | 1% of carbon | - | 7.5 | 5 | 19.6 | 1.034 |
| Example 62 | Li_{0.997}Mn_{0.60}Fe_{0.393}V_{0.004}Co _{0.003}P_{0.997}S_{0.003}O₄ | 1% Li₂FeP₂O₇ | 3% LiFePO₄ | 1% of carbon | 2 | 7.5 | 5 | 19.0 | 1.023 |
| Example 63 | Li_{0.997}Mn_{0.60}Fe_{0.393}V_{0.004}Co _{0.003}P_{0.997}S_{0.003}O₄ | 1% Li₂FeP₂O₇ | 3% LiFePO₄ | 3% of carbon | 2 | 7.5 | 15 | 18.3 | 1.023 |
| Example 64 | Li_{0.997}Mn_{0.60}Fe_{0.393}V_{0.004}Co _{0.003}P_{0.997}S_{0.003}O₄ | 1% Li₂FeP₂O₇ | 3% LiFePO₄ | 4% of carbon | 2 | 7.5 | 20 | 18.0 | 1.023 |
| Example 65 | Li_{0.997}Mn_{0.60}Fe_{0.393}V_{0.004}Co _{0.003}P_{0.997}S_{0.003}O₄ | 1% Li₂FeP₂O₇ | 3% LiFePO₄ | 5% of carbon | 2 | 7.5 | 25 | 17.9 | 1.023 |
| Example 66 | Li_{0.997}Mn_{0.60}Fe_{0.393}V_{0.004}Co _{0.003}P_{0.997}S_{0.003}O₄ | 2% Li₂FeP₂O₇ | 3% LiFePO₄ | 1% of carbon | 4 | 7.5 | 5 | 18.7 | 1.011 |
| Example 67 | Li_{0.997}Mn_{0.60}Fe_{0.393}V_{0.004}Co _{0.003}P_{0.997}S_{0.003}O₄ | 3% Li₂FeP₂O₇ | 3% LiFePO₄ | 1% of carbon | 6 | 7.5 | 5 | 18.3 | 0.999 |
| Example 68 | Li_{0.997}Mn_{0.60}Fe_{0.393}V_{0.004}Co _{0.003}P_{0.997}S_{0.003}O₄ | 5% Li₂FeP₂O₇ | 3% LiFePO₄ | 1% of carbon | 10 | 7.5 | 5 | 17.6 | 0.975 |
| Example 69 | Li_{0.997}Mn_{0.60}Fe_{0.393}V_{0.004}Co _{0.003}P_{0.997}S_{0.003}O₄ | 1% Li₂FeP₂O₇ | 1% LiFePO₄ | 1% of carbon | 2 | 2.5 | 5 | 19.8 | 1.043 |
| Example 70 | Li_{0.997}Mn_{0.60}Fe_{0.393}V_{0.004}Co _{0.003}P_{0.997}S_{0.003}O₄ | 1% Li₂FeP₂O₇ | 4% LiFePO₄ | 1% of carbon | 2 | 10 | 5 | 18.7 | 1.014 |
| Example 71 | Li_{0.997}Mn_{0.60}Fe_{0.393}V_{0.004}Co _{0.003}P_{0.997}S_{0.003}O₄ | 1% Li₂FeP₂O₇ | 5% LiFePO₄ | 1% of carbon | 2 | 12.5 | 5 | 18.4 | 1.004 |
| Example 72 | Li_{1.001}Mn_{0.60}Fe_{0.393}V_{0.004}Co_{0.003}P_{0.999}Si_{0.001}O₄ | 1% Li₂FeP₂O₇ | 2.50% LiFePO₄ | 1.5% of carbon | 2 | 6.3 | 7.5 | 19.0 | 1.026 |
| Example 74 | Li_{0.995}Mn_{0.65}Fe_{0.341}V_{0.004}Co _{0.005}P_{0.995}S_{0.005}O₄ | 2% Li₂FeP₂O₇ | 2% LiFePO₄ | 2% of carbon | 4 | 5 | 10 | 18.7 | 1.108 |
| Example 75 | Li_{1.002}Mn_{0.70}Fe_{0.293}V_{0.004}Co _{0.003}P_{0.998}Si_{0.002}O₄ | 2.5% Li₂FeP₂O₇ | 3.50% LiFePO₄ | 2.5% of carbon | 5 | 8.8 | 12.5 | 17.8 | 1.166 |

It can be seen from Table 18 that the content of manganese element and the weight content ratio of manganese element to phosphorus element in the positive electrode active material are reduced by means of doping lithium manganese iron phosphate (containing 35% of manganese and about 20% of phosphorus) at the manganese and phosphorus sites and coating same with three layer; and in addition, by comparing examples 62-75 with examples 92, 93, and 101, and in conjunction with Table 9, it can be known that the decrease of the manganese and phosphorus elements in the positive electrode active material will lead to a decrease in manganese and iron dissolution and an improvement in the battery performance of the secondary battery prepared therefrom.

**Table 19: Properties of positive electrode active material powder and performance of prepared battery**

| Example No. | Properties of positive electrode active material powder | | | | | | Performance of battery | | |
|---|---|---|---|---|---|---|---|---|---|
| | Lattice change rate (%) | Li/Mn antisite defect concentration (%) | Compacted density (g/cm³) | Surface oxygen valency | 3C charge constant current rate (%) | Dissolution of Mn and Fe after cycling (ppm) | Capacity of button battery at 0.1C | Expansion of cell upon 30 days of storage at 60°C (%) | Number of cycles for capacity retention rate of 80% at 45°C |
| Example 62 | 2.5 | 1.8 | 2.35 | -1.93 | 70.3 | 7 | 157.2 | 4.2 | 1128 |
| Example 89 | 2.4 | 1.9 | 2.36 | -1.97 | 68.7 | 15 | 156.2 | 4.8 | 1018 |
| Example 90 | 2.5 | 1.7 | 2.36 | -1.96 | 70.1 | 12 | 155.6 | 4.6 | 1087 |
| Example 106 | 2.5 | 1.7 | 2.38 | -1.97 | 69.1 | 14 | 155.9 | 4.3 | 1054 |
| Example 107 | 2.6 | 1.8 | 2.39 | -1.98 | 69.4 | 23 | 156.2 | 5.3 | 997 |
| Example 108 | 2.6 | 1.9 | 2.34 | -1.96 | 71.3 | 16 | 156.4 | 4.6 | 1004 |
| Example 109 | 2.4 | 1.7 | 2.36 | -1.94 | 70.9 | 11 | 157.5 | 5.1 | 1102 |
| Example 110 | 2.5 | 1.9 | 2.33 | -1.92 | 71.6 | 14 | 155.8 | 5.4 | 1024 |
| Example 111 | 2.5 | 1.7 | 2.34 | -1.92 | 68.4 | 18 | 156.1 | 4.9 | 1054 |
| Example 112 | 2.4 | 1.9 | 2.33 | -1.95 | 67.5 | 27 | 154.7 | 5.9 | 954 |
| Example 113 | 2.2 | 1.8 | 2.36 | -1.94 | 69.4 | 24 | 156.4 | 5.7 | 1017 |
| Example 114 | 2.4 | 1.9 | 2.37 | -1.91 | 71.6 | 31 | 155.8 | 5.3 | 991 |
| Example 115 | 2.6 | 1.9 | 2.38 | -1.94 | 70.8 | 27 | 154.8 | 5.1 | 975 |
| Example 116 | 2.4 | 1.9 | 2.36 | -1.92 | 71.5 | 15 | 156.8 | 4.2 | 1154 |

It can be seen from Table 19 that the use of the first coating layer and the second coating layer comprising other elements within the scope of the present application can also obtain a positive electrode active material with good performance and achieve good battery performance results.

**Table 20: Interplanar spacing and included angle of first coating layer material and second coating layer material**

| No. | Interplanar spacing of first coating layer material | Included angle of crystal orientation (111) of first coating layer material | Interplanar spacing of second coating layer material | Included angle of crystal orientation (111) of second coating layer material |
|---|---|---|---|---|
| Example 62 | 0.303 | 29.496 | 0.348 | 25.562 |
| Example 117 | 0.451 | 19.668 | 0.348 | 25.562 |
| Example 118 | 0.297 | 30.846 | 0.348 | 25.562 |
| Example 119 | 0.457 | 19.456 | 0.348 | 25.562 |
| Example 120 | 0.437 | 20.257 | 0.348 | 25.562 |
| Example 121 | 0.462 | 19.211 | 0.348 | 25.562 |
| Example 122 | 0.450 | 19.735 | 0.348 | 25.562 |
| Example 123 | 0.372 | 23.893 | 0.348 | 25.562 |
| Example 124 | 0.303 | 29.496 | 0.374 | 23.789 |
| Example 125 | 0.303 | 29.496 | 0.360 | 24.710 |
| Example 126 | 0.303 | 29.496 | 0.350 | 25.428 |
| Example 127 | 0.303 | 29.496 | 0.425 | 20.885 |
| Example 128 | 0.303 | 29.496 | 0.356 | 24.993 |
| Example 129 | 0.303 | 29.496 | 0.244 | 36.808 |

It can be seen from Table 20 that the interplanar spacing and included angle of the first coating layer and the second coating layer in the present application are both within the scope of the present application.

### III. Investigation of influence of coating layer sintering method on performance of positive electrode active material and secondary battery

The batteries of the examples and comparative examples in the following table were manufactured similarly to example 62, except that the method parameters in the following table were used. The results were shown in Table 21 below.

**Table 21: Influence of sintering temperature and sintering time in steps S4, S6 and S8 on secondary battery**

| No. | Sinter ing tempe rature in S4 (°C) | Sinter ing time in S4 (h) | Sinter ing tempe rature in S6 (°C) | Sinterin g time in S6 (h) | Sinter ing tempe rature in S8 (°C) | Sinterin g time in S8 (h) | Lattice change rate (%) | Li/Mn antisite defect concent ration | Co mpa cted den sity | 3C charge constan t current rate (%) | Dissolu tion of Mn and Fe after cycling (ppm) | Surf ace oxy gen vale ncy | Capacit y of button battery at 0.1C (mAh/g) ) | Expans ion of cell when stored at 60°C for 30 d (%) | Number of cycles for capacity retention rate of 80% at 45°C |
|---|---|---|---|---|---|---|---|---|---|---|---|---|---|---|---|
| Example 62 | 650 | 6 | 700 | 8 | 700 | 10 | 2.5 | 1.8 | 2.35 | 70.3 | 7 | -1.93 | 157.2 | 4.2 | 1128 |
| Example II-1 | 750 | 4 | 600 | 6 | 700 | 6 | 3.0 | 2.4 | 2.24 | 64.2 | 12 | -1.95 | 154.2 | 6.4 | 894 |
| Example II-2 | 800 | 4 | 600 | 6 | 700 | 6 | 3.1 | 2.4 | 2.21 | 67.3 | 12 | -1.95 | 153.2 | 6.2 | 904 |
| Example II-3 | 700 | 2 | 600 | 6 | 700 | 6 | 2.9 | 2.3 | 2.20 | 62.3 | 15 | -1.96 | 151.1 | 5.8 | 846 |
| Example II-4 | 700 | 3 | 600 | 6 | 700 | 6 | 2.7 | 2.1 | 2.23 | 64.3 | 14 | -1.96 | 152.8 | 5.4 | 908 |
| Example II-5 | 700 | 4 | 500 | 6 | 700 | 6 | 2.5 | 1.8 | 2.31 | 62.4 | 28 | -1.95 | 153.1 | 4.7 | 798 |
| Example II-6 | 700 | 4 | 700 | 6 | 700 | 6 | 2.5 | 1.8 | 2.34 | 63.5 | 14 | -1.96 | 154.3 | 5.1 | 867 |
| Example II-7 | 700 | 4 | 600 | 8 | 700 | 6 | 2.5 | 1.8 | 2.31 | 67.3 | 11 | -1.95 | 156.8 | 4.7 | 959 |
| Example II-8 | 700 | 4 | 600 | 10 | 700 | 6 | 2.5 | 1.8 | 2.34 | 68.5 | 10 | -1.96 | 156.2 | 4.5 | 1045 |
| Example II-9 | 700 | 4 | 600 | 6 | 750 | 6 | 2.5 | 1.8 | 2.35 | 70.3 | 7 | -1.93 | 157.2 | 4.2 | 1128 |
| Example II-10 | 700 | 4 | 600 | 6 | 800 | 6 | 2.5 | 1.8 | 2.35 | 70.1 | 7 | -1.93 | 156.3 | 4.4 | 1097 |
| Example II-11 | 700 | 4 | 600 | 6 | 700 | 8 | 2.5 | 1.8 | 2.35 | 68.4 | 8 | -1.91 | 155.4 | 4.7 | 964 |
| Example II-12 | 700 | 4 | 600 | 6 | 700 | 10 | 2.5 | 1.8 | 2.35 | 66.7 | 10 | -1.95 | 154.7 | 5 | 897 |
| Comparati ve example II-1 | 600 | 3 | 600 | 8 | 750 | 8 | 4.8 | 5.3 | 2.28 | 54.1 | 86 | -1.90 | 140.7 | 10.6 | 615 |
| Comparati ve example II-2 | 850 | 3 | 600 | 8 | 750 | 8 | 5.3 | 4.7 | 2.38 | 57.2 | 84 | -1.91 | 145.3 | 9.0 | 684 |
| Comparati ve example II-3 | 750 | 1.5 | 600 | 8 | 750 | 8 | 4.7 | 4.5 | 2.25 | 53.1 | 87 | -1.91 | 141.9 | 8.8 | 691 |
| Comparati ve example II-4 | 750 | 4.5 | 600 | 8 | 750 | 8 | 4.1 | 4.0 | 2.31 | 58.1 | 79 | -1.92 | 140.1 | 8.1 | 711 |
| Comparati ve example II-5 | 750 | 3 | 450 | 8 | 750 | 8 | 4.8 | 4.6 | 2.28 | 52.1 | 78 | -1.90 | 141.2 | 8.7 | 601 |
| Comparati ve example II-6 | 750 | 3 | 750 | 8 | 750 | 8 | 3.9 | 4.8 | 2.35 | 49.7 | 78 | -1.95 | 142.4 | 8.8 | 604 |
| Comparati ve example II-7 | 750 | 3 | 600 | 5.5 | 750 | 8 | 4.4 | 4.2 | 2.24 | 45.4 | 81 | -1.93 | 142.9 | 8.8 | 614 |
| Comparati ve example II-8 | 750 | 3 | 600 | 10.5 | 750 | 8 | 4.1 | 3.9 | 2.34 | 49.1 | 79 | -1.92 | 141.1 | 7.9 | 684 |
| Comparati ve example II-9 | 750 | 3 | 600 | 8 | 650 | 8 | 5.2 | 4.1 | 2.31 | 48.4 | 81 | -1.93 | 141.8 | 10.2 | 567 |
| Comparati ve example II-10 | 750 | 3 | 600 | 8 | 850 | 8 | 5.0 | 4.0 | 2.34 | 49.1 | 78 | -1.95 | 141.2 | 8.7 | 678 |
| Comparati ve example II-11 | 750 | 3 | 600 | 8 | 750 | 5.5 | 4.3 | 4.2 | 2.27 | 47.8 | 84 | -1.91 | 142.9 | 9.4 | 521 |
| Comparati ve example II-12 | 750 | 3 | 600 | 8 | 750 | 10.5 | 50 | 4.9 | 2.35 | 49.8 | 78 | -1.94 | 141.7 | 9.5 | 655 |

It can be seen from the above that when the sintering temperature in step S4 is in a range of 650-800°C and the sintering time is 2-6 h, the sintering temperature in step S6 is 500-700°C and the sintering time is 6-10 h, and the sintering temperature in step S8 is 700-800°C and the sintering time is 6-10 h, a smaller lattice change rate, lower Li/Mn antisite defect concentration, less dissolution of manganese and iron elements, better 3 C charge constant current rate, larger battery capacity, better battery cycling performance, and better high-temperature storage stability can be achieved.

In addition, compared with comparative example II-4 (the sintering temperature in step S4 is 750°C and the sintering time is 4.5 hours), the example II-1 (the sintering temperature in step S4 is 750°C and the sintering time is 4 h) achieves a better positive electrode active material performance and battery performance, indicating that when the sintering temperature in step S4 is 750°C or greater than 750°C, it is necessary to control the sintering time to be less than 4.5 hours.

### IV. Investigation of influence of reaction temperature and reaction time during preparation of inner core on properties of positive electrode active material and performance of battery

The positive electrode active materials and batteries of examples III-1 to III-17 in the following table were prepared similarly to example 62, except for the method parameters in the preparation of the positive electrode active material, as shown in the following table. The results were also shown in the Table below.

**Table 22: Influence of reaction temperature and reaction time during preparation of inner core on properties of positive electrode active material and performance of secondary battery**

| No. | Step S1 | | Step S2 | | Lattice change rate (%) | Li/Mn antisite defect concentr ation (%) | Compac ted density (g/cm³) | 3C charge consta nt current rate (%) | Dissolut ion of Mn and Fe after cycling (ppm) | Surfac e oxyge n valenc y | Capacit y of button battery at 0.1C (mAh/g) | Expansion of cell upon 30 d of storage at 60°C (%) | Number of cycles for capacity retention rate of 80% at 45°C |
|---|---|---|---|---|---|---|---|---|---|---|---|---|---|
| | Reacti on tempe rature (°C) | Reacti on time (h) | Reacti on temper ature (°C) | Reactio n time (h) | | | | | | | | | |
| Example 62 | 80 | 6 | 80 | 10 | 2.5 | 1.8 | 2.35 | 70.3 | 7 | -1.93 | 157.2 | 4.2 | 1128 |
| Example III-1 | 70 | 6 | 80 | 10 | 2.8 | 3.4 | 2.30 | 60.1 | 34 | -1.93 | 155.4 | 5.8 | 876 |
| Example III-2 | 60 | 6 | 80 | 10 | 3.1 | 3.1 | 2.33 | 64.2 | 18 | -1.92 | 156.2 | 5.1 | 997 |
| Example III-4 | 100 | 6 | 80 | 10 | 2.3 | 2.4 | 2.37 | 71.3 | 7 | -1.94 | 156.8 | 4.1 | 1137 |
| Example III-5 | 120 | 6 | 80 | 10 | 2.1 | 2.2 | 2.38 | 72.1 | 5 | -1.92 | 155.4 | 4.0 | 1158 |
| Example III-6 | 80 | 2 | 80 | 10 | 2.8 | 3.2 | 2.27 | 68.4 | 24 | -1.90 | 154.9 | 5.1 | 895 |
| Example III-7 | 80 | 3 | 80 | 10 | 2.6 | 2.7 | 2.29 | 69.7 | 17 | -1.92 | 156.1 | 4.7 | 967 |
| Example III-8 | 80 | 5 | 80 | 10 | 2.4 | 1.9 | 2.34 | 70.6 | 8 | -1.94 | 156.8 | 4.3 | 1137 |
| Example III-9 | 80 | 7 | 80 | 10 | 2.5 | 1.8 | 2.35 | 68.3 | 11 | -1.94 | 156.4 | 4.8 | 987 |
| Example III-10 | 80 | 9 | 80 | 10 | 2.6 | 1.8 | 2.36 | 67.2 | 15 | -1.93 | 155.9 | 5.2 | 921 |
| Example III-11 | 80 | 6 | 40 | 10 | 3.2 | 3.4 | 2.28 | 67.8 | 35 | -1.94 | 156.8 | 5.4 | 894 |
| Example III-12 | 80 | 6 | 60 | 10 | 2.8 | 2.9 | 2.31 | 68.7 | 18 | -1.95 | 157.0 | 4.9 | 927 |
| Example III-13 | 80 | 6 | 80 | 10 | 2.5 | 2.7 | 2.35 | 70.3 | 7 | -1.93 | 157.2 | 4.2 | 1128 |
| Example III-14 | 80 | 6 | 100 | 10 | 2.7 | 2.8 | 2.33 | 69.4 | 15 | -1.93 | 156.7 | 4.6 | 957 |
| Example III-15 | 80 | 6 | 120 | 10 | 2.8 | 3.1 | 2.32 | 68.1 | 24 | -1.94 | 156.2 | 4.8 | 914 |
| Example III-16 | 80 | 6 | 90 | 1 | 3.7 | 3.8 | 2.26 | 67.9 | 38 | -1.93 | 155.8 | 5.2 | 995 |
| Example III-17 | 80 | 6 | 90 | 3 | 3.4 | 3.4 | 2.31 | 68.2 | 32 | -1.94 | 156.1 | 4.8 | 915 |
| Example III-18 | 80 | 6 | 90 | 5 | 3.1 | 3.1 | 2.33 | 69.1 | 27 | -1.92 | 156.4 | 4.6 | 934 |
| Example III-19 | 80 | 6 | 90 | 7 | 2.8 | 2.9 | 2.34 | 69.4 | 15 | -1.93 | 156.8 | 4.5 | 971 |
| Example III-20 | 80 | 6 | 90 | 9 | 2.5 | 2.7 | 2.35 | 70.3 | 7 | -1.93 | 157.2 | 4.2 | 1128 |

It can be seen from Table 22 that when the reaction temperature is in a range of 60-120°C and the reaction time is 2-9 hours in step S1, and the reaction temperature is in a range of 40-120°C and the reaction time is 1-10 hours in step S2, the properties of the positive electrode active material powder (lattice change rate, Li/Mn antisite defect concentration, surface oxygen valency, and compacted density) and the performance of the prepared battery (electric capacity, high-temperature cycling performance, and high-temperature storage performance) are all excellent.

The preparation and performance tests of the positive electrode active material having coating layers including a first coating layer (pyrophosphate and phosphate) and a second coating layer of carbon will be detailed below:

### Example 1-1

### [Preparation of two-layer coated lithium manganese phosphate positive electrode active material]

### (1) Preparation of co-doped lithium manganese phosphate inner core

**Preparation of Fe, Co and V co-doped manganese oxalate:** 689.5 g of manganese carbonate (in MnCO₃, the same below), 455.2 g of ferrous carbonate (in FeCO₃, the same below), 4.6 g of cobalt sulfate (in CoSO₄, the same below), and 4.9 g of vanadium dichloride (in VCl₂, the same below) were mixed thoroughly for 6 hours in a mixer. The mixture was transferred into a reaction kettle, and 5 L of deionized water and 1260.6 g of oxalic acid dihydrate (in C₂H₂O₄.2H₂O, the same below) were added. The reaction kettle was heated to 80°C, and the mixture was stirred for 6 hours at a rotation speed of 600 rpm until the reaction was completed (no bubble was generated), so as to obtain a Fe, Co, V and S co-doped manganese oxalate suspension. Then, the suspension was filtered, and the resultant filter cake was dried at 120°C and then ground, so as to obtain Fe, Co, and V co-doped manganese oxalate dihydrate particles with a median particle size Dv50 of 100 nm.

**Preparation of Fe, Co, V and S co-doped lithium manganese phosphate:** The manganese oxalate dihydrate particles (1793.4 g) obtained in the previous step, 369.0 g of lithium carbonate (in Li₂CO₃, the same below), 1.6 g of 60% dilute sulfuric acid (in 60% H₂SO₄, the same below), and 1148.9 g of ammonium dihydrogen phosphate (in NH₄H₂PO₄, the same below) were added into 20 L of deionized water, and the mixture was stirred for 10 hours until mixed uniformly, so as to obtain a slurry. The slurry was transferred to a spray drying device for spray-drying granulation at a set drying temperature of 250°C for 4 hours to obtain a powder. The above powder was sintered at 700°C for 4 hours in a protective atmosphere of nitrogen (90% by volume) + hydrogen (10% by volume), so as to obtain 1572.1 g of Fe, Co, V and S co-doped lithium manganese phosphate.

### (2) Preparation of lithium iron pyrophosphate and lithium iron phosphate

**Preparation of lithium iron pyrophosphate powder:** 4.77 g of lithium carbonate, 7.47 g of ferrous carbonate, 14.84 g of ammonium dihydrogen phosphate, and 1.3 g of oxalic acid dihydrate were dissolved in 50 ml of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li₂FeP₂O₇, and the suspension was filtered, washed with deionized water, and dried at 120°C for 4 h to obtain a powder. The powder was sintered at 650°C in a nitrogen atmosphere for 8 hours, naturally cooled to room temperature, and then ground to obtain a Li₂FeP₂O₇ powder.

**Preparation of lithium iron phosphate suspension:** 11.1 g of lithium carbonate, 34.8 g of ferrous carbonate, 34.5 g of ammonium dihydrogen phosphate, 1.3 g of oxalic acid dihydrate and 74.6 g of sucrose (in C₁₂H₂₂O₁₁, the same below) were dissolved in 150 ml of deionized water to obtain a mixture, and the mixture was then stirred for 6 hours for complete reaction. Then, the reacted solution was heated to 120°C and held at the temperature for 6 hours to obtain a suspension comprising LiFePO₄.

### (3) Coating

1572.1 g of the above Fe, Co, V and S co-doped lithium manganese phosphate and 15.72 g of the above lithium iron pyrophosphate (Li₂FeP₂O₇) powder were added into the suspension of lithium iron phosphate (LiFePO₄) prepared in the previous step, stirred and mixed uniformly, then transferred to a vacuum oven and dried at 150°C for 6 h. The resulting product was then dispersed by sanding. After dispersion, the obtained product was sintered at 700°C in a nitrogen atmosphere for 6 hours to obtain the target product of two-layer coated lithium manganese phosphate.

### [Preparation of positive electrode plate]

The two-layer coated lithium manganese phosphate positive electrode active material prepared above, a conductive agent of acetylene black and a binder of polyvinylidene fluoride (PVDF) were added into N-methylpyrrolidone (NMP) in a weight ratio of 92 : 2.5 : 5.5, followed by stirring and uniformly mixing to obtain a positive electrode slurry. The positive electrode slurry was then uniformly applied to an aluminum foil at 0.280 g/1540.25 mm², followed by drying, cold pressing and slitting to obtain a positive electrode plate.

### [Preparation of negative electrode plate]

Negative electrode active materials of synthetic graphite and hard carbon, a conductive agent of acetylene black, a binder of styrene butadiene rubber (SBR) and a thickener of sodium carboxymethylcellulose (CMC-Na) were dissolved in a solvent of deionized water in a weight ratio of 90 : 5 : 2 : 2 : 1, followed by stirring and mixing until uniform to prepare a negative electrode slurry. The negative electrode slurry was uniformly applied to a negative electrode current collector of a copper foil at 0.117 g/1540.25 mm², followed by drying, cold pressing, and slitting to obtain a negative electrode plate.

### [Preparation of electrolyte solution]

In an argon atmosphere glove box (H₂O < 0.1 ppm and O₂ < 0.1 ppm), the organic solvents of ethylene carbonate (EC) and ethyl methyl carbonate (EMC) were uniformly mixed at a volume ratio of 3/7, and 12.5 wt% (based on the weight of the organic solvents) of LiPF₆ was dissolved in the above organic solvents and stirred until uniform to obtain an electrolyte solution.

### [Separator]

A commercially available PP-PE copolymer microporous film having a thickness of 20 µm and an average pore size of 80 nm (Model 20, from Zhuogao Electronic Technology Co. Ltd.) was used.

### [Preparation of full batter]

The positive electrode plate, separator, and negative electrode plate obtained above were stacked in sequence, such that the separator was located between the positive electrode and the negative electrode and played a role of isolation, and the stack was wound to obtain a bare cell. The bare cell was placed in an outer package, the above electrolyte solution was injected, and the bare cell was packaged to obtain a full battery.

### [Preparation of button battery]

The parameters were the same as example 1 and will not be repeated here.

### Examples 1-2 to 1-6

During the preparation of a co-doped lithium manganese phosphate inner core, the preparation conditions for the lithium manganese phosphate inner cores in examples 1-2 to 1-6 were the same as example 1-1, except that vanadium dichloride and cobalt sulfate were not used, and 463.4 g of ferrous carbonate, 1.6 g of 60% dilute sulfuric acid, 1148.9 g of ammonium dihydrogen phosphate, and 369.0 g of lithium carbonate were used.

In addition, in the preparation process of lithium iron pyrophosphate and lithium iron phosphate and in the process of coating the first coating layer and the second coating layer, except that the raw materials used were adjusted correspondingly according to the ratio of the coating amount shown in Table 1 to the coating amount corresponding to example 1-1, such that the amount of Li₂FeP₂O₇/LiFePO₄ in examples 1-2 to 1-6 was 12.6 g/37.7 g, 15.7 g/47.1 g, 18.8 g/56.5 g, 22.0 g /66.0 g and 25.1 g/75.4 g, respectively, and the amount of sucrose in examples 1-2 to 1-6 was 37.3 g, other conditions were the same as example 1-1.

### Examples 1-7 to 1-10

The conditions in examples 1-7 to 1-10 were the same as example 1-3, except that the amounts of sucrose were 74.6 g, 149.1 g, 186.4 g and 223.7 g, respectively, such that the corresponding coating amount of the carbon layer as the second coating layer was 31.4 g, 62.9 g, 78.6 g and 94.3 g, respectively.

### Examples 1-11 to 1-14

Except that in the preparation process of lithium iron pyrophosphate and lithium iron phosphate, the amounts of various raw materials were adjusted correspondingly according to the coating amount shown in Table 1, such that the amount of Li₂FeP₂O₇/LiFePO₄ was 23.6 g/39.3 g, 31.4 g/31.4 g, 39.3 g/23.6 g and 47.2 g/15.7 g, respectively, the conditions in examples 1-11 to 1-14 were the same as example 1-7.

### Example 1-15

The conditions in example 1-15 were the same as example 1-14, except that in the process of preparing the co-doped lithium manganese phosphate inner core, ferrous carbonate was replaced with 492.80 g of ZnCO₃.

### Examples 1-16 to 1-18

Except that in the preparation process of co-doped lithium manganese phosphate inner core of example 1-16, ferrous carbonate was replaced with 466.4 g of NiCOs, 5.0 g of zinc carbonate and 7.2 g of titanium sulfate; except that in the preparation process of co-doped lithium manganese phosphate inner core of example 1-17, 455.2 g of ferrous carbonate and 8.5 g of vanadium dichloride were used; and except that in the preparation process of co-doped lithium manganese phosphate inner core of example 1-18, 455.2 g of ferrous carbonate, 4.9 g of vanadium dichloride and 2.5 g of magnesium carbonate were used, the conditions in examples 1-17 to 1-19 were the same as example 1-7.

### Examples 1-19 to 1-20

Except that in the preparation process of co-doped lithium manganese phosphate inner core of example 1-19, 369.4 g of lithium carbonate was used, and dilute sulfuric acid was replaced with 1.05 g of 60% dilute nitric acid; and except that in the preparation process of co-doped lithium manganese phosphate inner core of example 1-20, 369.7 g of lithium carbonate was used, and dilute sulphuric acid was replaced with 0.78 g of metasilicic acid, the conditions in examples 1-19 to 1-20 were the same as example 1-18.

### Examples 1-21 to 1-22

Except that in the preparation process of the co-doped lithium manganese phosphate inner core of example 1-21, 632.0 g of manganese carbonate, 463.30 g of ferrous carbonate, 30.5 g of vanadium dichloride, 21.0 g of magnesium carbonate and 0.78 g of metasilicic acid were used; and in the preparation process of the co-doped lithium manganese phosphate inner core of example 1-22, 746.9 g of manganese carbonate, 289.6 g of ferrous carbonate, 60.9 g of vanadium dichloride, 42.1 g of magnesium carbonate and 0.78 g of metasilicic acid were used, the conditions in examples 1-21 to 1-22 were the same as example 1-20.

### Examples 1-23 to 1-24

Except that in the preparation process of the co-doped lithium manganese phosphate inner core of example 1-23, 804.6 g of manganese carbonate, 231.7 g of ferrous carbonate, 1156.2 g of ammonium dihydrogen phosphate, 1.2 g of boric acid (with a mass fraction of 99.5%) and 370.8 g of lithium carbonate were used; and in the preparation process of the co-doped lithium manganese phosphate inner core of example 1-24, 862.1 g of manganese carbonate, 173.8 g of ferrous carbonate, 1155.1 g of ammonium dihydrogen phosphate, 1.86 g of boric acid (with a mass fraction of 99.5%) and 371.6 g of lithium carbonate were used, the conditions in examples 1-23 to 1-24 were the same as example 1-22.

### Example 1-25

The conditions in example 1-25 were the same as Example 1-20, except that in the preparation process of the co-doped lithium manganese phosphate inner core of example 1-25, 370.1 g of lithium carbonate, 1.56 g of metasilicic acid and 1147.7 g of ammonium dihydrogen phosphate were used.

### Example 1-26

The conditions in example 1-26 were the same as Example 1-20, except that in the preparation process of the co-doped lithium manganese phosphate inner core of example 1-26, 368.3 g of lithium carbonate, 4.9 g of dilute sulfuric acid (with a mass fraction of 60%), 919.6 g of manganese carbonate, 224.8 g of ferrous carbonate, 3.7 g of vanadium dichloride, 2.5 g of magnesium carbonate and 1146.8 g of ammonium dihydrogen phosphate were used.

### Example 1-27

The conditions in example 1-27 were the same as example 1-20, except that in the preparation process of the co-doped lithium manganese phosphate inner core of example 1-27, 367.9 g of lithium carbonate, 6.5 g of 60% dilute sulfuric acid and 1145.4 g of ammonium dihydrogen phosphate were used.

### Examples 1-28 to 1-33

Except that in the preparation process of the co-doped lithium manganese phosphate inner core of examples 1-28 to 1-33, 1034.5 g of manganese carbonate, 108.9 g of ferrous carbonate, 3.7 g of vanadium dichloride and 2.5 g of magnesium carbonate were used; the amounts of lithium carbonate were respectively: 367.6 g, 367.2 g, 366.8 g, 366.4 g, 366.0 g and 332.4 g; the amounts of ammonium dihydrogen phosphate were respectively: 1144.5 g, 1143.4 g, 1142.2 g, 1141.1 g, 1139.9 g and 1138.8 g; and the amounts of 60% dilute sulfuric acid were respectively: 8.2 g, 9.8 g, 11.4 g, 13.1 g, 14.7 g and 16.3 g, the conditions in examples 1-28 to 1-33 were the same as example 1-20.

### Examples 2-1 to 2-4

### Example 2-1

Except that in the preparation process of lithium iron pyrophosphate (Li₂FeP₂O₇), in the powder sintering step, the sintering temperature was 550°C and the sintering time was 1 h to control the crystallinity of Li₂FeP₂O₇ to be 30%; and except that in the preparation process of lithium iron phosphate (LiFePO₄), in the coating sintering step, the sintering temperature was 650°C and the sintering time was 2 h to control the crystallinity of LiFePO₄ to be 30%, other conditions were the same as example 1-1.

### Example 2-2

Except that in the preparation process of lithium iron pyrophosphate (Li₂FeP₂O₇), in the powder sintering step, the sintering temperature was 550°C and the sintering time was 2 h to control the crystallinity of Li₂FeP₂O₇ to be 50%; and except that in the preparation process of lithium iron phosphate (LiFePO₄), in the coating sintering step, the sintering temperature was 650°C and the sintering time was 3 h to control the crystallinity of LiFePO₄ to be 50%, other conditions were the same as example 1-1.

### Example 2-3

Except that in the preparation process of lithium iron pyrophosphate (Li₂FeP₂O₇), in the powder sintering step, the sintering temperature was 600°C and the sintering time was 3 h to control the crystallinity of Li₂FeP₂O₇ to be 70%; and except that in the preparation process of lithium iron phosphate (LiFePO₄), in the coating sintering step, the sintering temperature was 650°C and the sintering time was 4 h to control the crystallinity of LiFePO₄ to be 70%, other conditions were the same as example 1-1.

### Example 2-4

Except that in the preparation process of lithium iron pyrophosphate (Li₂FeP₂O₇), in the powder sintering step, the sintering temperature was 650°C and the sintering time was 4 h to control the crystallinity of Li₂FeP₂O₇ to be 100%; and except that in the preparation process of lithium iron phosphate (LiFePO₄), in the coating sintering step, the sintering temperature was 700°C and the sintering time was 6 h to control the crystallinity of LiFePO₄ to be 100%, other conditions were the same as example 1-1.

### Examples 3-1 to 3-12

Except that in the preparation process of Fe, Co and V co-doped manganese oxalate particles, the heating temperature/stirring time in the reaction kettle of example 3-1 was 60°C/120 min, respectively; the heating temperature/stirring time in the reaction kettle of example 3-2 was 70°C/120 min, respectively; the heating temperature/stirring time in the reaction kettle of example 3-3 was 80°C/120 min, respectively; the heating temperature/stirring time in the reaction kettle of example 3-4 was 90°C/120 min, respectively; the heating temperature/stirring time in the reaction kettle of example 3-5 was 100°C/120 min, respectively; the heating temperature/stirring time in the reaction kettle of example 3-6 was 110°C/120 min, respectively; the heating temperature/stirring time in the reaction kettle of example 3-7 was 120°C/120 min, respectively; the heating temperature/stirring time in the reaction kettle of example 3-8 was 130°C/120 min, respectively; the heating temperature/stirring time in the reaction kettle of example 3-9 was 100°C/60 min, respectively; the heating temperature/stirring time in the reaction kettle of example 3-10 was 100°C/90 min, respectively; the heating temperature/stirring time in the reaction kettle of example 3-11 was 100°C/150 min, respectively; and the heating temperature/stirring time in the reaction kettle of example 3-12 was 100°C/180 min, respectively, the other conditions in examples 3-1 to 3-12 were the same as example 1-1.

### Examples 4-1 to 4-7

**Examples 4-1 to 4-4:** Except that in the drying step during the preparation process of lithium iron pyrophosphate (Li₂FeP₂O₇), the drying temperature/drying time was 100°C/4 h, 150°C/6 h, 200°C/6 h and 200°C/6 h, respectively; and in the sintering step during the preparation process of lithium iron pyrophosphate (Li₂FeP₂O₇), the sintering temperature and sintering time were 700°C/6 h, 700°C/6 h, 700°C/6 h and 600°C/6 h, respectively, the other conditions were the same as example 1-7.

**Examples 4-5 to 4-7:** Except that in the coating process, the drying temperature/drying time in the drying step was 150°C/6 h, 150°C/6 h and 150°C/6 h, respectively; and in the coating process, the sintering temperature and sintering time in the sintering step were 600°C/4 h, 600°C/6 h and 800°C/8 h, respectively, the other conditions were the same as example 1-12.

### Comparative example 1-1

**Preparation of manganese oxalate:** 1149.3 g of manganese carbonate was added to a reaction kettle, and 5 L of deionized water and 1260.6 g of oxalic acid dihydrate (in C₂H₂O₄•2H₂O, the same below) were added. The reaction kettle was heated to 80°C, stirring was performed at a rotation speed of 600 rpm for 6 hours until the reaction was completed (no bubble was generated) to obtain a manganese oxalate suspension. Then, the suspension was filtered, and the filter cake was dried at 120°C and then ground to obtain manganese oxalate dihydrate particles with a median particle size Dv50 of 100 nm.

**Preparation of carbon-coated lithium manganese phosphate:** 1789.6 g of the manganese oxalate dihydrate particles obtained above, 369.4 g of lithium carbonate (in Li₂CO₃, the same below), 1150.1 g of ammonium dihydrogen phosphate (in NH₄H₂PO₄, the same below), and 31 g of sucrose (in C₁₂H₂₂O₁₁, the same below) were added into 20 L of deionized water, and the mixture was stirred for 10 hours until uniformly mixed, so as to obtain a slurry. The slurry was transferred to a spray drying device for spray-drying granulation at a set drying temperature of 250°C for 4 hours to obtain a powder. The above powder was sintered at 700°C for 4 hours in a protective atmosphere of nitrogen (90% by volume) + hydrogen (10% by volume), so as to obtain carbon-coated lithium manganese phosphate.

### Example 1-34

Except that 689.5 g of manganese carbonate was used and 463.3 g of ferrous carbonate was additionally added, the other conditions were the same as comparative example 1-1.

### Example 1-35

Except that 1148.9 g of ammonium dihydrogen phosphate and 369.0 g of lithium carbonate were used, and 1.6 g of 60% dilute sulfuric acid was additionally added, the other conditions were the same as comparative example 1-1.

### Example 1-36

Except that 689.5 g of manganese carbonate, 1148.9 g of ammonium dihydrogen phosphate, and 369.0 g of lithium carbonate were used and 463.3 g of ferrous carbonate and 1.6 g of 60% dilute sulfuric acid were additionally added, the other conditions were the same as comparative example 1-1.

### Example 1-37

Except for the following additional steps: **Preparation of lithium iron pyrophosphate powder:** 9.52 g of lithium carbonate, 29.9 g of ferrous carbonate, 29.6 g of ammonium dihydrogen phosphate, and 32.5 g of oxalic acid dihydrate were dissolved in 50 ml of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li₂FeP₂O₇, and the suspension was filtered, washed with deionized water, and dried at 120°C for 4 hours to obtain a powder. the powder was sintered at 500°C under a nitrogen atmosphere for 4 h, and naturally cooled to room temperature and then ground to control the crystallinity of Li₂FeP₂O₇ to be 5%; and during the preparation a carbon-coated material, the amount of Li₂FeP₂O₇ was 62.8 g, the other conditions were the same as example 1-36.

### Example 1-38

Except for the following additional steps: **Preparation of lithium iron phosphate suspension:** Except that 14.7 g of lithium carbonate, 46.1 g of ferrous carbonate, 45.8 g of ammonium dihydrogen phosphate and 50.2 g of oxalic acid dihydrate were dissolved in 500 ml of deionized water, and the mixture was then stirred for 6 hours and completely reacted; and then, the reacted solution was heated to 120°C and held at the temperature for 6 hours to obtain a suspension comprising LiFePO₄; in the preparation process of lithium iron phosphate (LiFePO₄), the sintering temperature was 600°C and the sintering time was 4 h in the coating sintering step to control the crystallinity of LiFePO₄ to be 8%; and when preparing a carbon-coated material, the amount of LiFePO₄ was 62.8 g, the other conditions were the same as example 1-36.

### Example 1-39

**Preparation of lithium iron pyrophosphate powder:** 2.38 g of lithium carbonate, 7.5 g of ferrous carbonate, 7.4 g of ammonium dihydrogen phosphate, and 8.1 g of oxalic acid dihydrate were dissolved in 50 ml of deionized water. The pH of the mixture was 5, and the mixture was stirred for 2 hours such that the reaction mixture was fully reacted. Then, the reacted solution was heated to 80°C and held at the temperature for 4 hours to obtain a suspension comprising Li₂FeP₂O₇, and the suspension was filtered, washed with deionized water, and dried at 120°C for 4 h to obtain a powder. The powder was sintered at 500°C in a nitrogen atmosphere for 4 hours, naturally cooled to room temperature, and then ground to control the crystallinity of Li₂FeP₂O₇ to be 5%.

**Preparation of lithium iron phosphate suspension:** Except that 11.1 g of lithium carbonate, 34.7 g of ferrous carbonate, 34.4 g of ammonium dihydrogen phosphate, 37.7 g of oxalic acid dihydrate and 37.3 g of sucrose (in C₁₂H₂₂O₁₁, the same below) were dissolved in 1500 ml of deionized water, and the mixture was then stirred for 6 hours and completely reacted; Then, the reacted solution was heated to 120°C and held at the temperature for 6 hours to obtain a suspension comprising LiFePO₄.

15.7 g of the lithium iron pyrophosphate powder obtained was added to the above lithium iron phosphate (LiFePO₄) and sucrose suspension; and in the preparation process, the sintering temperature was 600°C and the sintering time was 4 h in the coating sintering step to control the crystallinity of LiFePO₄ to be 8%, the other conditions in comparative example 7 were the same as comparative example 4, thereby obtaining amorphous lithium iron pyrophosphate, amorphous lithium iron phosphate, and carbon-coated positive electrode active material.

### Examples (1-40) - (1-43)

Except that in the preparation process of lithium iron pyrophosphate (Li₂FeP₂O₇), in the drying step in examples 1-40 to 1-42, the drying temperature/drying time was 80°C/3 h, 80°C/3 h and 80°C/3 h, respectively; in the preparation process of lithium iron pyrophosphate (Li₂FeP₂O₇), in the sintering step in examples 1-40 to 1-42, the sintering temperature/sintering time was 400°C/3 h, 400°C/3 h and 350°C/2 h, respectively; in example 1-43, in the preparation process of lithium iron phosphate (LiFePO₄), the drying temperature/drying time in the drying step was 80°C/3 h; and in examples 1-40 to 1-42, the amount of Li₂FeP₂O₇/LiFePO₄ was 47.2 g/15.7 g, 15.7 g/47.2 g, 62.8 g/0 g, and 0 g/62.8 g, respectively, the other conditions were the same as example 1-7.

The [Preparation of positive electrode plate], [Preparation of negative electrode plate], [Preparation of electrolyte solution], [Separator] and [Preparation of battery] of the above examples and comparative examples were all the same as example 1-1.

**Table 1-1 Performance test results of examples 1-1 to 1-33 and comparative example 1-1**

| Example No. | Inner core | First coating layer | Second coating layer | Lattice change rate (%) | Li/Mn antisite defect concentr ation/% | Dissoluti on of Fe and Mn after cycling (ppm) | Surface oxygen valency | Capacity per gram of button battery at 0.1 C (mAh/g) | Average discharge voltage of button battery (V) | Expansio n of cell upon 30 days of storage at 60°C (%) | Number of cycles correspond! ng to 80% capacity retention rate at 45°C |
|---|---|---|---|---|---|---|---|---|---|---|---|
| Example 1-1 | Li_{0.999}Mn_{0.60}Fe_{0.39 3}V_{0.004}Co_{0.003}P_{0.999} S_{0.001}O₄ | 1% Li₂FeP₂O₇/3% LiFePO₄ | 2% of carbon | 2.4 | 0.4 | 8 | -1.98 | 158.2 | 3.78 | 1.9 | 1328 |
| Example 1-2 | Li_{0.999}Mn_{0.60}Fe_{0.40} P_{0.999}S_{0.001}O₄ | 0.8% Li₂FeP₂O₇/2.4 % LiFePO₄ | 1% of carbon | 6.6 | 1.2 | 63 | -1.97 | 148.9 | 3.75 | 6.4 | 804 |
| Example 1-3 | Li_{0.999}Mn_{0.60}Fe_{0.40} P_{0.999}S_{0.001}O₄ | 1% Li₂FeP₂O₇/3% LiFePO₄ | 1% of carbon | 6.5 | 1.1 | 48 | -1.97 | 148.5 | 3.74 | 5.3 | 918 |
| Example 1-4 | Li_{0.999}Mn_{0.60}Fe_{0.40} P_{0.999}S_{0.001}O₄ | 1.2% Li₂FeP₂O₇/3.6 % LiFePO₄ | 1% of carbon | 6.5 | 0.8 | 32 | -1.97 | 147.3 | 3.73 | 4.8 | 968 |
| Example 1-5 | Li_{0.999}Mn_{0.60}Fe_{0.40} P_{0.999}S_{0.001}O₄ | 1.4% Li₂FeP₂O₇/4.2 % LiFePO₄ | 1% of carbon | 6.5 | 0.7 | 20 | -1.98 | 146.8 | 3.73 | 3.6 | 1064 |
| Example 1-6 | Li_{0.999}Mn_{0.60}Fe_{0.40} P_{0.999}S_{0.001}O₄ | 1.6% Li₂FeP₂O₇/4.8 % LiFePO₄ | 1% of carbon | 6.6 | 0.6 | 15 | -1.98 | 145.9 | 3.72 | 2.8 | 1189 |
| Example 1-7 | Li_{0.999}Mn_{0.60}Fe_{0.40} P_{0.999}S_{0.001}O₄ | 1% Li₂FeP₂O₇/3% LiFePO₄ | 2% of carbon | 6.5 | 1.0 | 42 | -1.97 | 147.5 | 3.73 | 4.8 | 968 |
| Example 1-8 | Li_{0.999}Mn_{0.60}Fe_{0.40} P_{0.999}S_{0.001}O₄ | 1% Li₂FeP₂O₇/3% LiFePO₄ | 4% of carbon | 6.5 | 1.0 | 38 | -1.97 | 146.4 | 3.73 | 4.3 | 1012 |
| Example 1-9 | Li_{0.999}Mn_{0.60}Fe_{0.40} P_{0.999}S_{0.001}O₄ | 1% Li₂FeP₂O₇/3% LiFePO₄ | 5% of carbon | 6.4 | 1.1 | 29 | -1.98 | 144.3 | 3.73 | 3.7 | 1108 |
| Example 1-10 | Li_{0.999}Mn_{0.60}Fe_{0.40} P_{0.999}S_{0.001}O₄ | 1% Li₂FeP₂O₇/3% LiFePO₄ | 6% of carbon | 6.4 | 1.1 | 18 | -1.98 | 142.1 | 3.73 | 2.8 | 1219 |
| Example 1-11 | Li_{0.999}Mn_{0.60}Fe_{0.40} P_{0.999}S_{0.001}O₄ | 1.5% Li₂FeP₂O₇/2.5 % LiFePO₄ | 2% of carbon | 6.5 | 1.1 | 34 | -1.97 | 147.8 | 3.74 | 5.2 | 927 |
| Example 1-12 | Li_{0.999}Mn_{0.60}Fe_{0.40} P_{0.999}S_{0.001}O₄ | 2% Li₂FeP₂O₇/2% LiFePO₄ | 2% of carbon | 6.6 | 1.0 | 22 | -1.96 | 147.6 | 3.74 | 6.1 | 897 |
| Example 1-13 | Li_{0.999}Mn_{0.60}Fe_{0.40} P_{0.999}S_{0.001}O₄ | 2.5% Li₂FeP₂O₇/1.5 % LiFePO₄ | 2% of carbon | 6.7 | 1.2 | 18 | -1.96 | 147.2 | 3.74 | 6.9 | 816 |
| Example 1-14 | Li_{0.999}Mn_{0.60}Fe_{0.40} P_{0.999}S_{0.001}O₄ | 3% Li₂FeP₂O₇/1% LiFePO₄ | 2% of carbon | 6.7 | 1.1 | 9 | -1.97 | 147.0 | 3.75 | 7.5 | 764 |
| Example 1-15 | Li_{0.999}Mn_{0.60}Zn_{0.40} P_{0.999}S_{0.001}O₄ | 3% Li₂FeP₂O₇/1% LiFePO₄ | 2% of carbon | 7.5 | 2.5 | 18 | -1.97 | 138.7 | 3.86 | 8.4 | 857 |
| Example 1-16 | Li_{0.993}Mn_{0.6}Ni_{0.393} Zn_{0.004}Ti_{0.003}P_{0.999} S_{0.001}O₄ | 1% Li₂FeP₂O₇/3% LiFePO₄ | 2% of carbon | 5.4 | 0.8 | 14 | -1.97 | 139.4 | 3.86 | 4.5 | 974 |
| Example 1-17 | Li_{0.999}Mn_{0.60}Fe_{0.39 3}V_{0.007}P_{0.999}S_{0.001}O ₄ | 1% Li₂FeP₂O₇/3% LiFePO₄ | 2% of carbon | 4.2 | 0.6 | 13 | -1.97 | 153.2 | 3.78 | 3.2 | 1241 |
| Example 1-18 | Li_{0.999}Mn_{0.60}Fe_{0.39 3}V_{0.004}Mg_{0.003}P_{0.99 9}S_{0.001}O₄ | 1% Li₂FeP₂O₇/3% LiFePO₄ | 2% of carbon | 2.6 | 0.5 | 10 | -1.97 | 155.6 | 3.80 | 2.7 | 1245 |
| Example 1-19 | LiMn_{0.60}Fe_{0.393}V_{0. 004}Mg_{0.003}P_{0.999}N_{0. 001}O₄ | 1% Li₂FeP₂O₇/3% LiFePO₄ | 2% of carbon | 2.3 | 0.5 | 9 | -1.98 | 157.6 | 3.80 | 2.1 | 1349 |
| Example 1-20 | Li_{1.001}Mn_{0.60}Fe_{0.39 3}V_{0.004}Mg_{0.003}P_{0.99 9}Si_{0.001}O₄ | 1% Li₂FeP₂O₇/3% LiFePO₄ | 2% of carbon | 2.4 | 0.7 | 11 | -1.98 | 157.4 | 3.80 | 2.4 | 1368 |
| Example 1-21 | Li_{1.001}Mn_{0.55}Fe_{0.40} V_{0.035}Mg_{0.035}P_{0.999} Si_{0.001}O₄ | 1% Li₂FeP₂O₇/3% LiFePO₄ | 2% of carbon | 2.2 | 0.5 | 8 | -1.98 | 158.4 | 3.72 | 2.0 | 1459 |
| Example 1-22 | Li_{1.001}Mn_{0.65}Fe_{0.25} V_{0.05}Mg_{0.05}P_{0.999}Si _{0.001}O₄ | 1% Li₂FeP₂O₇/3% LiFePO₄ | 2% of carbon | 2.5 | 0.8 | 12 | -1.98 | 156.9 | 3.83 | 2.8 | 1283 |
| Example 1-23 | Li_{1.004}Mn_{0.7}Fe_{0.2}V _{0.05}Mg_{0.05}P_{0.998}B_{0.0 0.2}O₄ | 1% Li₂FeP₂O₇/3% LiFePO₄ | 2% of carbon | 2.6 | 0.8 | 11 | -1.98 | 157.1 | 3.83 | 2.5 | 1268 |
| Example 1-24 | Li_{1.000}Mn_{0.75}Fe_{0.15} V_{0.05}Mg_{0.05}P_{0.997}B _{0.003}O₄ | 1% Li₂FeP₂O₇/3% LiFePO₄ | 2% of carbon | 2.6 | 0.8 | 10 | -1.98 | 157.4 | 3.83 | 2.6 | 1329 |
| Example 1-25 | Li_{1.003}Mn_{0.60}Fe_{0.39 3}V_{0.004}Mg_{0.003}P_{0.99 8}Si_{0.002}O₄ | 1% Li₂FeP₂O₇/3% LiFePO₄ | 2% of carbon | 2.3 | 0.7 | 10 | -1.98 | 157.3 | 3.78 | 2.4 | 1369 |
| Example 1-26 | Li_{0.997}Mn_{0.80}Fe_{0.19 4}V_{0.003}Mg_{0.003}P_{0.997}S_{0.003}O₄ | 1% Li₂FeP₂O₇/3% LiFePO₄ | 2% of carbon | 2.8 | 0.9 | 12 | -1.98 | 156.1 | 3.85 | 2.9 | 1128 |
| Example 1-27 | Li_{0.996}Mn_{0.60}Fe_{0.39 3}V_{0.004}Mg_{0.003}P_{0.99 6}S_{0.004}O₄ | 1% Li₂FeP₂O₇/3% LiFePO₄ | 2% of carbon | 2.2 | 0.6 | 11 | -1.98 | 157.5 | 3.78 | 2.4 | 1394 |
| Example 1-28 | Li_{0.995}Mn_{0.9}Fe_{0.094} V_{0.003}Mg_{0.003}P_{0.995} S_{0.005}O₄ | 1% Li₂FeP₂O₇/3% LiFePO₄ | 2% of carbon | 3.2 | 1.1 | 13 | -1.96 | 156.8 | 3.89 | 3.2 | 1089 |
| Example 1-29 | Li_{0.994}Mn_{0.90}Fe_{0.09 4}V_{0.003}Mg_{0.003}P_{0.99 4}S_{0.006}O₄ | 1% Li₂FeP₂O₇/3% LiFePO₄ | 2% of carbon | 3.0 | 1.2 | 14 | -1.95 | 156.1 | 3.89 | 3.2 | 1038 |
| Example 1-30 | Li_{0.993}Mn_{0.90}Fe_{0.09 4}V_{0.003}Mg_{0.003}P_{0.99 3}S_{0.007}O₄ | 1% Li₂FeP₂O₇/3% LiFePO₄ | 2% of carbon | 2.8 | 1.4 | 16 | -1.95 | 155.8 | 3.89 | 3.1 | 948 |
| Example 1-31 | Li_{0.993}Mn_{0.90}Fe_{0.09 4}V_{0.003}Mg_{0.003}P_{0.99 2}S_{0.008}O₄ | 1% Li₂FeP₂O₇/3% LiFePO₄ | 2% of carbon | 2.6 | 1.4 | 17 | -1.94 | 155.4 | 3.89 | 3.0 | 917 |
| Example 1-32 | Li_{0.991}Mn_{0.90}Fe_{0.09 4}V_{0.003}Mg_{0.003}P_{0.99 1}S_{0.009}O₄ | 1% Li₂FeP₂O₇/3% LiFePO₄ | 2% of carbon | 2.4 | 1.2 | 18 | -1.94 | 154.8 | 3.89 | 2.8 | 897 |
| Example 1-33 | Li_{0.9}Mn_{0.90}Fe_{0.094} V_{0.003}Mg_{0.003}P_{0.9}S _{0.1}O₄ | 1% Li₂FeP₂O₇/3% LiFePO₄ | 2% of carbon | 2.1 | 0.9 | 20 | -1.94 | 154.5 | 3.89 | 2.7 | 879 |
| Comparat ive example 1-1 | LiMnPO₄ | - | 1% of carbon | 11.4 | 3.2 | 2060 | -1.55 | 125.6 | 4.02 | 48.6 | 185 |
| Example 1-34 | LiMn_{0.60}Fe_{0.40}PO₄ | - | 1% of carbon | 8.7 | 2.8 | 1597 | -1.76 | 134.8 | 3.76 | 42.5 | 358 |
| Example 1-35 | Li_{0.999}MnP_{0.999}S_{0.0 01}O₄ | - | 1% of carbon | 9.8 | 2.5 | 1895 | -1.66 | 128.6 | 4.05 | 45.5 | 267 |
| Example 1-36 | Li_{0.999}Mn_{0.60}Fe_{0.40} P_{0.999}S_{0.001}O₄ | - | 1% of carbon | 6.7 | 1.8 | 1279 | -1.83 | 140.5 | 3.78 | 38.5 | 417 |
| Example 1-37 | Li_{0.999}Mn_{0.60}Fe_{0.40} P_{0.999}S_{0.001}O₄ | 4% of amorphous Li₂FeP₂O₇ | 1% of carbon | 6.5 | 1.8 | 208 | -1.90 | 140.3 | 3.73 | 12.5 | 519 |
| Example 1-38 | Li_{0.999}Mn_{0.60}Fe_{0.40} P_{0.999}S_{0.001}O₄ | 4% of amorphous LiFePO₄ | 1% of carbon | 6.6 | 1.8 | 318 | -1.91 | 140.2 | 3.74 | 11.5 | 528 |
| Example 1-39 | Li_{0.999}Mn_{0.60}Fe_{0.40} P_{0.999}S_{0.001}O₄ | 1% of amorphous Li₂FeP₂O₇ + 3% of amorphous LiFePO₄ | 1% of carbon | 6.6 | 1.8 | 174 | -1.90 | 140.1 | 3.75 | 8.6 | 682 |
| | Note: 1) the crystallinity of both Li₂FeP₂O₇ and LiFePO₄ in examples 1-1 to 1-33 is 100%; and 2) in the comparative example, the crystallinity of Li₂FeP₂O₇ is 5%, and the crystallinity of LiFePO₄ is 8%. | | | | | | | | | | |

From the combination of the above examples and comparative example, it can be seen that the existence of the first coating layer is beneficial to reducing the Li/Mn antisite defect concentration and the dissolution of Fe and Mn after cycling of the obtained material, increasing the capacity per gram of the button battery, and improving the safety performance and cycling performance of the battery. When the Mn site and the phosphorus site are respectively doped with other elements, the lattice change rate, antisite defect concentration, and dissolution of Fe and Mn of the obtained material can be significantly reduced, the capacity per gram of the battery can be increased, and the safety performance and cycling performance of the battery can be improved.

From the combination of examples 1-1 to 1-6, it can be seen that as the amount of the first coating layer increases from 3.2% to 6.4%, the Li/Mn antisite defect concentration and the dissolution of Fe and Mn after cycling of the obtained material are gradually reduced, and the safety performance and cycling performance at 45°C of the corresponding battery are also improved, but the capacity per gram of the button battery is reduced slightly. Optionally, when the total amount of the first coating layer is 4-5.6 wt%, the overall performance of the corresponding battery is the best.

From the combination of examples 1-3 and examples 1-7 to 1-10, it can be seen that as the amount of the second coating layer increases from 1% to 6%, the Li/Mn antisite defect concentration and the dissolution of Fe and Mn after cycling of the obtained material are gradually reduced, and the safety performance and cycling performance at 45°C of the corresponding battery are also improved, but the capacity per gram of the button battery is reduced slightly. Optionally, when the total amount of the second coating layer is 3-5 wt%, the overall performance of the corresponding battery is the best.

From the combination of examples 1-11 to 1-15 and examples 1-37 and 1-38, it can be seen that when the first coating layer comprises both Li₂FeP₂O₇ and LiFePO₄, and in particular the weigh ratio of Li₂FeP₂O₇ to LiFePO₄ is 1 : 3 to 3 : 1, especially 1 : 3 to 1 : 1, the performance of the battery is improved.

**Table 1-2 Performance test results of examples 2-1 to 2-4**

| Example No. | First coating layer | Crystallinity of pyrophosphate and phosphate¹ | Lattice change rate (%) | Li/Mn antisite defect concentration/% | Dissolution of Fe and Mn after cycling (ppm) | Surface oxygen valency | Capacity of button battery at 0.1C (mAh/g) | Average discharge voltage of button battery (V) | Expansion of cell upon 30 days of storage at 60°C (%) | Cycling capacity retention rate at 45°C |
|---|---|---|---|---|---|---|---|---|---|---|
| Example 2-1 | 1% Li₂FeP₂O₇/3% LiFePO₄ | 30% | 6.3 | 1.9 | 147 | -1.88 | 145.2 | 3.72 | 5.6 | 698 |
| Example 2-2 | 1% Li₂FeP₂O₇/3% LiFePO₄ | 50% | 4.7 | 1.2 | 97 | -1.89 | 149.2 | 3.74 | 4.7 | 869 |
| Example 2-3 | 1% Li₂FeP₂O₇/3% LiFePO₄ | 70% | 3.5 | 0.8 | 29 | -1.91 | 151.3 | 3.75 | 3.8 | 1027 |
| Example 2-4 | 1% Li₂FeP₂O₇/3% LiFePO₄ | 100% | 2.4 | 0.4 | 8 | -1.98 | 158.2 | 3.79 | 1.9 | 1328 |
| | ¹: it means that the crystallinity of Li₂FeP₂O₇ and LiFePO₄ is 30%, 50%, 70%, and 100%, respectively. | | | | | | | | | |

It can be seen from Table 1-2 that as the crystallinity of pyrophosphate and phosphate in the first coating layer gradually increases, the lattice change rate, Li/Mn antisite defect concentration, and dissolution of Fe and Mn of the corresponding material are gradually decreased, the capacity of the button battery is gradually increased, and the safety performance and cycling performance of the battery are also gradually improved.

**Table 1-3 Performance test results of examples 3-1 to 3-12**

| Example No. | Type and amount of doping element | Temper ature in reaction kettle(° C) | Stirring time/min | Lattice change rate (%) | Li/Mn antisite defect concentrati on/% | Dissoluti on of Fe and Mn after cycling (ppm) | Surfa ce oxyge n valen cy | Capaci ty of button battery at 0.1C (mAh/ g) | Average discharg e voltage of button battery (V) | Expansio n of cell upon 30 days of storage at 60°C (%) | Number of cycles for capacity retention rate of 80% at 45°C |
|---|---|---|---|---|---|---|---|---|---|---|---|
| Example 3-1 | Li_{0.999}Mn_{0.60}Fe_{0.393}V_{0.00 4}Co_{0.003}P_{0.999}S_{0.001}O₄ | 60 | 120 | 5.6 | 2.4 | 49 | -1.98 | 155.2 | 3.67 | 5.6 | 1102 |
| Example 3-2 | Li_{0.999}Mn_{0.60}Fe_{0.393}V_{0.00 4}Co_{0.003}P_{0.999}S_{0.001}O₄ | 70 | 120 | 4.8 | 1.9 | 37 | -1.98 | 155.7 | 3.69 | 4.7 | 1203 |
| Example 3-3 | Li_{0.999}Mn_{0.60}Fe_{0.393}V_{0.00 4}Co_{0.003}P_{0.999}S_{0.001}O₄ | 80 | 120 | 3.7 | 1.3 | 28 | -1.98 | 156.4 | 3.72 | 3.8 | 1275 |
| Example 3-4 | Li_{0.999}Mn_{0.60}Fe_{0.393}V_{0.00 4}Co_{0.003}P_{0.999}S_{0.001}O₄ | 90 | 120 | 2.9 | 1.1 | 17 | -1.98 | 157.8 | 3.75 | 3.1 | 1305 |
| Example 3-5 | Li_{0.999}Mn_{0.60}Fe_{0.393}V_{0.00 4}Co_{0.003}P_{0.999}S_{0.001}O₄ | 100 | 120 | 2.5 | 0.5 | 9 | -1.98 | 158.5 | 3.78 | 2.4 | 1327 |
| Example 3-6 | Li_{0.999}Mn_{0.60}Fe_{0.393}V_{0.00 4}Co_{0.003}P_{0.999}S_{0.001}O₄ | 110 | 120 | 2.8 | 1.2 | 19 | -1.98 | 156.7 | 3.73 | 3.6 | 1257 |
| Example 3-7 | Li_{0.999}Mn_{0.60}Fe_{0.393}V_{0.00 4}Co_{0.003}P_{0.999}S_{0.001}O₄ | 120 | 120 | 3.7 | 2.1 | 38 | -1.98 | 154.8 | 3.69 | 4.8 | 1179 |
| Example 3-8 | Li_{0.999}Mn_{0.60}Fe_{0.393}V_{0.00 4}Co_{0.003}P_{0.999}S_{0.001}O₄ | 130 | 120 | 4.5 | 3.4 | 46 | -1.98 | 153.7 | 3.64 | 6.3 | 986 |
| Example 3-9 | Li_{0.999}Mn_{0.60}Fe_{0.393}V_{0.00 4}Co_{0.003}P_{0.999}S_{0.001}O₄ | 100 | 60 | 4.9 | 3.1 | 38 | -1.98 | 155.4 | 3.76 | 4.9 | 1021 |
| Example 3-10 | Li_{0.999}Mn_{0.60}Fe_{0.393}V_{0.00 4}Co_{0.003}P_{0.999}S_{0.001}O₄ | 100 | 90 | 4.1 | 2.5 | 27 | -1.98 | 156.3 | 3.77 | 4.2 | 1097 |
| Example 3-11 | Li_{0.999}Mn_{0.60}Fe_{0.393}V_{0.004}CO_{0.003}P_{0.999}S_{0.001}O₄ | 100 | 150 | 3.5 | 1.1 | 15 | -1.98 | 157.8 | 3.79 | 3.1 | 1184 |
| Example 3-12 | Li_{0.999}Mn_{0.60}Fe_{0.393}V_{0.00 4}Co_{0.003}P_{0.999}S_{0.001}O₄ | 100 | 180 | 2.5 | 0.5 | 11 | -1.98 | 158.1 | 3.79 | 2.4 | 1297 |
| Note | 1. The parameters of the temperature and stirring time in the reaction kettle are those during the preparation of doped manganese oxalate (i.e., step (1)). | | | | | | | | | | |

It can be seen from Table 1-3 that the various performance of the positive electrode material of the present application can be further improved by adjusting the reaction temperature and reaction time in the reaction kettle during the preparation of manganese oxalate particles. For example, when the reaction temperature is gradually increased from 60°C to 130°C, the lattice change rate and Li/Mn antisite defect concentration first decrease and then increase, and the corresponding dissolution of metal after cycling and the safety performance also vary in a similar trend, while the capacity and cycling performance of the button battery are first increased and then reduced with the increase of temperature. Similar varying trends also can be achieved by keeping the reaction temperature constant and adjusting the reaction time.

**Table 1-4 Performance test results of examples 4-1 to 4-7 and examples 1-40 to 1-43**

| Exampl e No. | LiiFePi O₇ : LiFePO₄ (weight ratio) | Drying temperatu re (°C) | Drying time (h) | Sintering temperatu re (°C) | Sinterin g time (h) | Lattice spacing of pyrophospha te in first coating layer (nm) | Included angle of pytophosp hate in first coating layer (°) | Lattice spacing of phosphate in first coating layer (nm) | Included Angle of phosphate in first coating layer (°) | Lattice chang e rate (%) | Li/Mn antisite defect concentr ation/% | Surface oxygen valency | Capacity of button battery at 0.1C (mAh/g) | Average discharg e voltage of button battery (V) | Expansi on of cell upon 30 days of storage at 60°C (%) | Numbe r of cycles for capacit y retention rate of 80% at 45°C |
|---|---|---|---|---|---|---|---|---|---|---|---|---|---|---|---|---|
| Exampl e 4-1 | 1 : 3 | 100 | 4 | 700 | 6 | 0.303 | 29.496 | 0.348 | 25.562 | 2.9 | 0.6 | -1.97 | 155.4 | 3.71 | 3.4 | 1183 |
| Example 4-2 | 1 : 3 | 150 | 6 | 700 | 6 | 0.303 | 29.496 | 0.348 | 25.562 | 2.6 | 0.6 | -1.98 | 157.8 | 3.78 | 2.4 | 1347 |
| Exampl e 4-3 | 1 : 3 | 200 | 6 | 700 | 6 | 0.303 | 29.496 | 0.348 | 25.562 | 2.7 | 0.6 | -1.98 | 156.5 | 3.73 | 3.1 | 1277 |
| Exampl e 4-4 | 1 : 3 | 200 | 6 | 600 | 6 | 0.303 | 29.496 | 0.348 | 25.562 | 2.9 | 1.1 | -1.95 | 153.8 | 3.69 | 3.9 | 984 |
| Exampl e 4-5 | 1 : 1 | 150 | 6 | 600 | 4 | 0.303 | 29.496 | 0.348 | 25.562 | 2.8 | 1.2 | -1.94 | 155.5 | 3.71 | 3.5 | 895 |
| Exampl e 4-6 | 1 : 1 | 150 | 6 | 600 | 6 | 0.303 | 29.496 | 0.348 | 25.562 | 2.6 | 0.8 | -1.95 | 156.3 | 3.72 | 3.1 | 963 |
| Exampl e 4-7 | 1 : 1 | 150 | 6 | 800 | 8 | 0.303 | 29.496 | 0.348 | 25.562 | 2.5 | 0.4 | -1.97 | 156.9 | 3.74 | 2.7 | 1043 |
| Exampl e 1-40 | 1 : 3 | 80 | 3 | 400 | 3 | - | - | - | - | 3.9 | 1.8 | -1.91 | 148.0 | 3.67 | 9.4 | 779 |
| Exampl e 1-41 | 1 : 1 | 80 | 3 | 400 | 3 | - | - | - | - | 3.6 | 1.6 | -1.93 | 149.4 | 3.70 | 6.8 | 683 |
| Exampl e 1-42 | Only Li₂FeP₂ O₇ | 80 | 3 | 350 | 2 | - | - | - | - | 3.7 | 1.7 | -1.86 | 147.5 | 3.68 | 11.5 | 385 |
| Exampl e 1-43 | Only LiFePO₄ | 80 | 3 | - | - | - | - | - | - | 3.4 | 1.4 | -1.93 | 150.3 | 3.72 | 4.7 | 526 |

It can be seen from Table 1-4 that the properties of the obtained material can be improved by adjusting the drying temperature/time and the sintering temperature/time in the process of preparing lithium iron pyrophosphate by the method of the present application, thereby improving the performance of the battery. It can be seen from examples 1-40 and 1-43 that when the drying temperature in the preparation process of lithium iron pyrophosphate is lower than 100°C or the temperature in the sintering step is lower than 400°C, Li₂FeP₂O₇, which is expected to be prepared in the present application, will not be obtained, thereby failing to improve the properties of the material as well as the performance of the battery comprising the obtained material.

The above provides a detailed description of preferred embodiments of the present application. However, the present application is not limited to the specific details of the above embodiments and multiple simple variations of the technical solution can be made within the scope of the technical concept of the present application, all of which fall within the scope of protection of the present application.

Furthermore, it should be noted that the various specific technical features described in the detailed description of embodiments above can be combined in any suitable way without contradiction.

In addition, any combination of various different embodiments of the present application is also accessible and should be regarded as the disclosure of the present application as long as same does not depart from the ideas of the present application.

In the description of the present application, it should be understood that the orientation or positional relationships indicated by terms "upper", "lower", "front", "rear", "top", "bottom", "inner", and "outer", etc., is based on the orientation or positional relationships shown in the accompanying drawings and is merely for ease of description of the present application and simplification of the description, rather than indicating or implying that the devices or elements referred to must have a specific orientation or be constructed and operated in a described orientation, and therefore cannot be construed as limiting the present application.

## Claims

1. A positive electrode active material having LiMPO₄, wherein M includes Mn and a non-Mn element, and the non-Mn element satisfies at least one of the following conditions:
the ionic radius of the non-Mn element being denoted as a, and the ionic radius of manganese element being denoted as b, |a-b|/b is not greater than 10%;
the valence alternation voltage of the non-Mn element being denoted as U, 2 V < U < 5.5 V;
the chemical activity of a chemical bond formed by the non-Mn element and O is not less than that of a P-O bond; and
the highest valence of the non-Mn element is not greater than 6.

2. The positive electrode active material according to claim 1, wherein the non-Mn element includes one or two of a first doping element and a second doping element, the first doping element is doped at the manganese site, and the second doping element is doped at the phosphorus site.

3. The positive electrode active material according to claim 2, wherein the first doping element satisfies at least one of the following conditions:
the ionic radius of the first doping element being denoted as a, and the ionic radius of manganese element being denoted as b, |a-b|/b is not greater than 10%; and
the valence alternation voltage of the first doping element being denoted as U, 2 V < U < 5.5 V

4. The positive electrode active material according to claim 2, wherein the second doping element satisfies at least one of the following conditions:
the chemical activity of a chemical bond formed by the second doping element and O is not less than that of a P-O bond; and
the highest valence of the second doping element is not greater than 6.

5. The positive electrode active material according to any one of claims 2-4, wherein the positive electrode active material contains at least two first doping elements.

6. The positive electrode active material according to any one of claims 2-5, wherein the first doping element includes one or more elements selected from Zn, Al, Na, K, Mg, Mo, W, Ti, V, Zr, Fe, Ni, Co, Ga, Sn, Sb, Nb and Ge.

7. The positive electrode active material according to claim 6, wherein the first doping element includes at least two selected from Fe, Ti, V, Ni, Co, and Mg.

8. The positive electrode active material according to any one of claims 2-4, wherein the second doping element includes one or more elements selected from B (boron), S, Si and N.

9. The positive electrode active material according to any one of claims 1-8, wherein the positive electrode active material comprises Li₁₊ₓMn_{1-y}A_{y}P_{1-z}R_{z}O₄, where x is any numerical value in a range of -0.100-0.100, y is any numerical value in a range of 0.001-0.500, z is any numerical value in a range of 0.001-0.100, A includes one or more elements selected from Zn, Al, Na, K, Mg, Mo, W, Ti, V, Zr, Fe, Ni, Co, Ga, Sn, Sb, Nb, and Ge, and
R includes one or more elements selected from B (boron), S, Si and N.

10. The positive electrode active material according to any one of claims 1-8, wherein the positive electrode active material comprises Li₁₊ₓCₘMn_{1-y}A_{y}P_{1-z}R_{z}O₄₋ₙDₙ,
where C includes one or more elements selected from Zn, Al, Na, K, Mg, Nb, Mo and W,
A includes one or more elements selected from Zn, Al, Na, K, Mg, Mo, W, Ti, V, Zr, Fe, Ni, Mg, Co, Ga, Sn, Sb, Nb and Ge,
R includes one or more elements selected from B (boron), S, Si and N,
D includes one or more elements selected from S, F, Cl and Br,
x is any numerical value in a range of 0.100-0.100, y is any numerical value in a range of 0.001-0.500, z is any numerical value in a range of 0.001-0.100, n is any numerical value in a range of 0.001 to 0.1, and m is any numerical value in a range of 0.9 to 1.1.

11. The positive electrode active material according to claim 9 or 10, wherein the ratio of y to 1-y is 1 : 10 to 1 : 1, optionally 1 : 4 to 1 : 1.

12. The positive electrode active material according to claim 9 or 10, wherein the ratio of z to 1-z is 1 : 9 to 1 : 999, optionally 1 : 499 to 1 : 249.

13. The positive electrode active material according to claim 9 or 10, wherein C, R and D are each independently any element within the respective ranges above, and A is at least two elements within the range thereof;
and optionally,
C is selected from any element of Mg and Nb, and/or,
A is at least two elements selected from Fe, Ti, V, Co and Mg, and optionally is Fe and one or more elements selected from Ti, V, Co and Mg, and/or,
R is S, and/or,
D is F.

14. The positive electrode active material according to claim 9 or 10, wherein x is selected from a range of 0.001 to 0.005; and/or, y is selected from a range of 0.01 to 0.5, and optionally from a range of 0.25 to 0.5; and/or, z is selected from a range of 0.001 to 0.005; and/or, n is selected from a range of 0.001 to 0.005.

15. The positive electrode active material according to any one of claims 1-14, wherein the lattice change rate of the positive electrode active material is 8% or less, optionally 4% or less, optionally 3.8% or less, more optionally 2.0-3.8%.

16. The positive electrode active material according to any one of claims 1-15, wherein the Li/Mn antisite defect concentration of the positive electrode active material is 4% or less, optionally 2.2% or less, more optionally 1.5-2.2%, more optionally 2% or less, more optionally 0.5% or less.

17. The positive electrode active material according to any one of claims 1-16, wherein the surface oxygen valency of the positive electrode active material is -1.89 to - 1.98, optionally -1.90 to -1.98, more optionally -1.90 or less, more optionally -1.82 or less.

18. The positive electrode active material according to any one of claims 1-17, wherein the positive electrode active material has a compacted density under 3T of 2.0 g/cm³ or more, optionally 2.2 g/cm³ or more, optionally 2.2 g/cm³ or more and 2.8 g/cm³ or less.

19. The positive electrode active material according to any one of claims 1-18, wherein the positive electrode active material further has a coating layer.

20. The positive electrode active material according to claim 19, wherein the coating layer comprises carbon.

21. The positive electrode active material according to claim 20, wherein the carbon in the coating layer is a mixture of SP2-form carbon and SP3-form carbon, and optionally, the molar ratio of the SP2-form carbon to the SP3-form carbon is any numerical value in a range of 0.1-10, optionally any numerical value in a range of 2.0-3.0.

22. The positive electrode active material according to any one of claims 19-21, wherein the coating layers include an inorganic coating layer and a carbon coating layer, with the inorganic coating layer being provided to be closer to the inner core.

23. The positive electrode active material according to claim 22, wherein the inorganic coating layer contains at least one of a phosphate and a pyrophosphate.

24. The positive electrode active material according to claim 23, wherein the coating layers include a first coating layer coating the inner core and a second coating layer coating the first coating layer,
wherein the first coating layer comprises a pyrophosphate of QP₂O₇ and a phosphate of XPO₄, where Q and X are each independently selected from one or more of Li, Fe, Ni, Mg, Co, Cu, Zn, Ti, Ag, Zr, Nb, or Al; and
the second coating layer comprises carbon.

25. The positive electrode active material according to claim 24, wherein Q includes Li and one or more selected from Fe, Ni, Mg, Co, Cu, Zn, Ti, Ag, Zr, Nb or Al.

26. The positive electrode active material according to claim 23 or 24, wherein the phosphate of the first coating layer has an interplanar spacing of 0.345-0.358 nm and an included angle of crystal orientation (111) of 24.25° - 26.45°; and the pyrophosphate of the first coating layer has an interplanar spacing of 0.293-0.326 nm and an included angle of crystal orientation (111) of 26.41° - 32.57°.

27. The positive electrode active material according to any one of claims 24-26, wherein the coating amount of the first coating layer is greater than 0 wt% and less than or equal to 7 wt%, optionally 4-5.6 wt%, based on the weight of the inner core.

28. The positive electrode active material according to any one of claims 24-27, wherein
the weight ratio of the pyrophosphate to the phosphate in the first coating layer is 1 : 3 to 3 : 1, optionally 1 : 3 to 1 : 1.

29. The positive electrode active material according to any one of claims 24-28, wherein
the pyrophosphate and the phosphate each independently have a crystallinity of 10% to 100%, optionally 50% to 100%.

30. The positive electrode active material according to any one of claims 24-29, wherein
the coating amount of the second coating layer is greater than 0 wt% and less than or equal to 6 wt%, optionally 3-5 wt%, based on the weight of the inner core.

31. The positive electrode active material according to claim 23, wherein the positive electrode active material comprises a first coating layer coating the inner core, a second coating layer coating the first coating layer, and a third coating layer coating the second coating layer, wherein
the first coating layer comprises a crystalline pyrophosphate of LiₐQP₂O₇ and/or Q_{b}(P₂O₇)_{c}, where 0 ≤ a ≤ 2, 1 ≤ b ≤ 4, 1 ≤ c ≤ 6, the values of a, b, and c satisfy the condition of keeping the crystalline pyrophosphate of LiₐQP₂O₇ or Q_{b}(P₂O₇) electrically neutral, and Q in the crystalline pyrophosphates of LiₐQP₂O₇ and Q_{b}(P₂O₇)_{c} is each independently selected from one or more elements of Fe, Ni, Mg, Co, Cu, Zn, Ti, Ag, Zr, Nb, or Al;
the second coating layer comprises crystalline phosphate XPO₄ in which X is one or more elements selected from Li, Fe, Ni, Mg, Co, Cu, Zn, Ti, Ag, Zr, Nb, or Al; and
the third coating layer is carbon.

32. The positive electrode active material according to claim 31, wherein the crystalline pyrophosphate in the first coating layer has an interplanar spacing in a range of 0.293-0.470 nm, and an included angle of crystal orientation (111) in a range of 18.00° - 32.00°; and the crystalline phosphate in the second coating layer has an interplanar spacing in a range of 0.244-0.425 nm and an included angle of crystal orientation (111) in a range of 20.00° - 37.00°.

33. The positive electrode active material according to claim 31 or 32, wherein the coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or
the coating amount of the second coating layer is greater than 0 and less than or equal to 6 wt%, optionally greater than 0 and less than or equal to 5.5 wt%, more optionally 2-4 wt%, based on the weight of the inner core; and/or
the coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

34. The positive electrode active material according to any one of claims 31-33, wherein the first coating layer has a thickness of 1-10 nm; and/or
the second coating layer has a thickness of 2-15 nm; and/or
the third coating layer has a thickness of 2-25 nm.

35. The positive electrode active material according to any one of claims 31-34, wherein
based on the weight of the positive electrode active material, the content of manganese element is in a range of 10 wt% - 35 wt%, optionally in a range of 15 wt% - 30 wt%, more optionally in a range of 17 wt% - 20 wt%, the content of phosphorus element is in a range of 12 wt % - 25 wt %, optionally in a range of 15 wt % - 20 wt %, and the weight ratio of manganese element to phosphorus element is in a range of 0.90-1.25, optionally 0.95-1.20.

36. A method for preparing a positive electrode active material, comprising forming a compound of LiMPO₄, wherein M includes Mn and a non-Mn element, and the non-Mn element satisfies at least one of the following conditions:
the ionic radius of the non-Mn element being denoted as a, and the ionic radius of manganese element being denoted as b, |a-b|/b is not greater than 10%;
the valence alternation voltage of the non-Mn element being denoted as U, 2 V < U < 5.5 V;
the chemical activity of a chemical bond formed by the non-Mn element and O is not less than that of a P-O bond; and
the highest valence of the non-Mn element is not greater than 6.

37. The method according to claim 36, wherein the non-Mn element includes one or two of a first doping element and a second doping element, the first doping element is doped at the manganese site, and the second doping element is doped at the phosphorus site,
the first doping element satisfies at least one of the following conditions: the ionic radius of the doping M element being denoted as a, and the ionic radius of manganese element being denoted as b, |a-b|/b is not greater than 10%; and the valence conversion voltage of the valence of the doping M element being denoted as U, 2 V < U < 5.5 V; and
the second doping element satisfies at least one of the following conditions: the chemical activity of a chemical bond formed by the non-Mn element and O is not less than that of a P-O bond; and the highest valence of the doping M element is not greater than 6.

38. The method according to claim 37, wherein when the non-Mn element includes a first doping element and a second doping element, the method comprises:
mixing a manganese source, a dopant of the manganese-site element and an acid to obtain manganese salt particles having the first doping element; and
mixing the manganese salt particles having the first doping element with a lithium source, a phosphorus source, and a dopant of the second doping element in a solvent to obtain a slurry, and sintering same under the protection of an inert gas atmosphere to obtain the LiMPO₄ compound.

39. The method according to claim 37 or 38, wherein the first doping element includes one or more elements selected from Zn, Al, Na, K, Mg, Mo, W, Ti, V, Zr, Fe, Ni, Co, Ga, Sn, Sb, Nb and Ge, and the second doping element includes one or more elements selected from B (boron), S, Si and N.

40. The method according to any one of claims 36-39, wherein the method comprises:
forming the compound of LiMPO₄ according to a chemical formula of Li₁₊ₓMn_{1-y}A_{y}P_{1-z}R_{z}O₄, where x is any numerical value in a range of -0.100-0.100, y is any numerical value in a range of 0.001-0.500, z is any numerical value in a range of 0.001-0.100, A includes one or more elements selected from Zn, Al, Na, K, Mg, Mo, W, Ti, V, Zr, Fe, Ni, Co, Ga, Sn, Sb, Nb and Ge, and
R includes one or more elements selected from B (boron), S, Si and N.

41. The method according to any one of claims 36-39, wherein the method comprises:
forming the compound of LiMPO₄ according to a chemical formula of Li₁₊ₓCₘMn_{1-y}A_{y}P_{1-z}R_{z}O₄₋ₙDₙ, where C includes one or more elements selected from Zn, Al, Na, K, Mg, Nb, Mo and W,
A includes one or more elements selected from Zn, Al, Na, K, Mg, Mo, W, Ti, V, Zr, Fe, Ni, Mg, Co, Ga, Sn, Sb, Nb and Ge;
R includes one or more elements selected from B (boron), S, Si and N,
D includes one or more elements selected from S, F, Cl and Br,
x is any numerical value in a range of -0.100-0.100, y is any numerical value in a range of 0.001-0.500, z is any numerical value in a range of 0.001-0.100, n is any numerical value in a range of 0.001 to 0.1, and m is any numerical value in a range of 0.9 to 1.1.

42. The method according to claim 40 or 41, wherein a source of the C element is selected from at least one of the elementary substance, oxide, phosphate, oxalate, carbonate and sulfate of the C element; a source of the A element is selected from at least one of the elementary substance, oxide, phosphate, oxalate, carbonate, sulfate, chloride, nitrate, organic acid salt, hydroxide and halide of the A element; a source of the R element is selected from at least one of the sulfate, borate, nitrate and silicate, organic acid, halide, organic acid salt, oxide and hydroxide of the R element; and a source of the D element is selected from at least one of the elementary substance and ammonium salt of the D element.

43. The method according to claim 38, wherein the manganese salt particles having the first doping element is obtained when at least one of the following conditions is satisfied:
the manganese source, the manganese-site element and the acid are mixed at a temperature of 20-120°C, optionally 40-120°C, optionally 60-120°C, more optionally 25-80°C; and/or
the mixing is carried out under stirring at 200-800 rpm, optionally 400-700 rpm, more optionally 500-700 rpm for 1-9 h, optionally 3-7 h, more optionally 2-6 h.

44. The method according to claim 38, wherein the manganese salt particles having the first doping element, and a lithium source, a phosphorus source, and a dopant of the second doping element are mixed in a solvent at a temperature of 20-120°C, optionally 40-120°C, for 1-10 h.

45. The method according to claim 38, wherein the compound of LiMPO₄ is formed according to a chemical formula of Li₁₊xCₓMn_{1-y}A_{y}P_{1-z}R_{z}O₄₋ₙDₙ, and the manganese salt particles having the first doping element, and a lithium source, a phosphorus source, and a dopant of the second doping element are ground and mixed in a solvent for 8-15 h.

46. The method according to claim 41, comprising:
dissolving a manganese source, a source of an element A and an acid in a solvent to form a suspension of an A element-doped manganese salt, and filtering the suspension, followed by drying to obtain the element A-doped manganese salt;
mixing a lithium source, a phosphorus source, a source of the C element, a source of R element, a source of D element, a solvent and the A element -doped manganese salt to obtain a slurry;
subjecting the slurry to a spray-drying granulation to obtain particles; and
sintering the particles to obtain the positive electrode active material.

47. The method according to claim 46, the particles are sintered at a temperature in a range of 600-900°C for 6-14 hours.

48. The method according to any one of claims 36-47, further comprising:
forming a coating layer on at least part of the surface of the compound of LiMPO₄.

49. The method according to claim 48, wherein when the coating layer contains carbon, the method comprises:
grinding and mixing manganese salt particles containing an optional manganese-site doping element, a lithium source, a phosphorus source, a dopant of an optional phosphorus-site doping element and a carbon source in a solvent,
wherein the mixed mixture contains at least one of the manganese-site doping element and the phosphorus-site doping element.

50. The method according to claim 48, wherein when the coating layers include a first coating layer coating the compound of LiMPO₄ and a second coating layer coating the first coating layer, wherein the first coating layer contains a pyrophosphate of QP₂O₇ and a phosphate of XPO₄, where Q and X are each independently selected from one or more of Li, Fe, Ni, Mg, Co, Cu, Zn, Ti, Ag, Zr, Nb or Al, and the second coating layer comprises carbon, the method comprises:
providing a QP₂O₇ powder and an XPO₄ suspension containing a carbon source, adding the lithium manganese phosphate oxide and the QP₂O₇ powder into the XPO₄ suspension containing a carbon source, and mixing and sintering same to obtain a positive electrode active material.

51. The method according to claim 50, wherein the QP₂O₇ powder is provided by:
adding a source of a Q element and a phosphorus source into a solvent to obtain a mixture, adjusting the pH of the mixture to be 4-6, and stirring same for complete reaction, followed by drying and sintering; and the QP₂O₇ powder is provided when at least one of the following conditions is satisfied:
the drying is carried out at 100-300°C, optionally 150-200°C, for 4-8 h; and
the sintering is carried out at 500-800°C, optionally 650-800°C, in an inert gas atmosphere for 4-10 h.

52. The method according to claim 50, wherein for forming the coating layer, the sintering temperature is 500-800°C, and the sintering time is 4-10 h.

53. The method according to claim 48, wherein the coating layers include a first coating layer coating the compound of LiMPO₄, a second coating layer coating the first coating layer, and a third coating layer coating the second coating layer, wherein
the first coating layer comprises a crystalline pyrophosphate of LiₐQP₂O₇ and/or Q_{b}(P₂O₇)_{c}, where 0 ≤ a ≤ 2, 1 ≤ b ≤ 4, 1 ≤ c ≤ 6, the values of a, b, and c satisfy the condition of keeping the crystalline pyrophosphate of LiₐQP₂O₇ or Q_{b}(P₂0₇) electrically neutral, and Q in the crystalline pyrophosphates of LiₐQP₂O₇ and Q_{b}(P₂O₇)_{c} is each independently selected from one or more elements of Fe, Ni, Mg, Co, Cu, Zn, Ti, Ag, Zr, Nb, or Al;
the second coating layer comprises crystalline phosphate XPO₄ in which X is one or more elements selected from Li, Fe, Ni, Mg, Co, Cu, Zn, Ti, Ag, Zr, Nb, or Al; and
the third coating layer is carbon.

54. The method according to claim 53, wherein the coating layer is formed by: providing LiₐQP₂O₇ and/or Q_{b}(P₂O₇)_{c} and an XPO₄ suspension respectively, adding the lithium manganese phosphate oxide into the suspension, and mixing and sintering same to obtain a positive electrode active material.

55. The method according to claim 54, wherein the coating layer is formed by:
dissolving a source of a Q element, a phosphorus source and an acid, and optionally a lithium source in a solvent to obtain a first coating layer suspension; mixing the described compound of LiMPO₄ with the first coating layer suspension, and sintering same to obtain a first coating layer-coated material;
dissolving a source of an X element, a phosphorus source and an acid in a solvent to obtain a second coating layer suspension; mixing the first coating layer-coated material with the second coating layer suspension, and sintering same to obtain a material coated with two coating layers;
dissolving a carbon source in a solvent to obtain a third coating layer solution; and adding the material coated with two coating layers into the third coating layer solution, and mixing, drying and sintering same to obtain the positive electrode active material.

56. The method according to claim 55, wherein when the first coating layer-coated material is formed, the pH of the solution in which a source of element Q, a phosphorus source, an acid, and optionally a lithium source are dissolved is controlled to be 3.5-6.5, and the solution is stirred for reaction for 1-5 h, and then heated to 50-120°C and held for 2-10 h, and/or,
the sintering is carried out at 650-800°C for 2-6 hours.

57. The method according to claim 55, wherein when the material coated with two coating layers is formed, a source of an X element, a phosphorus source and an acid are dissolved in a solvent, then the solution is stirred for reaction for 1-10 h, and the solution is heated to 60-150°C and held for 2-10 h, and/or,
the sintering is carried out at 500-700°C for 6-10 hours.

58. The method according to claim 55, wherein the sintering in the step of forming the third coating is carried out at 700-800°C for 6-10 hours.

59. A positive electrode active material having a chemical formula of LiₐAₓMn_{1-y}B_{y}P_{1-z}C_{z}O₄₋ₙDₙ,
wherein A includes one or more elements selected from Zn, Al, Na, K, Mg, Nb, Mo and W,
B includes one or more elements selected from Ti, V, Zr, Fe, Ni, Mg, Co, Ga, Sn, Sb, Nb and Ge,
C includes one or more elements selected from B (boron), S, Si and N,
D includes one or more elements selected from S, F, Cl and Br,
a is selected from a range of 0.9 to 1.1, x is selected from a range of 0.001 to 0.1, y is selected from a range of 0.001 to 0.5, z is selected from a range of 0.001 to 0.1, and n is selected from a range of 0.001 to 0.1; and the positive electrode active material is electrically neutral.

60. A positive electrode active material with a core-shell structure, comprising an inner core and a shell coating the inner core, wherein
the inner core has a chemical formula of Li₁₊ₓMn_{1-y}A_{y}P_{1-z}R_{z}O₄, where x is any numerical value in a range of -0.100-0.100, y is any numerical value in a range of 0.001-0.500, z is any numerical value in a range of 0.001-0.100, A is selected from one or more elements of Zn, Al, Na, K, Mg, Mo, W, Ti, V, Zr, Fe, Ni, Co, Ga, Sn, Sb, Nb, and Ge, optionally one or more elements of Fe, Ti, V, Ni, Co, and Mg, and R is selected from one or more elements of B, Si, N, and S, and optionally, R is selected from an element of B, Si, N, and S;
the values of x, y, and z satisfy the condition of keeping the entire inner core electrically neutral; and
the shell comprises a first coating layer coating the inner core, a second coating layer coating the first coating layer, and a third coating layer coating the second coating layer, wherein
the first coating layer comprises a crystalline pyrophosphate of LiₐMPₓO₇ and/or M_{b}(P₂O₇)_{c}, where 0 ≤ a ≤ 2, 1 ≤ b ≤ 4, 1 ≤ c ≤ 6, the values of a, b, and c satisfy the condition of keeping the crystalline pyrophosphate of LiₐMP₂O₇ and/or M_{b}(P₂O₇)_{c} electrically neutral,
M in the crystalline pyrophosphates of LiₐMP₂O₇ and M_{b}(P₂O₇)_{c} is each independently selected from one or more elements of Fe, Ni, Mg, Co, Cu, Zn, Ti, Ag, Zr, Nb, or Al;
the second coating layer comprises crystalline phosphate XPO₄ in which X is one or more elements selected from Li, Fe, Ni, Mg, Co, Cu, Zn, Ti, Ag, Zr, Nb, or Al; and
the third coating layer is carbon.

61. A positive electrode active material with a core-shell structure, comprising an inner core and a shell coating the inner core, wherein
the inner core comprises Li₁₊ₓMn_{1-y}A_{y}P_{1-z}R_{z}O₄, where x = -0.100-0.100, y = 0.001-0.500, z = 0.001-0.100, A is selected from one or more ofZn, Al, Na, K, Mg, Mo, W, Ti, V, Zr, Fe, Ni, Co, Ga, Sn, Sb, Nb and Ge, optionally one or more of Fe, Ti, V, Ni, Co and Mg, and R is selected from one or more of B, Si, N and S; and
the shell comprises a first coating layer coating the inner core and a second coating layer coating the first coating layer,
wherein the first coating layer comprises a pyrophosphate of MP₂O₇ and a phosphate of XPO₄, where M and X are each independently selected from one or more of Li, Fe, Ni, Mg, Co, Cu, Zn, Ti, Ag, Zr, Nb or Al; and
the second coating layer comprises carbon.

62. A positive electrode plate, comprising a positive electrode current collector and a positive electrode film layer provided on at least one surface of the positive electrode current collector, wherein the positive electrode film layer comprises a positive electrode active material according to any one of claims 1-35 and 59-61, or a positive electrode active material prepared by a method according to any one of claims 36-58.

63. The positive active plate according to claim 62, wherein the content of the positive electrode active material in the positive electrode film layer is 10 wt% or more, optionally 95-99.5 wt%, based on the total weight of the positive electrode film layer.

64. A secondary battery, comprising a positive electrode active material according to any one of claims 1-35 and 59-61, or a positive electrode active material prepared by a method according to any one of claims 36-58, or a positive electrode plate according to claim 62 or 63.

65. A battery module, comprising a secondary battery according to claim 64.

66. A battery pack, comprising a battery module according to claim 65 or a secondary battery according to claim 64.

67. A power consuming device, comprising at least one of a secondary battery according to claim 64, a battery module according to claim 65 and a battery pack according to claim 66.
